# EUROPÄISCHE PATENTANMELDUNG

(11) **EP 4 729 313 A2**
(43) Veröffentlichungstag der Anmeldung: **22.04.2026**
(21) Anmeldenummer: 26157891.8
(22) Anmeldetag: 30.11.2020
(51) Int. Cl.: B60D 1/54

(54) **ANHÄNGEKUPPLUNG MIT EINER EINSTELLEINRICHTUNG**

(30) Priorität: 29.11.2019 DE 102019132566; 02.12.2019 DE 102019132725
(62) Teilanmeldung aus: 20817263.5
(71) Anmelder: WESTFALIA - Automotive GmbH, 33378 Rheda-Wiedenbrück (DE)
(72) Erfinder: Becker, Wilfried, 33397 Rietberg (DE); Peitz, Jürgen, 33449 Langenberg (DE)
(74) Vertreter: Patentanwälte Bregenzer und Reule Partnerschaftsgesellschaft mbB

(57) **Zusammenfassung**

Die Erfindung betrifft eine Anhängekupplung für ein Kraftfahrzeug (200), mit einem Kupplungsarm (11) zum Ankuppeln eines Anhängers (300) oder eines Hecklastenträgers, mit einer an dem Kraftfahrzeug (200) befestigbaren oder befestigten Fahrzeughalterung (20), die eine Lagerbasis (23) aufweist, an der ein Kupplungsarmträger (30), an dem der Kupplungsarm (11) angeordnet ist, um mindestens eine Schwenkachse (S) zwischen einer zum Anhängen des Anhängers (300) oder des Hecklastenträgers vorgesehenen Gebrauchsstellung (G) und einer für einen Nichtgebrauch der Anhängekupplung (10) vorgesehenen Nichtgebrauchsstellung (N) schwenkbar gelagert ist, in der der Kupplungsarm (11) vorteilhaft im am Kraftfahrzeug (200) montierten Zustand weniger weit als in der Gebrauchsstellung (G) vor das Kraftfahrzeug (200) vorsteht, wobei die Anhängekupplung (10) eine Fixiereinrichtung (60) zum ortsfesten Fixieren des Kupplungsarms (11) in der Gebrauchsstellung (G) und/oder der Nichtgebrauchsstellung (N) bezüglich der Lagerbasis (23) aufweist, wobei der Kupplungsarm (11) in einer Lösestellung (L) der Fixiereinrichtung (60) bezüglich der Lagerbasis (23) zwischen der Gebrauchsstellung (G) und der Nichtgebrauchsstellung (N) beweglich und einer Fixierstellung (F) der Fixiereinrichtung (60) bezüglich der Lagerbasis (23) ortsfest fixiert ist, wobei die Fixiereinrichtung (60) mindestens eine an der Lagerbasis (23) fest angeordnete Fixierfläche (311, 312) und mindestens eine fest an dem Kupplungsarmträger (30) (30) angeordnete Fixierfläche (311, 312) aufweist, wobei die Fixierflächen (311, 312) in der Fixierstellung (F) der Fixiereinrichtung (60) zur drehfesten Fixierung des Kupplungsarmträgers (30) bezüglich der Lagerbasis (23) mittelbar oder unmittelbar aneinander abgestützt sind. Die Anhängekupplung weist mindestens eine Einstelleinrichtung (310, 320) zur Einstellung einer Längsposition (L1, L2) und/oder einer Radialposition (R1, R2) mindestens einer der Fixierflächen (311, 312) an dem Kupplungsarmträger (30) oder der Lagerbasis (23) bezüglich der Schwenkachse (S) auf.

## Beschreibung

Die Erfindung betrifft eine Anhängekupplung für ein Kraftfahrzeug, mit einem Kupplungsarm zum Ankuppeln eines Anhängers oder eines Hecklastenträgers, mit einer an dem Kraftfahrzeug befestigbaren oder befestigten Fahrzeughalterung, die eine Lagerbasis aufweist, an der ein Kupplungsarmträger, an dem der Kupplungsarm angeordnet ist, um mindestens eine Schwenkachse zwischen einer zum Anhängen des Anhängers oder des Hecklastenträgers vorgesehenen Gebrauchsstellung und einer für einen Nichtgebrauch der Anhängekupplung vorgesehenen Nichtgebrauchsstellung schwenkbar gelagert ist, in der der Kupplungsarm vorteilhaft im am Kraftfahrzeug montierten Zustand weniger weit als in der Gebrauchsstellung vor das Kraftfahrzeug vorsteht, wobei die Anhängekupplung eine Fixiereinrichtung zum ortsfesten Fixieren des Kupplungsarms in der Gebrauchsstellung und/oder der Nichtgebrauchsstellung bezüglich der Lagerbasis aufweist, wobei der Kupplungsarm in einer Lösestellung der Fixiereinrichtung bezüglich der Lagerbasis zwischen der Gebrauchsstellung und der Nichtgebrauchsstellung beweglich und einer Fixierstellung der Fixiereinrichtung bezüglich der Lagerbasis ortsfest fixiert ist, wobei die Fixiereinrichtung mindestens eine an der Lagerbasis fest angeordnete Fixierfläche und mindestens eine fest an dem Kupplungsarmträger angeordnete Fixierfläche aufweist, wobei die Fixierflächen in der Fixierstellung der Fixiereinrichtung zur drehfesten Fixierung des Kupplungsarmträgers bezüglich der Lagerbasis mittelbar oder unmittelbar aneinander abgestützt sind.

Eine derartige Anhängekupplung ist beispielsweise in EP 1 504 928 B1 erläutert.

Es kann Situationen geben, bei denen sich eine zuverlässige, formschlüssige Fixierung der Anhängekupplung in der Fixierstellung als schwierig herausstellt, beispielsweise aufgrund von Fertigungstoleranzen, aufgrund Verschleißes oder dergleichen.

Es ist daher die Aufgabe der vorliegenden Erfindung, eine verbesserte Anhängekupplung bereitzustellen.

Zur Lösung der Aufgabe ist bei einer Anhängekupplung der eingangs genannten Art vorgesehen, dass sie mindestens eine Einstelleinrichtung zur Einstellung einer Längsposition und/oder einer Radialposition mindestens einer der Fixierflächen an dem Kupplungsarmträger oder der Lagerbasis bezüglich der Schwenkachse aufweist.

Die Fixierflächen liegen in der Fixierstellung mittelbar aneinander an oder unmittelbar aneinander an. Anhand der Abstützung der Fixierflächen ist der Kupplungsarmträger vorzugsweise bezüglich an der Lagerbasis, z.B. bezüglich der Schwenkachse schwenkfest oder drehfest, in der Fixierstellung fixiert. Jedenfalls ist eine Relativposition der Fixierflächen in der Fixierstellung wesentlich dafür, dass der Kupplungsarmträger relativ zur Lagerbasis ortsfest fixiert und fixierbar ist. Die eine Einstelleinrichtung oder die mehreren Einstelleinrichtungen ermöglichen es, die Relativposition mindestens einer Fixierfläche an dem Kupplungsarmträger oder der Lagerbasis, also an den jeweiligen Körper, an dem die Fixierfläche angeordnet ist, bezüglich der Schwenkachse einzustellen. Somit ist eine zuverlässige Fixierung mit genauen Maßen möglich. Die Einstelleinrichtung ist für eine Einstellung und/oder Justierung der Fixierfläche bezüglich des Kupplungsarmträgers oder der Lagerbasis, an dem die jeweilige Fixierfläche angeordnet ist, ausgestaltet, beispielsweise zur Einstellung oder Justierung von deren Radialabstand zur Schwenkachse und/oder deren Neigung bezüglich der Schwenkachse und/oder deren Längsposition parallel zur Längsachse.

Anhand der Einstelleinrichtung ist eine Position der Fixierfläche an derjenigen Komponente, an dem die Fixierfläche angeordnet ist, also am Kupplungsarmträger oder an der Lagerbasis, einstellbar. Anschließend ist die solchermaßen eingestellte Fixierfläche jedoch ortsfest. Eine anhand der Einstelleinrichtung einstellbare Fixierfläche wird also durch die Fixiereinrichtung, beispielsweise durch einen Formschlusskörper, Fixierbetätigungskörper oder dergleichen, hinsichtlich ihrer Position bezüglich des Kupplungsarmträgers, wenn die Fixierfläche an dem Kupplungsarmträger angeordnet ist, oder bezüglich der Lagerbasis, wenn die Fixierfläche an der Lagerbasis angeordnet ist, nicht verstellt oder verändert.

Vorteilhaft ist es, wenn mehrere Paarungen von Fixierflächen vorhanden sind, beispielsweise mindestens zwei Paarungen von Fixierflächen, wobei diese Paarungen bezüglich der Schwenkachse einen Winkelabstand aufweisen, insbesondere gleiche Winkelabstände zueinander aufweisen. Von einer jeweiligen Paarung von Fixierflächen kann die Position einer oder beider Fixierflächen bezüglich der Schwenkachse anhand einer Einstelleinrichtung einstellbar sein.

Es ist möglich, dass mehrere Fixierflächen anhand einer einzigen Einstelleinrichtung verstellbar sind, beispielsweise wenn diese Fixierflächen an einem gemeinsamen Fixierstützkörper angeordnet sind, was nachfolgend noch deutlicher wird. Diesen mindestens zwei Fixierflächen des Fixierstützkörpers sind dann eine oder mehrere Fixierflächen zugeordnet, anhand derer der Kupplungsarmträger bezüglich der Lagerbasis in der Fixierstellung der Fixiereinrichtung abgestützt ist. Jede dieser anderen Fixierflächen kann ortsfest und unverstellbar bezüglich des Kupplungsarmträgers oder der Lagerbasis sein, aber auch anhand einer erfindungsgemäßen Einstelleinrichtung bezüglich seiner Lage zur Schwenkachse einstellbar sein.

An dieser Stelle sei erwähnt, dass der Kupplungsarmträger bezüglich der Lagerbasis ausschließlich um eine einzige Schwenkachse schwenkbar sein kann, aber auch um mehrere Schwenkachsen und/oder dass der Kupplungsarmträger bezüglich der Lagerbasis entlang mindestens einen linearen Bewegungsfreiheitsgrades verschieblich sein kann, insbesondere parallel zur Schwenkachse oder entlang der Schwenkachse.

Ein bevorzugtes Konzept sieht vor, dass die einstellbare Fixierfläche an einem Fixierstützkörper angeordnet ist, dessen Längsposition parallel zur Schwenkachse und/oder dessen Radialposition radial bezüglich der Schwenkachse an dem Kupplungsarmträger oder der Lagerbasis anhand der mindestens einen Einstelleinrichtung einstellbar ist. Es versteht sich, dass der Fixierstützkörper selbst wiederum vorteilhaft an einem Stützkörper oder Einstellkörper angeordnet ist, dessen Relativposition bezüglich der Schwenkachse an dem Kupplungsarmträger oder der Lagerbasis einstellbar ist, sodass beispielsweise der Fixierstützkörper in zwei voneinander verschiedenen Dimensionen, beispielsweise radial zur Schwenkachse und parallel zur Schwenkachse, verstellbar ist, um die Relativposition der Fixierfläche des Fixierkörpers bezüglich der Schwenkachse einzustellen. So kann beispielsweise der Einstellkörper in einer ersten Richtung bezüglich der Schwenkachse verstellbar sein und der an dem Einstellkörper angeordnete Fixierstützkörper in einer zu der ersten Richtung winkeligen und/oder bogenförmigen zweiten Richtung bezüglich der Schwenkachse verstellbar oder einstellbar sein.

Ein bevorzugtes Konzept sieht vor, dass die mindestens eine Einstelleinrichtung ein Schraubgewinde umfasst. Beispielsweise können Schraubgewinde an dem Fixierstützkörper, der die Fixierfläche trägt, und/oder an dem Kupplungsarmträger oder der Lagerbasis angeordnet sein, an dem bzw. an der der Fixierstützkörper gehalten ist. So kann beispielsweise der Fixierstützkörper ein Außengewinde haben, welches in ein Innengewinde einer Aufnahme eingreift, in der der Fixierstützkörper aufgenommen ist. Beispielsweise können eine Längsposition und/oder eine Radialposition des Fixierstützkörpers bezüglich der Schwenkachse anhand einer Längsverstellung des Fixierstützkörpers in der Aufnahme einstellbar sein. Eine Stellachse, entlang derer der Fixierstützkörper in der Aufnahme verstellbar ist, kann beispielsweise parallel zur Schwenkachse oder winkelig zur Schwenkachse, beispielsweise rechtwinkelig oder radial zur Schwenkachse oder schrägwinkelig zur Schwenkachse, verlaufen.

Bevorzugt ist es, wenn die Einstelleinrichtung ein Sicherungsmittel zur Sicherung der eingestellten Relativposition der Fixierfläche bezüglich der Schwenkachse an dem Kupplungsarmträger oder der Lagerbasis umfasst. Somit kann die jeweils Fixierfläche anhand der Einstelleinrichtung zunächst örtlich positioniert und anschließend anhand des Sicherungsmittels örtlich bezüglich des Kupplungsarmträgers oder der Lagerbasis fixiert werden. Die einmal eingestellte Relativposition der Fixierfläche bezüglich der Schwenkachse an dem Kupplungsarmträger oder der Lagerbasis bleibt durch die Sicherungsmittel dauerhaft fixiert oder gesichert.

Als Sicherungsmittel können mehrere der nachfolgenden Maßnahmen vorgesehen sein, wobei auch Kombinationen dieser Maßnahmen ohne weiteres möglich sind.

Ein Sicherungsmittel kann beispielsweise dadurch gebildet sein, dass der die einstellbare Fixierfläche aufweisende Fixierstützkörper im Presssitz und/oder Klemmsitz in einer Aufnahme am Kupplungsarmträger oder an der Lagerbasis aufgenommen ist. Durch ein Einpresswerkzeug kann beispielsweise eine Einpresstiefe des Fixierstützkörpers bezüglich der Aufnahme einstellbar sein.

Bevorzugt ist vorgesehen, dass das Sicherungsmittel eine stoffschlüssige Fixierung der Fixierfläche, insbesondere eine Verschweißung und/oder eine Verklebung, umfasst. Weiterhin kann eine Verlötung, insbesondere eine Hart-Verlötung vorgesehen sein. Beispielsweise kann ein Schraubgewinde der Einstelleinrichtung anhand einer Verschweißung und/oder Verklebung und/oder Verlötung dauerhaft ortsfest fixiert sein. Es ist aber auch möglich, beispielsweise den die Fixierfläche aufweisenden Fixierkörper an einer Aufnahme des Kupplungsarmträgers oder der Lagerbasis stoffschlüssig festzulegen, beispielsweise zu verschweißen und/oder zu verkleben und/oder zu verlöten.

Weiterhin kann vorteilhaft vorgesehen sein, dass das Sicherungsmittel eine Umformung, insbesondere eine Prägung, einer Partie der Einstelleinrichtung, insbesondere eines die Fixierfläche tragenden Körpers, und einer Partie des Kupplungsarmträgers oder der Lagerbasis umfasst, an der die Fixierfläche angeordnet ist. So kann beispielsweise der die Fixierfläche aufweisende Fixierkörper anhand einer Präge-Bearbeitung oder dergleichen mit dem den Fixierkörper tragenden Körper, also dem Kupplungsarmträger oder der Lagerbasis, verprägt sein.

Weiterhin vorteilhaft ist es, wenn das Sicherungsmittel einen formschlüssiges Sicherungselement, insbesondere eine Schraube oder einen Bolzen, umfasst, wobei das Sicherungselement eine Verstellung der Einstelleinrichtung in einer Sicherungsstellung des Sicherungselements formschlüssig blockiert. Beispielsweise kann ein Bolzen oder eine Schraube quer in eine Verschraubung eingreifen, mit der der Fixierkörper an dem Kupplungsarmträger oder der Lagerbasis verschraubt ist. Es ist auch möglich, dass das Sicherungselement aus der Sicherungsstellung in eine Freigabestellung verstellbar ist, in der die Einstelleinrichtung betätigbar ist, um die Position der mit der Einstelleinrichtung einstellbaren Fixierfläche zu verstellen.

**In** Bezug auf die Fixierflächen sind vielfältige Möglichkeiten gegeben. So kann beispielsweise eine Fixierfläche eine Schrägfläche und/oder eine Muldenfläche und/oder eine Kugelkalotte sein oder umfassen. Es ist auch möglich, dass die Fixierfläche beispielsweise an einem Kanal, einer Führungsbohrung oder dergleichen angeordnet ist.

Es ist möglich, dass die Fixierflächen winkelig oder schräg zueinander und/oder zu der Schwenkachse orientiert sind. Dabei kann beispielsweise eine Fixierfläche rechtwinkelig zur Schwenkachse sein, während die mit dieser Fixierfläche zusammenwirkende andere Fixierfläche schräg zur Schwenkachse orientiert ist.

Vorteilhaft ist es, wenn mindestens eine Fixierfläche eine Spannfläche bildet. Beispielsweise ist es auch möglich, dass die Fixiereinrichtung zu einem Verspannen des Kupplungsarm Lagerkörpers bezüglich der Lagerbasis ausgestaltet und/vorgesehen ist.

Die Fixierflächen, von denen mindestens eine durch eine Einstelleinrichtung einstellbar ist, können in der Fixierstellung unmittelbar aneinander abgestützt sein.

Es ist aber auch möglich, dass die Fixierflächen anhand eines Formschlusskörpers formschlüssig aneinander abgestützt sind. Eine vorteilhafte Ausführungsform sieht beispielsweise vor, dass die Fixiereinrichtung mindestens einen Formschlusskörper umfasst, wobei der mindestens eine Formschlusskörper in der Fixierstellung der Fixiereinrichtung in Eingriff mit den Fixierflächen ist und an dem die Fixierflächen abgestützt sind. Vorteilhaft ist es, wenn der mindestens eine Formschlusskörper in der Lösestellung der Fixiereinrichtung derart von mindestens einer der Fixierflächen entfernt ist, dass die Fixiereinrichtung von der Fixierstellung in die Lösestellung bewegbar ist. Beispielsweise ist der Formschlusskörper in die nachfolgend im Detail erläuterte Formschlusskörper-Führung, die eine Fixierfläche bereitstellt zurückverstellt, sodass er nicht in Eingriff mit der anderen Fixierfläche ist, die der Führung gegenüberliegt.

Vorteilhaft ist vorgesehen, dass mindestens eine Fixierfläche an einer Formschlusskörper-Führung, insbesondere einem Kanal, für den mindestens einen Formschlusskörper angeordnet ist, an welcher der mindestens eine Formschlusskörper zwischen einer der Fixierstellung der Fixiereinrichtung zugeordneten Stellung und einer der Lösestellung zugeordneten Stellung geführt ist. Die Formschlusskörper-Führung oder der Kanal ist beispielsweise an einem Führungskörper, insbesondere einem nachfolgend noch detailliert erläuterten Stützkörper für den Kupplungsarmträger angeordnet. Wenn der Formschlusskörper teilweise aus der Formschlusskörper-Führung heraus verstellt ist und in Eingriff mit der gegenüberliegenden Fixierfläche ist, stützt er sich einerseits an der Formschlusskörper-Führung und deren Fixierfläche und andererseits an der der Formschlusskörper-Führung gegenüberliegenden Fixierfläche ab. Die letztgenannte Fixierfläche ist beispielsweise am Kupplungsarmträger vorgesehen.

Der Führungskörper ist vorzugsweise als Ganzes anhand der Einstelleinrichtung an der Lagerbasis in mindestens zwei Positionen bezüglich der Schwenkachse ortsfest festlegbar, insbesondere linear unverschieblich festlegbar. Somit ist eine Längsposition der mindestens einen Führungsfläche, die am Führungskörper angeordnet ist, anhand der Einstelleinrichtung bezüglich der Lagerbasis einstellbar.

Der Führungskörper und/oder der den Kupplungsarmträger um die Schwenkachse schwenkbar lagernde Stützkörper ist bezüglich der Schwenkachse vorzugsweise unverschieblich oder verschiebefest an dem Lagerkörper gehalten.

Vorteilhaft ist es, wenn der mindestens eine Formschlusskörper eine Kugel und/oder eine Rolle und/oder einen Gleitkörper umfasst oder dadurch gebildet ist. Beispielsweise können Kugeln in Bohrungen oder Kanälen, die insofern Führungskanäle oder Formschlusskörper-Führungen darstellen, geführt sein.

Vorteilhaft ist vorgesehen, dass der mindestens eine Formschlusskörper durch einen Fixierbetätigungskörper betätigbar ist. Der Fixierbetätigungskörper ist beispielsweise als ein Bolzenkörper ausgestaltet.

Eine bevorzugte Variante sieht vor, dass der Fixierbetätigungskörper längsverschieblich und/oder drehbar, in einer Führungsaufnahme eines Führungskörpers aufgenommen ist. Die Führungsaufnahme, beispielweise ein Führungskanal, kommuniziert mit der mindestens einen Formschlusskörper-Führung für den Formschlusskörper, sodass der Formschlusskörper durch den Fixierbetätigungskörper in der Formschlusskörper-Führung verstellbar ist, wenn der Fixierbetätigungskörper verstellt wird, beispielsweise in der Führungsaufnahme verschoben und/oder verdreht wird. Beispielsweise erstreckt sich die Führungsaufnahme oder der Führungskanal in dem Führungskörper, in welchem der Fixierbetätigungskörper längsverschieblich und/oder drehbar, insbesondere längsverschieblich parallel zur Schwenkachse und/oder drehbar um die Schwenkachse, angeordnet ist. Der Führungskörper ist beispielsweise der nachfolgend erläuterte Stützkörper, an dem der Kupplungsarmträger um die Schwenkachse schwenkbar gelagert ist.

Der Führungskörper ist vorzugsweise in mindestens zwei Relativpositionen bezüglich der Schwenkachse, insbesondere mindestens zwei Längspositionen parallel zur Schwenkachse, an der Lagerbasis anhand der mindestens einen Einstelleinrichtung fixierbar.

Vorteilhaft ist es weiterhin, wenn die mindestens eine Fixierfläche eine Dreh- oder Schwenk-Verriegelungsfläche zum Verriegeln des Kupplungsarmträgers bezüglich der Lagerbasis um die Schwenkachse bildet oder aufweist. Die Fixierfläche hat beispielsweise einen Flächenbereich, der eine Richtungskomponente parallel zur Schwenkachse aufweist, sodass dieser Flächenbereich als Widerlager entgegen einer Schwenkbewegung um die Schwenkachse dienen kann. Die Fixierfläche hat beispielsweise eine muldenförmige, kugelkalottenförmige Gestalt. Die kann beispielsweise radial zur Schwenkachse verlaufen oder Flächenbereiche aufweisen, die radial zur Schwenkachse orientiert sind und/oder eine Erstreckungskomponente radial zur Schwenkachse aufweisen. Beispielsweise bildet der Formschlusskörper einen Drehverriegelungskörper und die dem Formschlusskörper zugeordnete Fixierfläche, deren Position bezüglich der Schwenkachse vorzugsweise anhand der Einstelleinrichtung einstellbar ist, eine Drehverriegelungsfläche oder weist eine Drehverriegelungsfläche auf, beispielsweise eine Kugelkalotte oder dergleichen.

Vorteilhaft ist es weiterhin, wenn mindestens eine der Fixierflächen an einem an der Lagerbasis angeordneten, insbesondere als Wellenkörper oder Hohlwelle ausgestalteten, Stützkörper angeordnet ist, der den Kupplungsarmträger bezüglich der Lagerbasis um die Schwenkachse drehbar lagert, wobei der Stützkörper an der Lagerbasis um die Schwenkachse drehbar gelagert ist und/oder an dem der Kupplungsarmträger um die Schwenkachse drehbar gelagert ist. Der Stützkörper greift beispielsweise in eine Lageraufnahme des Kupplungsarmträgers ein. Der Stützkörper kann an der Lagerbasis drehbar gelagert sein. Es ist aber auch möglich, dass der Stützkörper bezüglich der Lagerbasis ortsfest ist und den Kupplungsarmträger bezüglich der Schwenkachse drehbar lagert.

Zwar ist es grundsätzlich möglich, dass der Kupplungsarmträger bezüglich der Lagerbasis ausschließlich um die Schwenkachse schwenkbar, jedoch parallel zur Schwenkachse unverschieblich gehalten ist. Ein bevorzugtes Ausführungsbeispiel sieht vor, dass der Kupplungsarmträger bezüglich der Lagerbasis entlang der mindestens einen Schwenkachse zwischen der Fixierstellung und der Lösestellung verschieblich gelagert ist und an dem Kupplungsarmträger und an der Lagerbasis angeordnete Formschlusselemente in der Fixierstellung in bezüglich der mindestens einen Schwenkachse drehfestem Eingriff und in der Lösestellung außer Eingriff sind. Die Formschlusselemente sind beispielsweise als Formschlussvorsprünge und Formschlussaufnahmen, insbesondere als Kugeln und Kugelkalotten, ausgestaltet.

Beispielsweise kann vorgesehen sein, dass der Kupplungsarmträger einen Lagervorsprung aufweist, der in eine Lageraufnahme der Lagerbasis eingreift. Bevorzugt ist die nachfolgende Ausgestaltung, bei der der Kupplungsarmträger an einem zu einer Armseite vor die Lagerbasis vorstehenden Stützkörper entlang der Schwenkachse verschieblich gelagert ist.

Es ist möglich, dass die am Kupplungsarmträger angeordneten Formschlusselemente bezüglich des Kupplungsarmträgers ortsfest sind. Ferner ist es möglich, dass die an der Lagerbasis angeordneten Formschlusselemente bezüglich der Lagerbasis ortsfest sind. Es ist aber auch möglich, dass mindestens eines der Formschlusselemente eine der Fixierflächen aufweist, deren Relativposition bezüglich der Schwenkachse anhand der mindestens einen Einstelleinrichtung einstellbar ist. Somit ist also auch eine Justierung der Formschlusselemente möglich.

Ein bevorzugtes Ausführungsbeispiel kann vorsehen, dass die Anhängekupplung ein Verstellgetriebe, insbesondere ein Lineargetriebe, zur Verstellung des Kupplungsarmträgers bezüglich der Lagerbasis aufweist, insbesondere parallel zur Schwenkachse oder entlang der Schwenkachse.

Die mindestens eine Fixierfläche kann einen Bestandteil eines Verstellgetriebes oder eines Verstellantriebs bilden, also beispielsweise eine Antriebsfläche oder eine Stützfläche für einen Antriebskörper des Verstellgetriebes oder Stellantriebs darstellen.

Vorteilhaft ist vorgesehen, dass das Verstellgetriebe mindestens eine Fixierfläche aufweist, deren Relativposition bezüglich der Schwenkachse anhand der mindestens einen Einstelleinrichtung einstellbar ist.

Vorteilhaft ist es weiterhin, wenn mindestens eine Fixierfläche als eine Antriebsfläche zum Antreiben des Kupplungsarmträgers in einer Bewegungsrichtung parallel zur Schwenkachse ausgestaltet ist oder eine derartige Antriebsfläche aufweist.

Vorteilhaft ist vorgesehen, dass an dem Stützkörper mindestens eine Fixierfläche ortsfest angeordnet ist. Diese Fixierfläche bildet vorzugsweise einen Bestandteil einer Formschlusskörper-Führung oder Formschlusskörper-Führungskontur, insbesondere eines Kanals, zur Führung eines an der Fixierfläche abgestützten Formschlusskörpers. Der Formschlusskörper ist also einerseits an dem Kanal oder der Formschlusskörper-Führung abgestützt und stützt sich andererseits in der Fixierstellung an einer der Formschlusskörper-Führung gegenüberliegenden Fixierfläche ab.

Um die Position der Fixierfläche des Stützkörpers bezüglich der Schwenkachse zu verstellen, kann der Stützkörper als Ganzes anhand der mindestens einen Einstelleinrichtung bezüglich der Lagerbasis verstellbar sein. So sieht eine vorteilhafte Ausgestaltung der Erfindung vor, dass der Stützkörper an der Lagerbasis anhand der mindestens einen Einstelleinrichtung in mindestens zwei Längspositionen bezüglich der Schwenkachse zur Einstellung der Längsposition mindestens einer Fixierfläche bezüglich der Schwenkachse unverschieblich fixierbar ist. Diese Fixierfläche ist also beispielsweise durch eine Formschlusskörper-Führung, insbesondere einen Kanal, für den beweglich gelagerten Formschlusskörper bereitgestellt.

Eine besonders bevorzugte Ausführungsform der Erfindung sieht vor, dass der Stützkörper an einer Widerlagereinrichtung anhand einer eine Einstelleinrichtung bildenden Befestigungseinrichtung befestigt ist, wobei der Stützkörper an der Widerlagereinrichtung anhand der Befestigungseinrichtung in mindestens zwei Längspositionen bezüglich der Schwenkachse befestigbar ist, wobei die Widerlagereinrichtung eine dem Kupplungsarmträger bezüglich der mindestens einen Schwenkachse gegenüberliegende Widerlagerfläche aufweist und die Lagerbasis in der Fixierstellung zwischen die Widerlagerfläche und den Kupplungsarmträger geklemmt ist, wobei die Widerlagereinrichtung mindestens eine von der Widerlagerfläche verschiedene Lagerfläche aufweist, mit der die Widerlagereinrichtung an der Lagerbasis beweglich gelagert ist, vorteilhaft um die Schwenkachse schwenkbar gelagert ist.

Vorteilhaft ist vorgesehen, dass der Kupplungsarmträger bezüglich der Lagerbasis entlang der mindestens einen Schwenkachse zwischen der Fixierstellung und der Lösestellung verschieblich gelagert ist und an dem Kupplungsarmträger und an der Lagerbasis angeordnete Formschlusselemente in der Fixierstellung in bezüglich der mindestens einen Schwenkachse drehfestem Eingriff und in der Lösestellung außer Eingriff sind, wobei ein Stützkörper zu einer Armseite vor die Lagerbasis vorsteht, an dem der Kupplungsarmträger oder anhand dessen der der Kupplungsarmträger entlang der Schwenkachse verschieblich gelagert ist, wobei der Stützkörper an der Lagerbasis um die mindestens eine Schwenkachse drehbar gelagert ist und mit einem Schwenkantriebselement bewegungsgekoppelt ist, das an einer zu der Armseite entgegengesetzten Antriebseite der Lagerbasis angeordnet ist.

Es ist dabei ein Grundgedanke, dass der Stützkörper an der Lagerbasis um die Schwenkachse drehbar gelagert ist, sodass er zum Schwenk-Antreiben oder Dreh-Antreiben des Kupplungsarmträgers um die mindestens eine Schwenkachse geeignet ist.

Der Stützkörper bildet also beispielsweise ein Antriebselement zum Drehantreiben des Kupplungsarmträgers und/oder des Kupplungsarms um die Schwenkachse.

Der Stützkörper ist vorzugsweise bezüglich der mindestens einen Schwenkachse und/oder parallel zu der mindestens einen Schwenkachse ortsfest an der Lagerbasis gehalten.

Es ist aber auch möglich, dass der Stützkörper an der Lagerbasis entlang der Schwenkachse verschieblich gelagert ist. Der Kupplungsarmträger kann bezüglich der Schwenkachse ortsfest am Stützkörper angeordnet sein, der seinerseits entlang der Schwenkachse an der Lagerbasis gelagert ist.

Vorteilhaft ist vorgesehen, dass zwischen dem Stützkörper und dem Kupplungsarmträger mindestens eine Drehmitnahmeeinrichtung zur Drehmitnahme des Kupplungsarmträgers durch den Stützkörper angeordnet ist.

Es können auch mehrere Drehmitnahmeeinrichtungen vorgesehen sein, beispielsweise in einem Längsabstand bezüglich der Schwenkachse zwischen dem Stützkörper und dem Kupplungsarmträger angeordnete Drehmitnahmeeinrichtungen.

Ein bevorzugtes Ausführungsbeispiel sieht vor, dass an einem von der Lagerbasis entfernten Längsendbereich des Stützkörpers eine Drehmitnahmeeinrichtung angeordnet ist.

Zusätzlich zu dieser Drehmitnahmeeinrichtung oder alternativ dazu kann auch eine Drehmitnahmeeinrichtung zwischen einem Stützabschnitt des Stützkörpers und der Lagerbasis angeordnet sein, wobei der Kupplungsarmträger an dem Stützabschnitt an dem Stützkörper abgestützt ist. An dem Stützabschnitt ist vorzugsweise ein Schiebelager vorgesehen oder der Stützabschnitt bildet vorzugsweise einen Bestandteil eines Schiebelagers. Bevorzugt ist es, wenn der Kupplungsarmträger anhand beispielsweise einer Lageraufnahme an dem Stützabschnitt des Stützkörpers bezüglich der Schwenkachse oder parallel zu der Schwenkachse verschieblich gelagert ist.

Die mindestens eine Drehmitnahmeeinrichtung kann Verdrehsicherungskonturen zwischen dem Stützkörper und dem Kupplungsarmträger umfassen oder dadurch gebildet sein.

Die Verdrehsicherungskonturen können beispielsweise durch eine unrunde, insbesondere polygonale, Umfangskontur oder Außenumfangskontur des Stützkörpers gebildet sein, die in eine unrunde, insbesondere polygonale, Umfangskontur oder Innenumfangskontur des Kupplungsarmträgers eingreift. Es ist aber auch möglich, dass die Innenumfangskontur am Stützkörper und die Außenumfangskontur am Kupplungsarmträger angeordnet sind. Die jeweilige Innenumfangskontur und die jeweilige Außenumfangskontur können grundsätzlich die gleiche Geometrie aufweisen. Beispielsweise können die Umfangskonturen in der Art von Verzahnungen ausgestaltet sein, die ineinander eingreifen, wobei ein Drehspiel bezüglich der Schwenkachse möglich ist oder auch ein drehfester Halt der Umfangskonturen aneinander, was nachfolgend noch deutlicher wird.

Die Verdrehsicherungskonturen, zum Beispiel die vorgenannten Umfangskonturen können bezüglich der Schwenkachse formschlüssig verdrehfest ineinander eingreifen. Die ineinander eingreifenden unrunden und/oder polygonalen Umfangskonturen können aber auch bezüglich der Schwenkachse um ein vorbestimmtes Winkelmaß relativ zueinander verschwenkbar oder drehbar sein.

Es ist aber auch möglich, dass die Verdrehsicherungskonturen um ein vorbestimmtes Winkelmaß um die Schwenkachse relativ zueinander schwenkbar sind. Beispielsweise können unrunde oder polygonale Umfangskonturen unterschiedliche Umfangslängen und/oder Radialabstände zur Schwenkachse aufweisen, sodass die radial innere Umfangskontur relativ zur radial äußeren Umfangskontur um ein vorbestimmtes Winkelmaß verdrehbar ist, bis die radial innere Umfangskontur an der radial äußeren Umfangskontur im Sinne einer Drehmitnahme in Eingriff gelangt.

Die Verdrehsicherungskonturen, zum Beispiel die vorgenannten Umfangskonturen, können parallel zur Schwenkachse relativ zueinander verschiebefest sein. Beispielsweise können die Verdrehsicherungskonturen oder Umfangskonturen radial bezüglich der Schwenkachse orientierte und ineinander eingreifende Formschlusskonturen aufweisen, damit die Verdrehsicherungskonturen parallel zur Schwenkachse verschiebefest aneinander gehalten sind.

Die Verdrehsicherungskonturen von Stützkörper und Kupplungsarmträger sind vorteilhaft bezüglich der mindestens einen Schwenkachse, die zugleich eine Schiebeachse bildet, entlang derer der Kupplungsarmträger am Stützkörper verschieblich gelagert ist, relativ zueinander beweglich.

Vorteilhaft ist es, wenn der erwähnte Drehmitnahmevorsprung mit einem Drehspiel bezüglich der Schwenkachse und/oder längsbeweglich parallel zu der Schwenkachse in die Drehmitnahme-Aufnahme eingreift. Beispielsweise ist die Drehmitnahme-Aufnahme als Langloch ausgestaltet und/oder weist eine Längsgestalt auf und hat eine Längserstreckung parallel zur Schwenkachse. Die Schiebebeweglichkeit parallel zur Schwenkachse ermöglicht beispielsweise eine Verschiebung des Kupplungsarmträgers relativ zum Stützkörper, insbesondere um mindestens ein Formschlusselement, das am Kupplungsarmträger angeordnet ist, durch Verschiebung des Kupplungsarmträgers parallel zur Schwenkachse zur Erzielung einer Schwenkfixierstellung in Eingriff und in einer Schwenkfreigabestellung außer Eingriff mit einem Formschlusselement, welches bezüglich der Lagerbasis ortsfest ist, zu bringen, um den Kupplungsarmträger an der Lagerbasis bezüglich der Schwenkachse in der Schwenkfixierstellung verdrehsicher zu fixieren (die Formschlusselemente greifen ineinander) bzw. dessen Schwenkbarkeit in der Schwenkfreigabestellung zu ermöglichen (die Formschlusselemente sind außer Eingriff). Die vorgenannten Formschlusselemente bilden beispielsweise Bestandteile der Fixiereinrichtung der Anhängekupplung.

Die Drehmitnahmeeinrichtung kann z.B. mindestens einen Drehmitnahmevorsprung am einen Teil von Stützkörper und Kupplungsarmträger umfassen, der in eine Drehmitnahmeausnehmung am anderen Teil von Stützkörper und Kupplungsarmträger eingreift.

Der mindestens eine Drehmitnahmevorsprung ist in der Drehmitnahmeausnehmung bezüglich der mindestens einen Schwenkachse vorzugsweise verschieblich aufgenommen. Der Drehmitnahmevorsprung ist beispielweise durch einen stiftartigen Vorsprung gebildet, der in eine sich parallel zur Schwenkachse der Schiebeachse erstreckenden Längsausnehmung oder Längsnut eingreift.

Bevorzugt ist es, wenn eine jeweilige Drehmitnahmeeinrichtung mindestens eine Paarung bestehend aus einem radial bezüglich der Schwenkachse orientierten oder längs verlaufenden Drehmitnahmevorsprung und einer Drehmitnahme-Aufnahme aufweist, in die der Drehmitnahmevorsprung eingreift. Der Drehmitnahmevorsprung kann beispielsweise am Kupplungsarmträger insbesondere ortsfest angeordnet sein, während die Drehmitnahme-Aufnahme am Stützkörper angeordnet ist. Beispielsweise steht in diesem Fall der Drehmitnahmevorsprung nach radial innen bezüglich der Schwenkachse in die Drehmitnahme-Aufnahme hinein vor und greift in die Drehmitnahme-Aufnahme ein. Alternativ kann der Drehmitnahmevorsprung auch am Stützkörper angeordnet sein, beispielsweise ortsfest, und in eine Drehmitnahme-Aufnahme des Kupplungsarmträgers eingreifen. Dabei steht der Drehmitnahmevorsprung beispielsweise radial bezüglich der Schwenkachse nach außen vor den Stützkörper vor.

Es kann vorgesehen sein, dass in Bezug auf die Schwenkachse mehrere, winkelbeabstandete Drehmitnahmevorsprünge, beispielsweise diametral zur Schwenkachse zwei Drehmitnahmevorsprünge, in ihnen zugeordnete Drehmitnahmeausnehmungen eingreifen.

Es ist vorteilhaft vorgesehen, dass eine mit dem Stützkörper drehfest verbundene oder am Stützkörper angeordnete Schwenkmitnahmekontur vor die Antriebseite der Lagerbasis zur Betätigung durch das Schwenkantriebselement vorsteht. Beispielsweise ist die mindestens eine Schwenkmitnahmekontur an einem Außenumfang des Stützkörpers oder an einem mit dem Stützkörper drehfest oder fest verbundenen Mitnahmekörper angeordnet. Der Stützkörper kann einen den Mitnahmekörper bildenden Mitnahmeabschnitt aufweisen.

Vorteilhaft ist vorgesehen, dass die mindestens eine Schwenkmitnahmekontur an einem insbesondere bolzenartigen Fixierbetätigungskörper der Fixiereinrichtung angeordnet ist, der an dem Stützkörper oder in dem Stützkörper beweglich zwischen einer der Lösestellung zugeordneten Löse-Stellposition und einer der Fixierstellung zugeordneten Fixier-Stellposition gelagert ist und bezüglich der mindestens einen Schwenkachse mit dem Stützkörper drehfest verbunden oder drehgekoppelt ist. Beispielsweise kann der Fixierbetätigungskörper in der Art eines Bolzenkörpers, insbesondere eines Sperrbolzens, ausgestaltet sein.

Vorteilhaft ist es, wenn der Stützkörper die Lagerbasis durchsetzt und vor die Antriebseite der Lagerbasis vorsteht. Der Stützkörper hat also zwei an einander entgegengesetzten Seiten vor die Lagerbasis vorstehende Abschnitte, von denen einer den Kupplungsarmträger trägt und der andere an der Antriebseite zum Schwenk-Betätigen des Stützkörpers und mithin des Kupplungsarmträgers angeordnet ist.

Vorteilhaft ist der Stützkörper ein lang gestreckter Körper oder ein Wellenkörper, insbesondere ein Hohlwellenkörper. Ein Hohlwellenkörper kann beispielsweise einen Führungskanal für den bereits erwähnten Fixierbetätigungskörper aufweisen.

Der Stützkörper kann zur drehbeweglichen Lagerung des Kupplungsarmträgers bezüglich der mindestens einen Schwenkachse, insbesondere auf ein vorbestimmtes Maß oder Drehspiel begrenzt, ausgestaltet sein. Vorteilhaft ist beispielsweise, wenn der Stützkörper an seiner den Kupplungsarmträger tragenden Seite eine runde Außenumfangskontur aufweist. Die runde Außenumfangskontur des Stützkörpers greift beispielsweise in eine ebenfalls runde Innenumfangskontur oder Lageröffnung des Kupplungsarmträgers ein, sodass dieser relativ zum Stützkörper drehbar gelagert ist.

Allerdings ist diese Drehbarkeit vorteilhaft auf ein vorbestimmtes Maß beschränkt, beispielsweise durch ein durch die Drehmitnahmeeinrichtung begrenztes Drehspiel oder Bewegungsspiel bezüglich der Schwenkachse. Die runde Außenumfangskontur kann sich über den gesamten Außenumfang des Stützkörpers erstrecken, die in Eingriff mit dem Kupplungsarmträger ist. Die runde Außenumfangskontur kann sich aber auch nur über einen Teil des Stützkörpers erstrecken, der ansonsten beispielsweise Verdrehsicherungskonturen an seinem Außenumfang aufweist, beispielsweise einen oder mehrere Verdrehsicherungskanten, polygonal ist oder dergleichen. Eine Verdrehsicherungskante hat beispielsweise mindestens eine Richtungskomponente parallel zu der mindestens einen Schwenkachse. Dadurch kann ein gewisses Maß eines Drehspiels des Kupplungsarmträgers relativ zum Stützkörper ermöglicht sein, welche jedoch durch die Verdrehsicherungskontur oder Verdrehsicherungskonturen begrenzt ist. Ein derartiges Drehspiel kann beispielsweise im Zusammenhang mit der nachfolgenden Maßnahme nützlich sein.

Vorteilhaft ist vorgesehen, dass der Kupplungsarmträger an dem Stützkörper mit einem Bewegungsspiel mit mindestens einem Bewegungsfreiheitsgrad, insbesondere mit einer Schwenkbeweglichkeit bezüglich der mindestens einen Schwenkachse, zusätzlich zu der Schiebebeweglichkeit entlang der mindestens einen Schwenkachse beweglich gelagert ist, wobei der Kupplungsarmträger durch die bei der Verstellung aus der Lösestellung in die Fixierstellung ineinander eingreifenden Formschlusselemente mit dem mindestens einen Bewegungsfreiheitsgrad verstellbar ist.

Beispielsweise kann zwischen den Verdrehsicherungskonturen der Drehmitnahmeeinrichtung ein Schwenk-Bewegungsspiel bezüglich der mindestens einen Schwenkachse vorgesehen sein. Prinzipiell wird der Kupplungsarmträger wird zwar anhand der Drehmitnahmeeinrichtung durch den Stützkörper um die mindestens eine Schwenkachse dreh-angetrieben und ist insofern drehfest mit dem Stützkörper gekoppelt. Das Bewegungsspiel ermöglicht jedoch, dass unter Vermeidung einer statischen Überbestimmung die Formschlusskonturen von Kupplungsarmträger und Lagerbasis sozusagen ineinander finden.

An den Formschlusselementen sind vorzugsweise Schrägflächen oder dergleichen andere Führungsflächen vorgesehen, die eine Drehbetätigung des Kupplungsarmträgers relativ zur Lagerbasis um die mindestens eine Schwenkachse bei einer Bewegung von der Lösestellung in die Fixierstellung bewirken. Mithin lenken also diese Führungsflächen oder Schrägflächen eine lineare Bewegung des Kupplungsarmträgers in eine Drehbewegung im Sinne eines Verstellens des Formschlusses zwischen den Formschlusselementen um.

Ein vorteilhaftes Konzept sieht vor, dass der Kupplungsarmträger auf der Armseite des Lagerbasiskörpers zur Schwenkbetätigung um die mindestens eine Schwenkachse mit dem Stützkörper ausschließlich durch Drehanschläge drehgekoppelt ist. Die Drehanschläge können beispielsweise durch die Drehmitnahmeeinrichtung oder die Verdrehsicherungskonturen bereitgestellt werden.

Zwischen dem Stützkörper und dem Kupplungsarmträger ist vorzugsweise außer der bereits erwähnten Drehmitnahmeeinrichtung kein Übertragungsgetriebe vorhanden. Der Stützkörper bildet vorzugsweise einen direkten Antrieb für den Kupplungsarmträger. Eine Drehzahl des Stützkörpers und des Kupplungsarmträgers bei der Drehung um die Schwenkachse sind vorzugsweise identisch.

Vorteilhaft ist es ebenfalls, wenn auf der Armseite des Lagerbasiskörpers kein Getriebe, insbesondere kein Zahnradgetriebe, und/oder kein Zahnrad zur Schwenkbetätigung des Kupplungsarmträgers um die mindestens eine Schwenkachse angeordnet ist. Beide Maßnahmen tragen dazu bei, dass auf der Armseite, die in der Regel Umwelteinflüssen ausgesetzt ist, wenige bewegliche Komponenten vorhanden sind, insbesondere nur solche bewegliche Komponenten, die die Längsverschieblichkeit des Kupplungsarmträgers bezüglich der Lagerbasis ermöglichen.

Vorteilhaft ist es auch, wenn auf der Armseite des Lagerbasiskörpers mit Ausnahme eines Verstellgetriebes, insbesondere eines Lineargetriebes, oder Verstellantriebs, insbesondere eines Linearantriebs, zur Verstellung des Kupplungsarmträgers entlang der mindestens einen Schwenkachse kein den Kupplungsarm antreibendes Getriebeelement angeordnet ist. Ein bezüglich des Stützkörpers ortsfester Schwenkanschlag oder Drehanschlag und ein bezüglich des Kupplungsarmträgers ortsfester Schwenkanschlag oder Drehanschlag sind keine Getriebeelemente in diesem Sinne. Ein Getriebeelement ist relativ zum Kupplungsarmträger und zum Stützelement beweglich.

Weiterhin vorteilhaft ist es, wenn der Stützkörper an einer Längsposition bezüglich der Schwenkachse an der Lagerbasis gelagert ist und mit einem freien Ende vor die Armseite der Lagerbasis vorsteht, welches in den Kupplungsarmträger eingreift oder den Kupplungsarmträger durchsetzt.

Vorteilhaft weist die Anhängekupplung eine Bremseinrichtung zwischen der Lagerbasis und dem Kupplungsarmträger zu einem Bremsen des Kupplungsarmträgers bezüglich der Lagerbasis bei einer Schwenkbewegung zwischen der Gebrauchsstellung und der Nichtgebrauchstellung auf. Beispielsweise ist ein Bremskörper, insbesondere ein ringförmiger Bremskörper, zwischen einerseits dem Kupplungsarmträger und andererseits der Lagerbasis wirksam. Der Bremskörper oder die Bremseinrichtung kann auch zwischen dem Stützkörper und der Lagerbasis angeordnet sein, wenn der Stützkörper an der Lagerbasis um die Schwenkachse schwenkbar gelagert ist, um den Kupplungsarmträger um die Schwenkachse schwenkbar zu lagern. Beispielsweise kann ein Bremskörper, insbesondere ein O-Ring, im Bereich einer Lagerausnehmung der Lagerbasis vorgesehen sein, wobei der Kupplungsarmträger oder der Stützkörper an der Lagerausnehmung schwenkbar gelagert ist.

Sämtliche im Zusammenhang mit der vorstehenden Erfindung erläuterten Ausgestaltungen einer Anhängekupplung sind auch bei der nachfolgenden Anhängekupplung, die eine an sich unabhängige Erfindung darstellt oder darstellen kann, vorteilhaft.

Bei einer Anhängekupplung der bisher beschriebenen Art oder der eingangs genannten Art oder bei einer Anhängekupplung der vorhergehenden Ansprüche oder dem Oberbegriff des Anspruchs 1 ist vorteilhaft vorgesehen, dass der Kupplungsarmträger bezüglich der Lagerbasis entlang der mindestens einen Schwenkachse zwischen der Fixierstellung und der Lösestellung verschieblich gelagert ist und an dem Kupplungsarmträger und an der Lagerbasis angeordnete Formschlusselemente in der Fixierstellung in bezüglich der mindestens einen Schwenkachse drehfestem Eingriff und in der Lösestellung außer Eingriff sind, und dass der Kupplungsarmträger an einem zu einer Armseite vor die Lagerbasis vorstehenden Stützkörper entlang der Schwenkachse verschieblich gelagert ist.

Die Lagerbasis umfasst vorzugsweise einen Flanschkörper oder Plattenkörper, der eine Lageröffnung aufweist, in der der Stützkörper, insbesondere anhand der Widerlagereinrichtung, um die Schwenkachse drehbar gelagert ist. Der Stützkörper kann auch fest an dem Flanschkörper oder Plattenkörper angeordnet sein.

Bevorzugt ist es bei jeder erfindungsgemäßen Anhängekupplung, wenn der Kupplungsarmträger und somit der Kupplungsarm ausschließlich um eine Schwenkachse bezüglich der Lagerbasis drehbar ist.

Vorteilhaft ist vorgesehen, dass die Widerlagereinrichtung mindestens eine von der Widerlagerfläche verschiedene Lagerfläche aufweist, mit der die Widerlagereinrichtung an der Lagerbasis beweglich gelagert ist. Somit stützt sich die Widerlagereinrichtung nicht nur anhand der Widerlagerfläche an der Lagerbasis ab, sondern ist zudem noch anhand einer oder mehrerer Lagerflächen beweglich an der Lagerbasis gelagert und abgestützt. Ohne weiteres kann die Widerlagerfläche in der Lösestellung der Fixiereinrichtung ebenfalls zur Lagerung der Widerlagereinrichtung bezüglich der Lagerbasis beitragen.

Beispielsweise können die Lagerflächen der Widerlagereinrichtung den Stützkörper bezüglich der Lagerbasis um die Schwenkachse drehbar lagern.

Vorteilhaft ist eine Normalenrichtung der Widerlagerfläche oder eines Abschnitts der Widerlagerfläche parallel zu der mindestens einen Schwenkachse ist. Die Widerlagerfläche bildet also sozusagen eine Widerlagerfläche für den Kupplungsarmträger in der Fixierstellung.

Bei der Ausgestaltung der mindestens einen Lagerfläche sind verschiedene Maßnahmen vorteilhaft. Insbesondere können mehrere Lagerflächen vorgesehen sein, die zu der Widerlagerfläche unterschiedlich orientiert sind.

Vorteilhaft ist vorgesehen, dass die mindestens eine Lagerfläche eine Stirnseiten-Lagerfläche ist oder umfasst, wobei die Stirnseiten-Lagerfläche der Widerlagerfläche bezüglich der Schwenkachse gegenüberliegt und/oder eine Normalenrichtung der Stirnseiten-Lagerfläche parallel zu der mindestens einen Schwenkachse ist. Vorteilhaft ist es beispielsweise wenn ein Lagerabschnitt der Lagerbasis zwischen die Stirnseiten-Lagerfläche und die Widerlagerfläche der Widerlagereinrichtung eingreift. Die Stirnseiten-Lagerfläche und die Widerlagerfläche legen die Widerlagereinrichtung vorteilhaft bezüglich der Schwenkachse ortsfest oder verschiebefest an der Lagerbasis fest.

Ein vorteilhaftes Konzept sieht vor, dass die mindestens eine Lagerfläche eine Drehlagerfläche zum drehbaren Lagern der Widerlagereinrichtung um die mindestens eine Schwenkachse an der Lagerbasis umfasst oder dadurch gebildet ist. Die Drehlagerfläche kann bezüglich der mindestens einen Schwenkachse beispielsweise eine radial außen oder eine radial innen an der Widerlagereinrichtung angeordnete Drehlagerfläche sein. Die Drehlagerfläche kann exzentrisch sein. Vorteilhaft ist jedoch vorgesehen, dass die Drehlagerfläche zylindermantelförmig bezüglich der mindestens einen Schwenkachse ist.

Vorteilhaft ist es, wenn die Widerlagereinrichtung einen in einer Lageraufnahme der Lagerbasis drehbar aufgenommenen Lagerkörper bildet. Der Lagerkörper ist beispielsweise in der Art einer Lagerbuchse ausgestaltet, die drehbar in einer Lageraufnahme der Lagerbasis aufgenommen ist und an der der Stützkörper anhand der Befestigungseinrichtung befestigt ist.

Zwar ist es prinzipiell möglich, dass die Widerlagereinrichtung einteilig ist, beispielsweise nur einen einzigen Körper oder ein einziges Widerlagerelement, zum Beispiel einen einzigen Widerlagerkörper, aufweist.

Vorteilhaft ist jedoch, eine mehrteilige Ausgestaltung der Widerlagereinrichtung, die beispielsweise eine Montage an der Lagerbasis erleichtert. Vorteilhaft ist es beispielsweise, wenn die Widerlagereinrichtung einen die Widerlagerfläche aufweisenden Widerlagerkörper aufweist, der anhand eines, insbesondere als Schraubenmutter ausgestalteten, Befestigungskörpers an der Lagerbasis, insbesondere bezüglich der mindestens einen Schwenkachse, unverlierbar gehalten ist. Der Befestigungskörper wird bei der Montage der Anhängekupplung beispielsweise in der Art einer Kontermutter mit dem Widerlagerkörper verbunden. Beispielsweise ist vorteilhaft, wenn der Widerlagerkörper und der Befestigungskörper anhand eines Schraubgewindes oder einer anderen Befestigungseinrichtung, anhand derer ein Längsabstand Befestigungskörpers und des Widerlagerkörpers einstellbar ist, miteinander verbunden sind. Somit kann beispielsweise ein Bewegungsspiel, das die Widerlagereinrichtung bezüglich der Lagerbasis aufweist, beispielsweise ein ein Schwenken um die mindestens eine Schwenkachse ermöglichendes Bewegungsspiel, anhand der Befestigungseinrichtung einstellbar sein. Vorteilhaft ist es, wenn eine derartige Befestigungseinrichtung in der jeweils eingestellten Längsposition basiert oder fixierbar ist, beispielsweise durch eine Verklebung, eine Madenschraube oder dergleichen. Auch durch eine plastische Umformung eines Teils der Befestigungseinrichtung und/oder eine Verschweißung ist die jeweils eingestellte Längsposition der Befestigungseinrichtung fixierbar.

Ein vorteilhaftes Konzept sieht vor, dass die Widerlagerfläche an einem Flanschvorsprung des Widerlagerkörpers angeordnet ist und zwischen der Widerlagerfläche und dem Befestigungskörper eine insbesondere ringförmige Aufnahmenut gebildet ist, in die ein Lagerabschnitt der Lagerbasis eingreift. Der Flanschvorsprung des Widerlagerkörpers und ein am Befestigungskörper vorteilhaft ebenfalls vorgesehener Flanschvorsprung oder Radialvorsprung halten die Widerlagereinrichtung bezüglich der mindestens einen Schwenkachse vorteilhaft ortsfest an der Lagerbasis.

Vorzugsweise ist vorgesehen, dass die Befestigungseinrichtung ein Schraubgewinde zwischen dem Stützkörper und der Widerlagereinrichtung, insbesondere den Widerlagerkörper, umfasst oder dadurch gebildet ist. Das Schraubgewinde ist vorzugsweise ein Feingewinde. Anhand des Schraubgewindes sind mehrere Längspositionen des Stützkörpers bezüglich der Widerlagereinrichtung einstellbar.

Vorteilhaft ist es, wenn die Befestigungseinrichtung mindestens ein Sicherungselement, insbesondere eine Madenschraube oder Klemmschraube, zum Sichern des Stützkörpers an der Widerlagereinrichtung, insbesondere dem Widerlagerkörper, in der Längsposition, in der der Stützkörper am Widerlagerkörper befestigt ist, aufweist.

Das Sicherungselement, beispielsweise die Madenschraube oder Klemmschraube, ist vorzugsweise quer zu der Schwenkachse orientiert.

Die nachfolgend erläuterten Maßnahmen können vorteilhafte Ausgestaltungen der obigen Erfindungen oder Anhängekupplungen sein. Sie sind aber auch, insbesondere bei einer Anhängekupplung nach dem Oberbegriff des Anspruchs 1, als eine an sich eigenständige Erfindung anzusehen.

Bei einer Anhängekupplung gemäß Oberbegriff des Anspruchs 1 oder einer Ausgestaltung der obigen Art ist vorteilhaft, wenn sie einen Schwenkantrieb zum Verschwenken des Kupplungsarmträgers um die mindestens eine Schwenkachse und einen Fixierantrieb zum Betätigen der Fixiereinrichtung zwischen der Fixierstellung und der Lösestellung aufweist.

Vorteilhaft sind ein Fixier-Abtriebselement einer Antriebseinrichtung in treibendem Eingriff mit einem Fixierantriebselement des Fixierantriebs und ein Schwenk-Abtriebselement der Antriebseinrichtung in treibendem Eingriff mit einem Schwenkantriebselement des Schwenkantriebs.

Vorteilhaft ist der Kupplungsarmträger bezüglich der Lagerbasis entlang der mindestens einen Schwenkachse zwischen der Fixierstellung und der Lösestellung verschieblich gelagert. An dem Kupplungsarmträger und an der Lagerbasis angeordnete Formschlusselemente sind in der Fixierstellung in bezüglich der mindestens einen Schwenkachse drehfestem Eingriff und in der Lösestellung außer Eingriff.

Vorzugsweise ist vorgesehen, dass ein Stützkörper zu einer Armseite vor die Lagerbasis vorsteht, an dem der Kupplungsarmträger oder anhand dessen der der Kupplungsarmträger entlang der Schwenkachse verschieblich gelagert ist.

Vorzugsweise ist vorgesehen, dass der Stützkörper an der Lagerbasis um die mindestens eine Schwenkachse drehbar gelagert ist und mit dem Schwenkantriebselement bewegungsgekoppelt ist, das an einer zu der Armseite entgegengesetzten Antriebseite der Lagerbasis angeordnet ist

Die Antriebseinrichtung kann einen oder mehrere insbesondere elektrische Antriebsmotoren umfassen. Beispielweise kann dediziert für das Fixierantriebselement und das Schwenkantriebselement jeweils ein Antriebsmotor vorgesehen sein. Die Antriebseinrichtung umfasst vorzugsweise mindestens einen Elektromotor.

Ein vorteilhaftes Konzept sieht vor, dass die Antriebseinrichtung nur einen einzigen Antriebsmotor umfasst oder dadurch gebildet ist. Der Antriebsmotor treibt das Fixier-Abtriebselement und das Schwenk-Abtriebselement unmittelbar oder über ein Getriebe an. Der Antriebsmotor kann abtriebsseitig ein Getriebe aufweisen, beispielsweise ein Planetengetriebe, dessen Abtriebswelle mit dem Fixier-Abtriebselement und dem Schwenk-Abtriebselement bewegungsgekoppelt, insbesondere drehfest verbunden, ist. Das Getriebe des Antriebsmotors ist vorzugsweise in die Baueinheit des Antriebsmotors integriert, beispielsweise in dessen Motorgehäuse. Vorzugsweise ist das Getriebe des Antriebsmotors gekapselt und/oder in einem Motorgehäuse des Antriebsmotors angeordnet.

Vorteilhaft ist beispielsweise, wenn das Fixier-Abtriebselement und das Schwenk-Abtriebselement an einer gemeinsamen Abtriebswelle angeordnet sind, insbesondere einer Abtriebswelle des Antriebsmotors oder eines von dem Antriebsmotor angetriebenen Getriebes angeordnet sind. Die Abtriebswelle kann beispielsweise drehbar bezüglich der Lagerbasis der Anhängekupplung oder an der Lagerbasis der Anhängekupplung gelagert sein. Anhand der Abtriebswelle sind das Fixier-Abtriebselement und das Schwenk-Abtriebselement mit gleicher Drehzahl antreibbar. An der Abtriebswelle sind das Fixier-Abtriebselement und das Schwenk-Abtriebselement vorzugsweise drehfest angeordnet. Es ist auch möglich, dass das Fixier-Abtriebselement und/oder das Schwenk-Abtriebselement bezüglich der Abtriebswelle ein Drehspiel aufweisen, jedoch drehgekoppelt sind.

Vorteilhaft ist es, wenn die jeweiligen Abtriebselemente und Antriebselemente Räder, insbesondere Zahnräder sind oder umfassen. Ein derartiges Rad kann auch nur aus einem Radring bestehen oder einen Radring umfassen. So ist beispielsweise vorteilhaft vorgesehen, dass das Schwenk-Abtriebselement und/oder das Fixier-Abtriebselement und/oder das Fixierantriebselement und/oder das Schwenkantriebselement um Drehachsen drehbare Räder, insbesondere Zahnräder, sind oder umfassen.

Die nachfolgende Maßnahme kann eine kompakte Bauweise begünstigen. Vorteilhaft ist vorgesehen, dass das Schwenk-Abtriebselement und das Fixier-Abtriebselement Räder oder Radringe sind oder umfassen, deren Flachseiten oder von ihren Drehachsen durchsetzte Seiten einander gegenüberliegen, insbesondere unmittelbar aneinander anliegen. Es ist auch möglich, dass das Schwenk-Abtriebselement und das Fixier-Abtriebselement durch ein einziges Abtriebselement gebildet sind, welches gleichzeitig in treibendem Eingriff mit dem Schwenkantriebselement und dem Fixierantriebselement ist, beispielsweise in unmittelbar treibendem Eingriff oder über ein Übertragungsgetriebe, insbesondere ein Zahnradgetriebe.

Beide vorgenannten Maßnahmen können auch ohne weiteres in Bezug auf das Schwenkantriebselement und das Fixierantriebselement realisiert sein, die beispielsweise Radringe oder Räder umfassen, deren Flachseiten oder von ihren Drehachsen durchsetzte Seiten einander gegenüberliegen, beispielsweise sogar unmittelbar aneinander anliegen können. Auch das Schwenkantriebselement und das Fixierantriebselement können durch einen einzigen Körper, also einen einzigen Antriebskörper gebildet sein. An diesem Fixierantriebselement sind dann beispielsweise unterschiedliche Zahnkränze zur Bereitstellung der beiden Antriebselemente vorgesehen.

Vorteilhaft ist vorgesehen, dass das Schwenk-Abtriebselement und das Fixier-Abtriebselement durch einen einzigen Abtriebskörper gebildet sind. Der Abtriebskörper kann an seinem radialen Außenumfang beispielsweise zur Bereitstellung des Schwenk-Abtriebselements einen ersten Zahnkranz und zur Bereitstellung des Fixier-Abtriebselements einen zweiten Zahnkranz aufweisen.

Vorteilhaft ist vorgesehen, dass das Schwenk-Abtriebselement und das Fixier-Abtriebselement und/oder das Schwenkantriebselement und das Fixierantriebselement Zahnkränze, insbesondere mit unterschiedlichen Umfangsradien, aufweisen. Die Zahnkränze können unterschiedliche oder gleiche Radien haben. Die Zahnkränze können geometrisch unterschiedlich ausgestaltete Verzahnungen und/oder Zahn-Geometrien und/oder Zahnabstände aufweisen.

Ein vorteilhaftes Konzept sieht vor, dass das Schwenkantriebselement und das Fixierantriebselement unabhängig voneinander mit ihrem Schwenk-Abtriebselement und Fixier-Abtriebselement in treibendem Eingriff sind. Weiterhin ist vorteilhaft, wenn das Schwenkantriebselement und das Fixierantriebselement sich nicht gegenseitig antreiben und/oder unabhängig voneinander antreibbar sind. Der Gedanke ist dabei, dass das Schwenkantriebselement nicht zum Antrieben des Fixierantriebselements oder umgekehrt das Fixierantriebselement zum Antreiben des Schwenkantriebselements ausgestaltet sind. Somit können das Fixierantriebselement und das Schwenkantriebselement beispielweise mit unterschiedlichen Drehgeschwindigkeiten angetrieben werden.

Das Fixierantriebselement und/oder das Fixier-Abtriebselement und/oder das Schwenk-Abtriebselement und/oder das Schwenkantriebselement sind vorzugsweise Räder, insbesondere Zahnräder und/oder Reibräder.

Das Fixierantriebselement und das Schwenkantriebselement sind vorzugsweise als Zahnräder ausgestaltet, die in der Art von Stufenzahnrädern unmittelbar nebeneinander angeordnet sind.

Vorteilhaft sind auch das Schwenk-Abtriebselement und das Fixier-Abtriebselement als Zahnräder ausgestaltet, die in der Art von Stufenzahnrädern unmittelbar nebeneinander angeordnet sind.

Jedes vorgenannte Stufenzahnrad kann Zahnungen in zwei Wälzkreisen mit unterschiedlichen Durchmessern aufweisen. Das Stufenzahnrad kann einstückig sein oder aus zwei Zahnrädern gebildet sein.

Das Fixierantriebselement und das Fixier-Abtriebselement weisen vorzugsweise unmittelbar miteinander kämmende Zahnungen auf.

Das Schwenk-Abtriebselement und das Schwenkantriebselement weisen vorzugsweise unmittelbar miteinander kämmende Zahnungen auf.

Ein vorteilhaftes Konzept sieht weiterhin vor, dass das Fixier-Abtriebselement mit dem Fixierantriebselement unmittelbar oder anhand mindestens eines Übertragungselements, insbesondere eines Übertragungsrads, drehgekoppelt ist und/oder das Schwenk-Abtriebselement mit dem Schwenkantriebselement unmittelbar oder anhand mindestens eines Übertragungselements, insbesondere eines Übertragungsrads, drehgekoppelt ist.

Vorteilhaft ist es, wenn das Fixier-Abtriebselement ohne ein zwischengeschaltetes Übertragungselement unmittelbar mit dem Fixierantriebselement drehgekoppelt ist und/oder das Schwenk-Abtriebselement ohne ein zwischengeschaltetes Übertragungselement unmittelbar mit dem Schwenkantriebselement drehgekoppelt ist. So kann beispielsweise vorgesehen sein, dass nur zwei Radpaarungen oder Zahnradpaarungen, nämlich eine Paarung bestehend aus Fixier-Abtriebselement und Fixierantriebselement und eine Paarung bestehend aus Schwenk-Abtriebselement und Schwenkantriebselement vorgesehen sind.

Zwar ist es vorteilhaft möglich, dass das Schwenkantriebselement und das Fixierantriebselement voneinander verschiedene Drehachsen oder zueinander beabstandete Drehachsen aufweisen. Eine vorteilhafte Konfiguration sieht jedoch vor, dass das Schwenkantriebselement und das Fixierantriebselement bezüglich ihrer Drehachse koaxial angeordnet sind. Die Drehachse kann eine geometrische Achse sein, zum Beispiel die mindestens eine Schwenkachse, um die der Kupplungsarmträger oder Kupplungsarm schwenkbar bezüglich der Lagerbasis ist. Es ist aber auch möglich, dass die Drehachse eine körperliche Achse oder Welle ist, an der das Schwenkantriebselement und das Fixierantriebselement drehbar gelagert sind. Beispielsweise ist es vorteilhaft, wenn das Schwenkantriebselement und das Fixierantriebselement an dem Stützkörper oder einem mit dem Stützkörper fest verbundenen Antriebskörper drehbar gelagert sind.

Eine Ausführungsform der Erfindung kann vorsehen, dass das Fixier-Abtriebselement und das Schwenk-Abtriebselement voneinander verschiedene, jedenfalls nicht koaxiale Drehachsen aufweisen. Bevorzugt ist jedoch, wenn das Fixier-Abtriebselement und das Schwenk-Abtriebselement bezüglich ihrer Drehachse koaxial angeordnet sind. Auch dadurch ergibt sich eine kompakte Bauweise.

Vorteilhaft ist weiterhin, wenn die Drehachse des Schwenkantriebselements und des Fixierantriebselements einerseits und die Drehachse des Fixier-Abtriebselements und des Schwenk-Abtriebselements andererseits parallel zueinander sind und/oder einen Querabstand haben. Mithin sind also zwei Drehachsen vorgesehen, nämlich eine Drehachse für das Schwenkantriebselement und das Fixierantriebselement und eine weitere Drehachse für das Fixier-Abtriebselement und das Schwenk-Abtriebselement. Diese beiden Drehachsen können beispielsweise parallel zueinander sein.

Beispielsweise sind beide Drehachsen parallel zur Schwenkachse des Kupplungsarmträgers. Es ist aber auch möglich, dass beispielsweise die Drehachse des Fixier-Abtriebselements und des Schwenk-Abtriebselements schräg geneigt zur Drehachse des Schwenkantriebselements und des Fixierantriebselements ist. Beispielsweise kann ein Winkelgetriebe, Kegelradgetriebe oder dergleichen zwischen dem Fixier-Abtriebselement und dem Fixierantriebselement und/oder zwischen dem Schwenk-Abtriebselement und dem Schwenkantriebselement vorgesehen sein.

Vorteilhaft ist es ferner, wenn das Schwenkantriebselement und/oder das Fixierantriebselement um eine Drehachse gelagert sind, die mit der mindestens einen Schwenkachse koaxial ist, um die der Kupplungsarmträger schwenkbar bezüglich der Lagerbasis gelagert ist.

Beispielsweise können sich das Schwenkantriebselement und/oder das Fixierantriebselement, insbesondere Außenumfänge derselben, ringförmig um die Schwenkachse erstrecken und/oder von der Schwenkachse durchsetzte Hülsenkörper oder Hülsenabschnitte aufweisen.

Insbesondere vorteilhaft ist es, wenn der bereits erwähnte Stützkörper oder ein mit dem Stützkörper verbundener Antriebskörper das Schwenkantriebselement und/oder das Fixierantriebselement durchsetzt.

Eine Drehachse, um die das Fixier-Abtriebselement und/oder das Schwenk-Abtriebselement drehbar sind, und/oder eine Drehachse, um die das Schwenkantriebselement und/oder das Fixierantriebselement drehbar gelagert sind, sind vorzugsweise parallel zu der mindestens einen oder zu einer Schwenkachse, um die der Kupplungsarm relativ zur Lagerbasis drehbar ist.

Vorteilhaft ist ferner, wenn im Zusammenhang mit dem Fixier-Abtriebselement, dem Schwenk-Abtriebselement, dem Fixierantriebselement und dem Schwenkantriebselement nur zwei oder exakt zwei Drehachsen vorgesehen sind, um die die vorgenannten Elemente drehbar bezüglich der Lagerbasis der Anhängekupplung gelagert sind.

Ein vorteilhaftes Konzept sieht vor, dass das Fixier-Abtriebselement mit dem Fixierantriebselement und das Schwenk-Abtriebselement mit dem Schwenkantriebselement derart antriebsgekoppelt, insbesondere drehgekoppelt, sind, dass bei simultanem Antrieb des Fixier-Abtriebselements und des Schwenk-Abtriebselements das Fixierantriebselement die Fixiereinrichtung voreilend vor einer Schwenkbewegung des Kupplungsarmträgers aus der Fixierstellung in Richtung der Lösestellung betätigt. Vorteilhaft ist es insbesondere, wenn das Schwenk-Abtriebselement das Schwenkantriebselement und das Fixier-Abtriebselement das Fixierantriebselement gleichzeitig in Bewegung setzen. Dadurch ergeben sich beispielsweise geometrische Freiheiten bei der Ausgestaltung von Betätigungskonturen, mit denen das Schwenkantriebselement den Kupplungsarmträger und das Fixierantriebselement den Fixierantrieb betätigt.

Vorteilhaft ist es weiterhin, wenn das Fixier-Abtriebselement mit dem Fixierantriebselement mit einem ersten Übersetzungsverhältnis und das Schwenk-Abtriebselement mit dem Schwenkantriebselement mit einem zweiten von dem ersten Übersetzungsverhältnis verschiedenen Übersetzungsverhältnis antriebsgekoppelt, insbesondere drehgekoppelt, sind. So kann beispielsweise das Fixierantriebselement mit geringerer Kraft, jedoch höherer Geschwindigkeit als das Schwenkantriebselement angetrieben sein.

Vorteilhaft ist beispielsweise, wenn das erste Übersetzungsverhältnis derart gegenüber dem zweiten Übersetzungsverhältnis ausgestaltet ist, dass das Fixierantriebselement dem Schwenkantriebselement vorauseilend angetrieben ist. Somit kann beispielsweise ein Freigang zwischen dem Schwenkantriebselement und dem Kupplungsarmträger bezüglich der Drehmitnahme um die mindestens eine Schwenkachse kürzer sein als bei einer Ausgestaltung, bei der das erste und das zweite Übersetzungsverhältnis gleich sind.

Vorteilhaft hat der Schwenkantrieb eine einzige Getriebestufe, der durch die Paarung aus Schwenkantriebselement und Schwenk-Abtriebselement gebildet ist. Auch beim Fixierantrieb ist es vorteilhaft, wenn er nur eine einzige Getriebestufe aufweist, die durch das Fixierantriebselement und das Fixier-Abtriebselement gebildet ist.

Es ist vorteilhaft vorgesehen, dass zwischen dem Kupplungsarmträger und dem Schwenkantriebselement ein Freigang bezüglich einer Drehbetätigung oder Schwenkbetätigung um die mindestens eine Schwenkachse vorhanden ist. Dieser Freigang ist beispielsweise zum Verstellen der Fixiereinrichtung aus der Fixierstellung in die Lösestellung vorgesehen.

Vorteilhaft möglich ist es, dass zwischen dem Schwenkantriebselement und dem Kupplungsarmträger ein Getriebe, beispielsweise ein Planetengetriebe vorgesehen ist. Ein derartiges Getriebe kann beispielsweise auf der Armseite oder Antriebseite der Lagerbasis vorgesehen sein. Vorteilhaft ist es jedoch, wenn das Schwenkantriebselement mit dem Kupplungsarmträger während einer Schwenkmitnahmephase, in der das Schwenkantriebselement den Kupplungsarmträger um die Drehachse schwenkt, unmittelbar und ohne zwischengeschaltetes Getriebe in Betätigungseingriff ist. Insbesondere ist eine Drehmitnahme oder Drehmitnahmeeinrichtung zwischen dem Schwenkantriebselement und dem Kupplungsarmträger auf der Armseite der Lagerbasis angeordnet.

Ein vorteilhaftes Konzept sieht vor, dass das Fixierantriebselement eine Fixierbetätigungskontur zur Betätigung der Fixiereinrichtung zwischen der Fixierstellung und der Lösestellung und/oder das Schwenkantriebselement eine Schwenkbetätigungskontur zur Schwenk-Betätigung des Kupplungsarmträgers aufweisen. Die Fixierbetätigungskontur und/oder die Schwenkbetätigungskontur erstrecken sich vorzugsweise ringförmig oder hülsenförmig um die mindestens eine Schwenkachse. Die Fixierbetätigungskontur und/oder die Schwenkbetätigungskontur können beispielsweise Führungskulissen und/oder Betätigungskulissen und/oder Drehanschläge umfassen oder dadurch gebildet sein. Die Fixierbetätigungskontur und/oder die Schwenkbetätigungskontur können Freigangabschnitte zur Steuerung der jeweils durch die Fixierbetätigungskontur oder Schwenkbetätigungskontur bewirkten Antriebsbetätigung aufweisen.

Vorteilhaft ist die Fixierbetätigungskontur derart ausgestaltet, dass sie einer Schwenkbewegung des Kupplungsarmträgers vorauseilend die Fixiereinrichtung in Richtung der Lösestellung betätigt.

Weiterhin ist es vorteilhaft, wenn die Fixierbetätigungskontur bereits vor Erreichen einer jeweiligen Schwenkendstellung, also der Gebrauchsstellung oder der Nichtgebrauchsstellung, des Kupplungsarmträgers die Fixiereinrichtung zu einer Bewegung in Richtung der Fixierstellung antreibt oder freigibt.

Ein vorteilhaftes Konzept sieht vor, dass der Kupplungsarmträger an einer Armseite der Lagerbasis und an einer zu der Armseite entgegengesetzten Antriebseite der Lagerbasis die Fixierbetätigungskontur, insbesondere das Fixierantriebselement als Ganzes, und die Schwenkbetätigungskontur, insbesondere das Schwenkantriebselement als Ganzes, angeordnet sind. Somit sind also die Schwenkbetätigungskontur und die Fixierbetätigungskontur, vorzugsweise das Schwenkantriebselement und das Fixierantriebselement als Ganzes, nicht auf der Armseite, wo sie Umwelteinflüssen ausgesetzt sein könnten, sondern auf der Antriebseite der Lagerbasis angeordnet. Dort können die Antriebselemente und die durch sie angetriebenen Bauteile beispielsweise in einem Schutzgehäuse gekapselt sein.

Ein vorteilhaftes Konzept sieht vor, dass der Kupplungsarmträger an einem zu einer Armseite vor die Lagerbasis vorstehenden Stützkörper entlang der Schwenkachse verschieblich gelagert ist, wobei der Stützkörper an der Lagerbasis um die Schwenkachse drehbar gelagert ist und mit dem Schwenkantriebselement bewegungsgekoppelt ist, das an einer zu der Armseite entgegengesetzten Antriebseite der Lagerbasis angeordnet ist. Somit sind also der Kupplungsarm oder Kupplungsarmträger und das Schwenkantriebselement an einander entgegengesetzten Seiten der Lagerbasis angeordnet.

Vorteilhaft ist vorgesehen, dass das Fixierantriebselement einen hülsenartigen Vorsprung aufweist, der in das Schwenkantriebselement eingreift oder das Schwenkantriebselement einen hülsenartigen Vorsprung aufweist, der in das Fixierantriebselement eingreift. Mithin können also das Fixierantriebselement und das Schwenkantriebselement beispielsweise schalenförmig ineinander eingreifen.

Vorteilhaft ist es, wenn die Fixiereinrichtung ein Verstellgetriebe, insbesondere ein Lineargetriebe, und/oder einen Verstellantrieb, insbesondere einen Linearantrieb, zur Verstellung des Kupplungsarmträgers entlang der mindestens einen Schwenkachse zwischen der Lösestellung und der Fixierstellung aufweist. Das Verstellgetriebe oder der Verstellantrieb können beispielsweise ein Zahnstangengetriebe, ein Schrägflächengetriebe oder dergleichen umfassen. Das Verstellgetriebe kann ein Spanngetriebe zum Verspannen des Kupplungsarmträgers bezüglich der Lagerbasis sein. Der Verstellantrieb kann ein Spannantrieb zum Verspannen des Kupplungsarmträgers bezüglich der Lagerbasis sein.

Vorteilhaft ist vorgesehen, dass das Verstellgetriebe oder der Verstellantrieb einen Fixierbetätigungskörper zur Betätigung mindestens eines Formschlusskörpers aufweist, der in der Fixierstellung in eine Formschlussaufnahme des Kupplungsarmträgers formschlüssig eingreift und den Kupplungsarmträger bezüglich der Schwenkachse ortsfest verriegelt, insbesondere mit der Lagerbasis verspannt. Der mindestens eine Formschlusskörper ist beispielsweise als Kugel, Walze oder dergleichen anderer drehbarer Formschlusskörper ausgestaltet. Vorzugsweise sind mehrere, insbesondere drei Formschlusskörper vorgesehen, die einen Winkelabstand bezüglich der Stellachse des Verstellantriebs oder des Verstellgetriebes aufweisen. Als Formschlussaufnahme kann beispielsweise eine Nut, eine Kugelkalotte oder dergleichen vorgesehen sein.

Es ist möglich, dass der Kupplungsarmträger in Richtung der Lösestellung beispielsweise federbelastet ist. Es ist auch möglich, dass der Kupplungsarmträger durch Schwerkraft oder dergleichen andere Krafteinwirkung in Richtung der Lösestellung belastet ist, sodass eine Betätigung ausschließlich in Richtung der Fixierstellung entlang der Schwenkachse oder Schiebeachse ohne weiteres ausreichen würde.

Eine vorteilhafte Maßnahme sieht jedoch vor, dass das Verstellgetriebe oder der Verstellantrieb einen Löseantrieb zur Verstellung des Kupplungsarmträgers in Richtung der Lösestellung aufweist, wobei der Fixierbetätigungskörper eine Antriebskontur zum Antreiben des Kupplungsarmträgers in Richtung der Lösestellung aufweist. Die Antriebskontur wirkt beispielsweise auf mindestens ein Kraftübertragungselement, beispielsweise eine Kugel oder dergleichen, ein, die ihrerseits wiederum den Kupplungsarmträger in Richtung der Lösestellung betätigt.

Vorteilhaft ist es, wenn die Fixiereinrichtung, beispielsweise der Fixierbetätigungskörper, durch eine Federanordnung in Richtung der Fixierstellung belastet ist. Ohne weiteres wäre es aber möglich, dass die Fixiereinrichtung oder der Fixierbetätigungskörper ausschließlich motorisch in Richtung der Fixierstellung angetrieben ist.

An dieser Stelle sei erwähnt, dass der Fixierantrieb zum Betätigen der Fixiereinrichtung in Richtung der Fixierstellung und/oder in Richtung der Lösestellung sein kann. Insbesondere in Kombination mit einer den Fixierbetätigungskörper in die Fixierstellung belastenden Federanordnung ist es vorteilhaft, wenn der Fixierantrieb sozusagen ein Löseantrieb ist, d. h. ausschließlich zur Betätigung des Fixierbetätigungskörpers in Richtung der Lösestellung ausgestaltet und/oder vorgesehen ist.

Ein vorteilhaftes Konzept sieht vor, dass der Fixierbetätigungskörper in einem Führungskanal eines Führungskörpers bezüglich einer Schiebeachse, insbesondere der Schwenkachse des Kupplungsarmträgers, schiebebeweglich gelagert ist, wobei der Führungskanal von einer Umfangswand des Führungskörpers begrenzt ist und an der Umfangswand eine insbesondere schlitzförmige Durchtrittsöffnung angeordnet ist, durch die ein mit dem Fixierbetätigungskörper verbundener oder einstückiger Mitnahmekörper quer zu der Schiebeachse vor den Führungskörper zur Betätigung durch das Fixierantriebselement vorsteht. Beispielsweise ist die Durchtrittsöffnung als Längsschlitz, Langloch oder dergleichen ausgestaltet. Die Durchtrittsöffnung kann auch zu einem freien Endbereich des Führungskörpers offen sein. Der Führungskörper ist vorzugsweise durch den bereits erwähnten Stützkörper, an dem der Kupplungsarmträger abgestützt ist, gebildet oder an diesem angeordnet. Durch die Durchtrittsöffnung an der Umfangswand des Führungskörpers ist eine Betätigung des Fixierbetätigungskörpers aus einer bezüglich der Schiebeachse oder Verstellachse des Fixierbetätigungskörpers radialen Umgebung möglich. Dadurch ergibt sich vorteilhaft eine platzsparende und kompakte Bauweise.

Die nachfolgende Maßnahme stellt eine zusätzliche Sicherung dar, die die Betriebssicherheit der Anhängekupplung verbessern kann. Bevorzugt ist vorgesehen, dass die Anhängekupplung eine Sicherungseinrichtung zur Blockierung einer Verstellung der Fixiereinrichtung aus der Fixierstellung in die Lösestellung aufweist. Die Sicherungseinrichtung weist mindestens ein Sicherungsglied auf, welches in einer Sicherungsstellung an einer Blockierkontur der Fixiereinrichtung anliegt und ein Verstellen der Fixiereinrichtung in Richtung der Lösestellung blockiert und in einer Freigabestellung von der Blockierkontur weg verstellt ist und ein Verstellen der Fixiereinrichtung in Richtung der Lösestellung freigibt. Das Sicherungsglied umfasst beispielsweise einen Sicherungshebel, Sicherungsbügel, eine Sicherungsklinke oder dergleichen.

Das Sicherungsglied kann das Fixierantriebselement oder den Fixierantriebskörper blockieren. Vorteilhaft ist jedoch, wenn das Fixierantriebselement zur Betätigung des Sicherungsglieds ausgestaltet und vorgesehen ist.

Ein vorteilhaftes Konzept sieht vor, dass das Fixierantriebselement eine Sicherung-Betätigungskontur zum Verstellen des Sicherungsglieds zwischen der Sicherungsstellung und der Freigabestellung aufweist. Die Sicherung-Betätigungskontur ist beispielsweise durch die oder eine zur Betätigung der Fixiereinrichtung vorgesehene Fixierbetätigungskontur gebildet. Somit kann beispielsweise ein und dieselbe Fixierbetätigungskontur zunächst das Sicherungsglied in Richtung der Freigabestellung und anschließend die Fixiereinrichtung in Richtung der Lösestellung betätigen.

Vorteilhaft ist es, wenn das Sicherungsglied in die Sicherungsstellung durch eine Federanordnung federbelastet ist. Die Federanordnung hält das Sicherungsglied beispielsweise entgegen der Betätigungskraft der Sicherung-Betätigungskontur in der Sicherungsstellung.

Vorteilhaft ist es, wenn die Blockierkontur der Fixiereinrichtung an einem Fixierbetätigungskörper der Fixiereinrichtung angeordnet ist, der bei an der Blockierkontur anliegendem Sicherungsglied in einer der Fixierstellung zugeordneten Fixier-Stellposition blockiert und bei von der Blockierkontur entferntem Sicherungsglied aus der Fixierstellung in eine der Lösestellung zugeordnete Löse-Stellposition verstellbar ist. Somit kann also der Fixierbetätigungskörper unmittelbar durch das Sicherungsglied an einer Verstellung in Richtung der Lösestellung gehindert sein. Die Blockierkontur kann einstückig mit dem Fixierbetätigungskörper sein. Es ist aber auch möglich, dass an dem Fixierbetätigungskörper ein Antriebsglied angeordnet ist, an dem die Blockierkontur angeordnet ist.

Zwar ist es vorteilhaft, wenn das Schwenkantriebselement mit einem parallel zu der Schwenkachse oder bezüglich der Schwenkachse an der Lagerbasis verschiebefesten Bauteil, beispielsweise dem parallel zu der Schwenkachse bezüglich der Lagerbasis verschiebefesten, den Kupplungsarmträger stützenden Stützkörper, in dreh-antreibendem oder schwenk-antreibendem Eingriff ist. Es ist aber auch möglich, dass das Schwenkantriebselement mit einem Betätigungskörper in um die mindestens eine Schwenkachse treibendem Eingriff ist, der bezüglich der mindestens einen Schwenkachse axial verschieblich relativ zu dem Schwenkantriebselement ist, beispielsweise dem bereits erwähnten Fixierbetätigungskörper, der den Betätigungskörper bilden oder aufweisen kann.

Vorteilhaft ist beispielsweise, wenn der Betätigungskörper bezüglich der Schwenkachse mit dem Kupplungsarmträger und/oder dem Stützkörper bewegungsgekoppelt ist. Die Bewegungskopplung ist vorzugweise durch einen Schwenkanschlag realisiert. Weiterhin ist es möglich, dass der Betätigungskörper an dem Stützkörper verdrehfest gelagert ist.

Auch ein bezüglich des Stützkörpers verdrehfester Betätigungskörper kann die nachfolgende Eigenschaft haben. Vorteilhaft ist dabei vorgesehen, der der Betätigungskörper an dem Stützkörper, insbesondere in dem Stützkörper, zum Beispiel in einem Führungskanal des Stützkörpers, entlang der mindestens einen Schwenkachse verschieblich gelagert ist.

Die nachfolgenden Maßnahmen können vorteilhafte Ausgestaltungen einer oder mehrerer der vorstehenden Erfindungen sein. Sie stellen aber auch eine an sich eigenständige Erfindung, insbesondere mit den Merkmalen des Oberbegriffs des Anspruchs 1, dar.

Bei einer der erläuterten Anhängekupplungen oder einer Anhängekupplung nach dem Oberbegriff des Anspruchs 1, ist vorteilhaft vorgesehen, dass der Kupplungsarmträger bezüglich der Lagerbasis entlang der mindestens einen Schwenkachse zwischen der Fixierstellung und der Lösestellung verschieblich gelagert ist und an dem Kupplungsarmträger und an der Lagerbasis angeordnete Formschlusselemente in der Fixierstellung in bezüglich der mindestens einen Schwenkachse drehfestem Eingriff und in der Lösestellung außer Eingriff sind, wobei die Formschlusselemente des Kupplungsarmträgers und der Lagerbasis ringförmig um die mindestens eine Schwenkachse angeordnete Formschlussvorsprünge und Formschlussaufnahmen aufweisen, die in der Gebrauchsstellung und der Nichtgebrauchsstellung formschlüssig ineinander eingreifen, und wobei die Formschlussvorsprünge derart ausgestaltet sind, dass in allen Zwischenpositionen zwischen der Gebrauchsstellung und der Nichtgebrauchstellung stets zwei Formschlussvorsprünge, die bezüglich der Schwenkachse einen Winkelabstand zueinander aufweisen, Stützvorsprünge bilden, die mit ihren freien, den Formschlussaufnahmen zugewandten Endbereichen neben den Formschlussaufnahmen abgestützt sind und/oder dass sie mindestens eine Formschlusspaarung bestehend aus mindestens einem der Formschlussvorsprünge und aus einer zu einem Eingriff dieses Formschlussvorsprungs vorgesehenen Formschlussaufnahme aufweist, die eine Längsgestalt aufweisen, wobei deren sich radial zu der Schwenkachse erstreckende Querbreite kleiner als eine zu der Querbreite rechtwinkelige oder sich in Umfangsrichtung bezüglich der Schwenkachse erstreckende Längserstreckung des Formschlussvorsprungs und der Formschlussaufnahme der Formschlusspaarung ist.

Zwischenpositionen sind also diejenigen Positionen zwischen der Nichtgebrauchstellung und der Gebrauchsstellung, bei denen der Kupplungsarmträger relativ zur Lagerbasis Schwenkpositionen bezüglich der Schwenkachse einnimmt, die nicht der Gebrauchsstellung oder Nichtgebrauchstellung zugeordnet sind oder entsprechen.

Die Stützvorsprünge bilden sozusagen Lagervorsprünge, die an einer Fläche des Kupplungsarmträgers oder der Lagerbasis, an der die Formschlussaufnahmen angeordnet sind, während einer Verstellung zwischen der Gebrauchsstellung und der Nichtgebrauchsstellung abgestützt sind und/oder entlanggleiten. Dadurch bleiben die Formschlusselemente von Kupplungsarmträger und Lagerbasis während dieser Verstellbewegung außer Eingriff. Die zwei oder mehr Formschlussvorsprünge, die Stützvorsprünge bilden, sind winkelbeabstandet und verhindern somit ein Verkippen des Kupplungsarmträgers bezüglich der Schwenkachse.

Vorzugsweise ist vorgesehen, dass alle Formschlussvorsprünge mit einer Formschlussaufnahme und alle Formschlussaufnahmen mit einem Formschlussvorsprung in der Gebrauchsstellung und der Nichtgebrauchstellung in Eingriff sind. Somit sind also alle Formschlussvorsprünge und alle Formschlussaufnahmen in der Gebrauchsstellung und der Nichtgebrauchstellung im Sinne einer Schwenkfixierung des Kupplungsarmträgers an der Lagerbasis bezüglich der Schwenkachse in Eingriff.

Vorteilhaft ist es, wenn die Paarungen von Formschlussvorsprüngen und Formschlussaufnahmen nur in der Gebrauchsstellung und der Nichtgebrauchsstellung ineinanderpassen, insbesondere formschlüssig ineinander eingreifen. In den Zwischenstellungen passen die Formschlussvorsprünge nicht in die Formschlussaufnahmen, sodass die Fixierstellung nur in der Gebrauchsstellung und der Nichtgebrauchstellung einstellbar ist.

Eine vorteilhafte Maßnahme sieht vor, dass der Kupplungsarmträger und die Lagerbasis ausschließlich Formschlussvorsprünge und Formschlussaufnahmen aufweisen, die in der Gebrauchsstellung und in der Nichtgebrauchsstellung den Kupplungsarmträger an der Lagerbasis bezüglich der Schwenkachse drehfest fixieren. Somit sind also andere Komponenten, die einen Fixiereingriff der Formschlussvorsprünge in die Formschlussaufnahmen verhindern, nicht notwendig.

Eine Maßnahme kann beispielsweise vorsehen, dass die Anhängekupplung keinen beispielsweise vor den Kupplungsarmträger oder die Lagerbasis vorstehenden, insbesondere keinen nicht zur Schwenkfixierung bezüglich der Schwenkachse dienenden Stützvorsprung aufweist, der die Formschlussvorsprünge und Formschlussaufnahmen in Zwischenpositionen zwischen der Gebrauchsstellung und der Nichtgebrauchstellung außer Eingriff hält.

Ein vorteilhaftes Konzept sieht vor, dass mindestens ein Formschlussvorsprung eine Längsgestalt aufweist. Vorteilhaft ist diese Maßnahme bei mindestens zwei Formschlussvorsprüngen, die einen Winkelabstand bezüglich der Schwenkachse aufweisen. Mithin ist also der mindestens eine Vorsprung beispielsweise in der Art eines Längsvorsprungs ausgestaltet. Vorteilhaft ist ohne weiteres aber auch mindestens eine Formschlussaufnahme mit einer Längsgestalt. Vorteilhaft können auch zwei oder weitere, einen Winkelabstand bezüglich der Schwenkachse aufweisende Formschlussaufnahmen vorgesehen sein, die eine Längsgestalt haben.

Vorteilhaft ist weiterhin, wenn mindestens ein Formschlussvorsprung in Umfangsrichtung bezüglich der Schwenkachse eine größere Länge aufweist als in radialer Richtung bezüglich der Schwenkachse. Vorzugsweise ist insbesondere vorgesehen, dass mindestens zwei einen Winkelabstand bezüglich der Schwenkachse aufweisende Formschlussvorsprünge in Umfangsrichtung bezüglich der Schwenkachse eine größere Länge aufweisen als in radialer Richtung bezüglich der Schwenkachse.

Vorzugsweise ist vorgesehen, mindestens ein Formschlussvorsprung und/oder mindestens eine Formschlussaufnahme, der oder die eine Längsgestalt aufweist, sich um die Schwenkachse bogenförmig erstreckt. Dies kann bei einer oder mehreren Paarungen von Formschlussvorsprung und Formschlussaufnahme vorgesehen sein. **In** Kombination mit dieser Ausgestaltung kann auch die folgende vorteilhafte Ausgestaltung getroffen sein.

Bevorzugt ist vorgesehen, dass mindestens ein Formschlussvorsprung und/oder mindestens eine Formschlussaufnahme, der oder die eine Längsgestalt aufweist, eine geradlinige Längsgestalt aufweist oder sich entlang einer geraden Längsachse erstreckt.

Vorteilhaft ist weiterhin, wenn die Anhängekupplung mindestens zwei Formschlusspaarungen bestehend aus Formschlussvorsprung und Formschlussaufnahme, die eine Längsgestalt aufweisen, aufweist, deren Längsachsen zueinander parallel sind oder in einem Winkel von weniger als 10°, insbesondere weniger als 5°, zueinander verlaufen. Insbesondere im Zusammenhang mit der nachfolgenden Maßnahme ist diese Ausgestaltung vorteilhaft.

Vorzugsweise ist vorgesehen, dass die Längserstreckung mindestens eines Formschlussvorsprungs und der Formschlussaufnahme der Formschlusspaarung, die eine Längsgestalt aufweisen, in der Gebrauchsstellung der Anhängekupplung etwa vertikal oder in einem Winkel von maximal 45 Grad zur Vertikalen orientiert ist. Somit können beispielsweise beim Zugbetrieb an der Anhängekupplung angreifende Kräfte gut abgestützt sein.

Zwar ist es vorteilhaft, wenn Formschlusspaarungen bestehend aus Formschlussvorsprung und Formschlussaufnahme eine Längsgestalt aufweisen. Es ist aber auch möglich, dass am Kupplungsarmträger und der Lagerbasis eine Formschlusspaarung bestehend aus mindestens einem der Formschlussvorsprünge und aus einer zu einem Eingriff dieses Formschlussvorsprungs vorgesehenen Formschlussaufnahme vorhanden ist, bei der der Formschlussvorsprung kugelförmig ist und die Formschlussaufnahme eine Kugelkalotte ist. Eine Kugelform eignet sich insbesondere für eine leichte löse-Betätigung der Formschlussvorsprünge aus den Formschlussaufnahmen heraus.

Aus diesem Grund ist auch die folgende Maßnahme vorteilhaft. Vorteilhaft ist vorgesehen, dass mindestens ein Längsendbereich, vorzugsweise beide Längsendbereiche, mindestens eines eine Längsgestalt aufweisenden Formschlussvorsprungs und/oder einer Formschlussaufnahme halbkugelförmig oder teilkugelförmig ist.

Insbesondere ist es ferner, wenn kein Formschlussvorsprung eine vorstehende Kante und/oder keine Formschlussaufnahme eine kantenförmige Vertiefung aufweist.

Jedenfalls ist es vorteilhaft, wenn mindestens ein Formschlussvorsprung und/oder mindestens eine Formschlussaufnahme eine im Wesentlichen gerundete oder abgerundete Außenumfangskontur bzw. Innenumfangskontur aufweist. Vorzugsweise ist vorgesehen, dass nur Übergangsbereiche zwischen einem Formschlussvorsprung und der Stützfläche, an der der Verschlussvorsprung angeordnet ist oder zwischen einer Formschlussaufnahme und der Stützfläche, an der die Formschlussaufnahmen angeordnet ist, eine kantige oder winkelige Kontur aufweist.

An einem freien, von dem Kupplungsarmträger abgewandten Ende weist der Kupplungsarm vorteilhaft eine Kupplungskugel auf.

Vorteilhaft ist der Kupplungsarm oder Kupplungsarmträger nur um eine einzige Schwenkachse schwenkbar an der Lagerbasis gelagert. Weiterhin vorteilhaft ist es, wenn die mindestens eine Schwenkachse oder einzige Schwenkachse schräg im Raum steht, wenn die Anhängekupplung am Kraftfahrzeug montiert ist. Die Fahrzeughalterung ist beispielsweise derart ausgestaltet, dass sie an einem in Fahrzeugquerrichtung des Kraftfahrzeugs verlaufenden Querträger angeordnet oder montierbar ist derart, dass die einzige Schwenkachse oder mindestens eine Schwenkachse schräg zwischen der Fahrzeuglängsrichtung und der Fahrzeugquerrichtung verläuft. Insbesondere vorteilhaft ist es, wenn diese schräge Achse in einem Winkel schräg zur horizontalen Richtung verläuft.

Vorteilhaft ist es, wenn der Kupplungsarm in der Gebrauchsstellung nach hinten vor ein Heck des Kraftfahrzeugs, insbesondere einen Heck-Stoßfänger des Kraftfahrzeugs, vorsteht. Weiterhin ist es zweckmäßig, wenn der Kupplungsarm in der Nichtgebrauchstellung näher zum Heck des Kraftfahrzeugs hin verstellt ist, insbesondere hinter und/oder unter einen Heck-Stoßfänger des Kraftfahrzeugs.

Das Kraftfahrzeug ist beispielsweise ein Kraftfahrzeug mit Verbrennungsmotor und/oder Elektromotor, vorzugsweise ein Personenfahrzeug.

Ein bevorzugtes Konzept sieht vor, dass die Formschlusselemente, also die Formschlussvorsprünge und/oder Formschlussaufnahmen, durch eine Fräsbearbeitung hergestellt sind, beispielsweise durch Ausfräsungen aus einer Stirnseite des Kupplungsarmträgers und/oder der Lagerbasis.

Nachfolgend werden Ausführungsbeispiele der Erfindung oder der Erfindungen anhand der Zeichnung erläutert. Es zeigen:

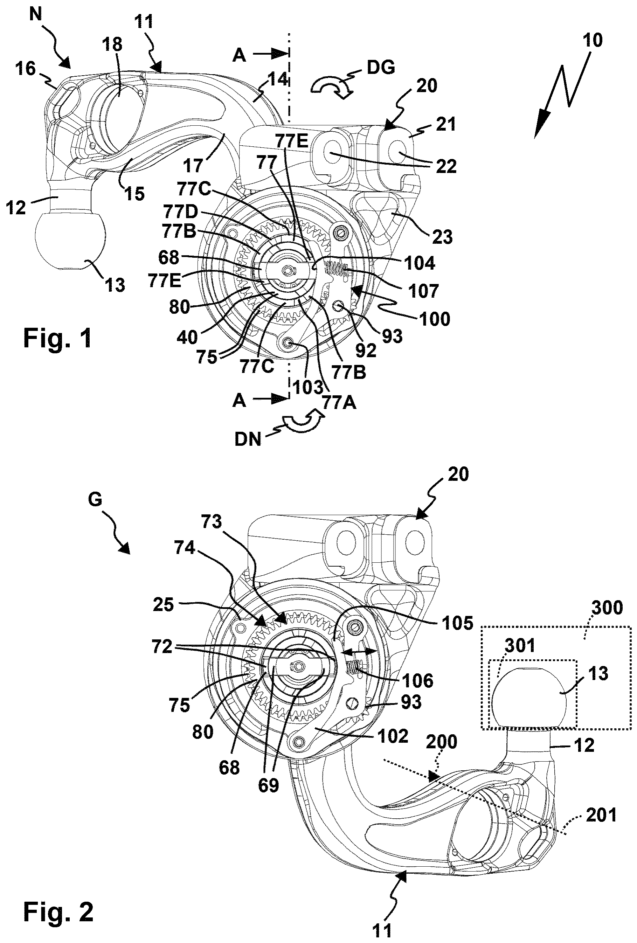

- Figur 1: eine Ansicht einer Anhängekupplung in der Nichtgebrauchsstellung frontal von hinten auf ihre Antriebseite,
- Figur 2: die Anhängekupplung gemäß Figur 1, jedoch in Gebrauchsstellung,

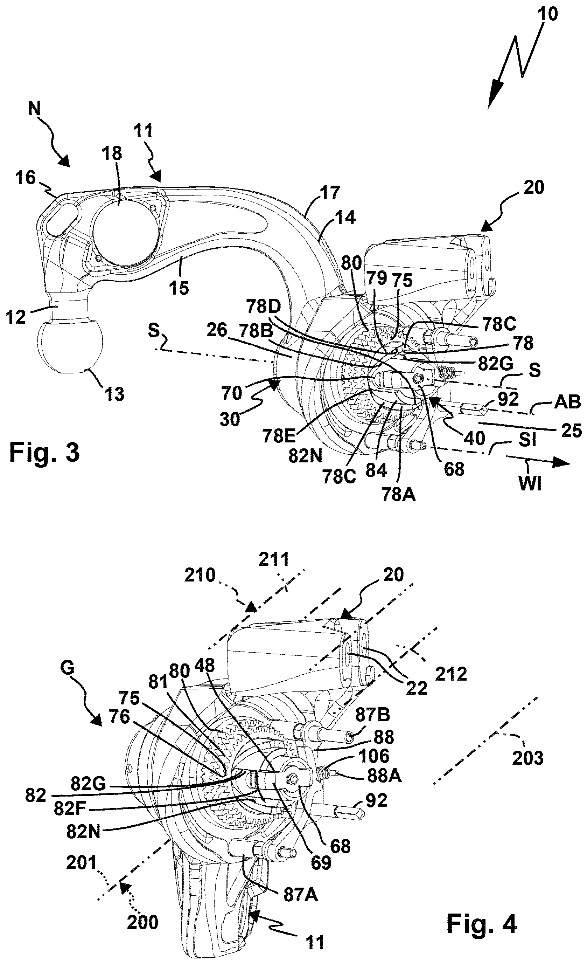

- Figur 3: die Anhängekupplung gemäß Figur 1 in Nichtgebrauchsstellung in perspektivischer Darstellung in einer ersten Blickrichtung,
- Figur 4: die Anhängekupplung in der Ansicht gemäß Figur 3, jedoch in Gebrauchsstellung,
- Figur 5: die Anhängekupplung gemäß vorstehender Figuren in Nichtgebrauchsstellung in perspektivischer Schrägansicht von schräg hinten, in einer zu der ersten Blickrichtung winkeligen zweiten Blickrichtung, wobei eine Fixiereinrichtung der Anhängekupplung eine Fixierstellung einnimmt,
- Figur 6: eine Detail D1 der Anhängekupplung gemäß Figur 5, wobei eine Sicherungseinrichtung teilweise aus ihrer Sicherungsstellung in ihre Freigabestellung verstellt ist,
- Figur 7: die Ansicht gemäß Figur 6, jedoch mit vollständig in die Freigabestellung verstellter Sicherungseinrichtung,
- Figur 8: die Ansicht gemäß Figuren 5-7, wobei ein Fixierbetätigungskörper teilweise aus einer Fixier-Stellposition in eine Löse-Stellposition verstellt ist,
- Figur 9: die Ansicht gemäß Figuren 5-8, wobei der Fixierbetätigungskörper vollständig in die Löse-Stellposition verstellt ist und der Kupplungsarm eine Zwischenstellung zwischen der Nichtgebrauchsstellung und der Gebrauchsstellung einnimmt,
- Figur 10: die Ansicht gemäß Figuren 5-9, wobei der Kupplungsarm in der Gebrauchsstellung und der Fixierbetätigungskörper in der Fixier-Stellposition sind,
- Figur 11: einen Schnitt durch die in ihrer Nichtgebrauchsstellung fixierte Anhängekupplung gemäß Figur 1, etwa entlang einer Schnittlinie A-A in Figur 1,
- Figur 12: die Ansicht gemäß Figur 11, wobei die Fixiereinrichtung in die Lösestellung verstellt ist,
- Figur 12A: eine alternative Drehmitnahmeeinrichtung in schematischer Darstellung,
- Figur 12B: eine weitere Drehmitnahmeeinrichtung in schematischer Darstellung,
- Figur 13: die Ansicht gemäß Figuren 11, 12, wobei der Fixierbetätigungskörper teilweise in Richtung der Fixier-Stellposition verstellt ist,

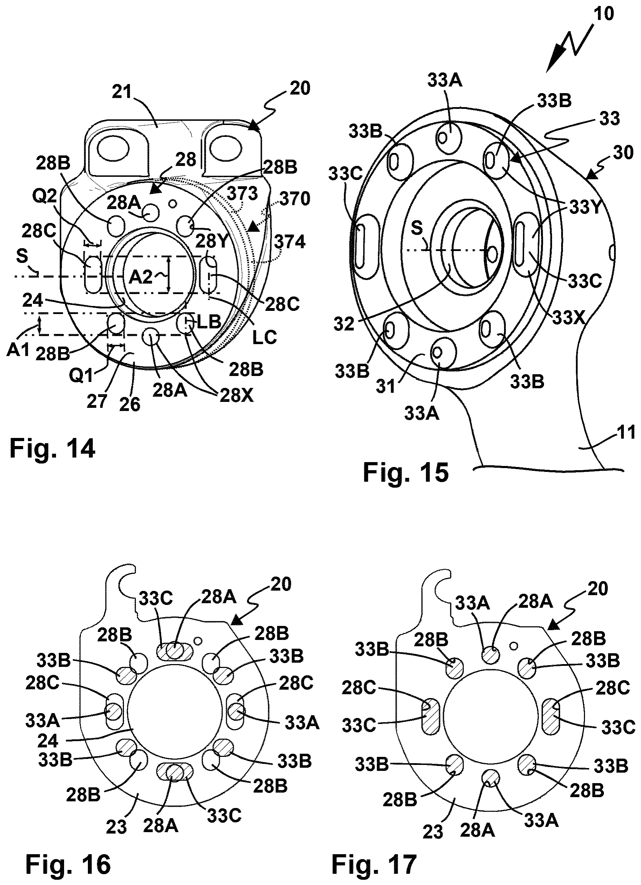

- Figur 14: eine perspektivische Schrägansicht der Lagerbasis und,
- Figur 15: eine perspektivische Schrägansicht eines Kupplungsarmträgers der Anhängekupplung der Anhängekupplung gemäß vorstehender Figuren,
- Figur 16: eine Frontalansicht auf die Lagerbasis gemäß Figur 14 mit relativ zueinander verdrehten, nicht ineinander passenden Formschlusselementen von der Lagerbasis und Kupplungsarmträger,
- Figur 17: die Ansicht gemäß Figur 16, wobei die Formschlusselemente des Kupplungsarmträgers mit den Formschlusselementen der Lagerbasis in Eingriff sind,
- Figur 18: einen Stützkörper für die Anhängekupplung gemäß vorstehender Figuren sowie ein Schwenkantriebselement zum schwenkbaren Antreiben des Stützkörpers,
- Figur 19: eine Teilansicht der Anhängekupplung mit einer Einstelleinrichtung in einer ersten Position,
- Figur 20: einen Ausschnitt D2 der Anhängekupplung gemäß Figur 19, wobei die Einstelleinrichtung in eine zweite Position verstellt ist,
- Figur 21: eine Teilansicht der Anhängekupplung etwa entsprechend Figur 19, wobei eine zweite Einstelleinrichtung eine erste Position einnimmt, und
- Figur 22: die Anhängekupplung gemäß Figur 21, wobei die zweite Einstelleinrichtung in eine zweite Position verstellt ist.

Eine Anhängekupplung 10 dient zum Anhängen eines Anhängers 300 an ein Kraftfahrzeug 200, welche nur schematisch dargestellt sind.

Die Anhängekupplung 10 weist einen Kupplungsarm 11 auf, der an einem Kupplungsarmträger 30 angeordnet ist. Der Kupplungsarm 11 hat an seinem freien Längsende 12 einen Kuppelkörper 13, insbesondere eine Kupplungskugel, und ist mit seinem anderen Längsende 14 mit dem Kupplungsarmträger 30 verbunden, insbesondere einstückig. Zwischen den Längsende 12, 14 erstreckt sich ein Armabschnitt 15, der im Wesentlichen geradlinig verläuft und zwischen Krümmungsabschnitten 16 und 17 angeordnet ist, die sich zu den Längsende 12 und 14 hin erstrecken. Der Kupplungsarm 11 umfasst weiterhin eine Aufnahme 18 für eine in der Zeichnung nicht dargestellte Kontakteinrichtung, beispielsweise eine Anhängersteckdose, zur elektrischen Energieversorgung eines an dem Kupplungsarm 11 befestigten Objekts, beispielsweise des Anhängers 300 oder Lastenträgers.

Der Anhänger 300 ist an den Kuppelkörper 13, die Kupplungskugel, anhand einer sogenannten Zugkugelkupplung ankuppelbar.

Die Anhängekupplung 10 ist anhand einer Fahrzeughalterung 20 an dem Kraftfahrzeug 200 befestigt. Die Fahrzeughalterung 20 weist beispielsweise einen Befestigungsabschnitt 21 auf, der mit einem Träger 210 verbunden oder verbindbar ist. Der Träger 210 seinerseits wiederum ist in nicht dargestellter Weise mit dem Kraftfahrzeug 200 verbunden, beispielsweise anhand von Seitenträgern, die sich in Fahrzeuglängsrichtung des Kraftfahrzeugs 200 erstrecken. Der Träger 210 bildet beispielsweise einen sogenannten Querträger, der sich quer zur Fahrzeuglängsrichtung des Kraftfahrzeugs 200 am Heck einer Karosserie 203 des Kraftfahrzeugs 200 erstreckt. Der Träger 210 weist beispielsweise Tragwände 211, 212 auf, mit denen der Befestigungsabschnitt 21 verbunden ist, beispielsweise verschraubt. Am Befestigungsabschnitt 21 sind beispielsweise Schraubaufnahmen 22 für eine derartige Schraubverbindung vorgesehen.

Von dem Befestigungsabschnitt 21 steht eine Lagerbasis 23 der Fahrzeughalterung 20 ab. Die Lagerbasis 23 ist beispielsweise in der Art einer Platte ausgestaltet. Die Lagerbasis 23 weist eine Lageraufnahme 24 auf, die sich zwischen einer Antriebseite 25 und einer Armseite 26 der Lagerbasis 23 erstreckt, an der der Kupplungsarmträger 30 angeordnet ist. An der Armseite 26 der Lagerbasis 23 ist eine Stirnfläche 27 vorgesehen, die einer Stirnfläche 31 des Kupplungsarmträgers 30 gegenüberliegt. Die Stirnflächen 27, 31 sind beispielsweise ringförmig, insbesondere kreisringförmig.

Der Kupplungsarmträger 30 und somit der Kupplungsarm 11 ist bezüglich der Lagerbasis 23 um eine Schwenkachse S schwenkbar zwischen einer zum Anhängen des Anhängers 300 oder alternativ zum Ankoppeln eines Lastenträgers 301 vorgesehenen Gebrauchsstellung G und einer Nichtgebrauchsstellung N gelagert. In der Nichtgebrauchsstellung N ist der Kupplungsarm 11 beispielsweise näher zu einem Stoßfänger 201 des Kraftfahrzeugs 200 hin verstellt, insbesondere unter und/oder hinter den Stoßfänger 201 verstellt. In der Gebrauchsstellung G hingegen steht der Kupplungsarm 11 nach hinten vor den Stoßfänger 201 vor.

Die Schwenkachse S durchsetzt die Lageraufnahme 24.

Der Kupplungsarmträger 30 ist anhand eines Stützkörpers 40, insbesondere eines Wellenkörpers, an der Lagerbasis 23 gehalten. Der Stützkörper 40 weist eine Längsgestalt und/oder eine Längserstreckung parallel zur Schwenkachse S auf. Der Stützkörper 40 ist beispielsweise als eine Hohlwelle oder ein Hohlwellenkörper ausgestaltet.

Der Stützkörper 40 weist einen Stützabschnitt 41 auf, der vor die Armseite 26 der Lagerbasis 23 vorsteht und in eine Lageraufnahme 32 des Kupplungsarmträgers 30 eingreift. Zwischen dem Stützabschnitt 41 und der Lageraufnahme 32 ist ein Schiebelager 32A gebildet.

Der Kupplungsarmträger 30 ist parallel zu der Schwenkachse S an dem Stützkörper 40 anhand eines Schiebelagers 32A verschieblich gelagert. Somit können die Stirnflächen 27, 31 entlang der Schiebeachse oder Schwenkachse S zueinander hin oder voneinander weg verstellt werden. An den Stirnflächen 27, 31 sind Formschlusselemente 28, 33 angeordnet, die in ineinander eingreifen, wenn der Kupplungsarmträger 30 zur Lagerbasis 23 hin verstellt ist, und voneinander entfernt sind und nicht ineinander eingreifen, wenn der Kupplungsarmträger 30 von der Lagerbasis 23 durch Verschiebung entlang der Schwenkachse oder Schiebeachse S entfernt ist. Wenn die Formschlusselemente 28, 33 ineinander eingreifen, ist der Kupplungsarmträger 30 und somit der Kupplungsarm 11 in einer Fixierstellung F, in der der Kupplungsarm 11 bezüglich der Schwenkachse S formschlüssig an der Lagerbasis 23 fixiert ist. Wenn die Formschlusselemente 28, 33 außer Eingriff sind, ist der Kupplungsarm 11 um die Schwenkachse S zwischen der Gebrauchsstellung G und der Nichtgebrauchsstellung N bezüglich der Lagerbasis 23 schwenkbar.

Die Formschlusselemente 28, 33 umfassen beispielsweise Formschlussvorsprünge und Formschlussaufnahmen, wobei die Formschlussvorsprünge im Ausführungsbeispiel am Kupplungsarmträger 30 angeordnet sind und die Formschlussaufnahmen an der Lagerbasis 23, jedoch auch eine umgekehrte Konfiguration gegeben sein kann. Bevorzugt ist es, wenn die Formschlusselemente 28, 33 zur Schwenkachse S schräge Konturen oder Schrägflächen haben, sodass durch eine axiale Verstellung des Kupplungsarmträgers 30 zur Lagerbasis 23 hin entlang der Schwenkachse S eine Drehbetätigung des Kupplungsarmträgers 30 um die Schwenkachse S bewirkbar ist, anhand derer die Formschlusselemente 28, 33 in eine Spannstellung gelangen können.

Die Formschlusselemente 28, 33 bilden Bestandteile einer Fixiereinrichtung 60 zum Fixieren des Kupplungsarms 11 in der Gebrauchsstellung G und der Nichtgebrauchsstellung N.

Die Fixiereinrichtung 60 umfasst weiterhin einen zum Beispiel als Linearantrieb ausgestalteten Verstellantrieb 61 zur Verstellung des Kupplungsarms 11 oder Kupplungsarmträgers 30 zwischen der Fixierstellung F und der Lösestellung L. Der Verstellantrieb 61 umfasst einen Fixierbetätigungskörper 62, der Führungsaufnahme 42F, beispielsweise in einem Führungskanal 42, bezüglich einer Schiebeachse, die vorliegend der Schwenkachse S entspricht, verschieblich gelagert ist.

Der Führungskanal 42 ist vorzugsweise in dem Stützkörper 40, der insoweit einen Führungskörper 40A darstellt, gebildet. Der Stützkörper 40 ist zur Bereitstellung des Führungskanals 42 als ein Hohlwellenkörper oder eine Hohlwelle ausgestaltet. Der Führungskanal 42 befindet sich im Innenraum einer Umfangswand 43. Der Führungskanal 42 erstreckt sich entlang der Schwenkachse S in dem Stützkörper 40.

Der Fixierbetätigungskörper 62, den man auch als einen Sperrbolzen oder Bolzenkörper bezeichnen kann, betätigt in einer der Fixierstellung F zugeordneten Fixier-Stellposition FS Formschlusskörper 63, beispielsweise Kugeln, anhand einer Betätigungskontur 64 nach radial außen bezüglich der Schwenkachse S durch Kanäle 44 an der Umfangswand 43 hindurch, sodass sie in eine mit dem Kupplungsarmträger 30 fest verbundene Formschlussaufnahme 34 eingreifen. Die Betätigungskontur 64 und die Formschlusskörper 63 bilden ein Verstellgetriebe 61A, insbesondere ein Lineargetriebe.

Die Betätigungskontur 64 ist bezüglich der Schwenkachse S schräg geneigt und/oder bildet oder umfasst eine Spannkontur 64A, die die Formschlusskörper 63 in Bezug auf die Formschlussaufnahme 34 verspannen und somit den Kupplungsarmträger 30 bezüglich des Stützkörpers 40 verspannen. Da der Stützkörper 40 bezüglich der Schwenkachse S verschiebefest an der Lagerbasis 23 angeordnet ist, bewirkt diese Verspannung eine Verspannung der Formschlusselemente 28, 33 ineinander. Die Spannkontur 64A weist vorzugsweise eine selbsthemmende Schrägneigung auf, die eine Hemmung gegenüber einem Lösen der Verspannung darstellt oder aufweist. An der Formschlussaufnahme 34 ist vorteilhaft eine Spannschräge 34A vorgesehen.

Neben der Spannkontur 64A ist eine Antriebskontur 64B angeordnet, die bezüglich der Schwenkachse S oder Schiebeachse stärker geneigt ist als die Spannkontur 64A. Die Antriebskontur 64B ist vorgesehen und ausgestaltet, die Formschlusskörper 63 bei geringem Verstellweg des Fixierbetätigungskörpers 62 entlang der Schwenkachse S mit höherer Geschwindigkeit als die Spannkontur 64A in die Formschlussaufnahme 34 hineinzutreiben.

Weiterhin umfasst oder bildet der Verstellantrieb 61 einen Löseantrieb 61A zum Verstellen des Kupplungsarmträgers 30 aus der Fixierstellung F in die Lösestellung L. Der Löseantrieb umfasst eine Antriebskontur 66 am Fixierbetätigungskörper 62, die über Lösekörper 65 auf eine Löse-Stellfläche 35 des Kupplungsarmträgers 30 im Sinne einer Verstellung oder Krafteinwirkung des Kupplungsarmträgers 30 von der Lagerbasis 23 weg entlang der Schwenkachse oder Stellachse S wirkt, wenn der Fixierbetätigungskörper 62 aus der Fixier-Stellposition FS in eine der Lösestellung L zugeordnete Löse-Stellposition LS verstellt wird oder ist.

Die Lösekörper 65 sind vorzugsweise Kugeln, die radial zur Stellachse oder Schwenkachse S in Kanälen 45 an der Umfangswand 43 des Stützkörpers 40 beweglich gelagert sind.

Die Formschlusskörper 63 werden durch die Antriebskontur 66 nach radial außen bezüglich der Schwenkachse S durch die Kanäle 44 verdrängt.

Die Formschlussaufnahme 34 ist beispielsweise als eine ringförmige Rinne oder Umfangsnut ausgestaltet.

Die Löse-Stellfläche 35 ist in der Formschlussaufnahme 34 angeordnet und liegt der Spannschräge 34A gegenüber. Die Löse-Stellfläche 35 und die Spannschräge 34A sind gegensinnig geneigt.

Ebenso gegensinnig schräg geneigt derart, dass sie eine Art Mulde bilden, sind die Antriebskontur 66 und die Betätigungskontur 64 am Fixierbetätigungskörper 62. Die Antriebskontur 66 und die Betätigungskontur 64 sind vorzugsweise am vor die Armseite 26 vorstehenden Endbereich des Fixierbetätigungskörpers 62 angeordnet.

Der Stützkörper 40 ist anhand einer Widerlagereinrichtung 50 an der Lagerbasis 23 gehalten.

Die Widerlagereinrichtung 50 umfasst einen Widerlagerkörper 51, der mit einem Lagerabschnitt 52 in die Lageraufnahme 24 eingreift. Der Lagerabschnitt 52 weist an seinem radialen Außenumfang bezüglich der Schwenkachse S eine Zylindermantelfläche auf, die eine Lagerfläche 53 bildet. Die Lagerfläche 53 ist am radialen Innenumfang der Lageraufnahme 24 bezüglich der Schwenkachse S drehbar gelagert.

Vor den Lagerabschnitt 52 des Widerlagerkörpers 51 steht ein Flanschvorsprung 54 nach radial außen vor, der sich an einer Stützfläche 29 der Lagerbasis 23 mit einer Widerlagerfläche 55 abstützt. Die Stützfläche 29 ist an der Antriebseite 25 angeordnet. Die Stützfläche 29 und die Stirnfläche 27 sind an einander entgegengesetzten Seiten der Lagerbasis 23 angeordnet. Eine Normalenrichtung der Stützfläche 29 und eine Normalenrichtung der Widerlagerfläche 55 sind parallel zur Schwenkachse S oder Schiebeachse S.

Der Widerlagerkörper 51 ist anhand eines Befestigungskörpers 56 unverlierbar an der Lagerbasis 23, insbesondere drehbar, gehalten. Der Befestigungskörper 56 ist mit dem Widerlagerkörper 51 fest verbunden, beispielsweise anhand eines Gewindes 56A verschraubt.

Der Widerlagerkörper 51 und der Befestigungskörper 56 bilden insgesamt einen Lagerkörper 50A, anhand dessen der Stützkörper 40 bezüglich der Lagerbasis 23 um die Schwenkachse S schwenkbar gelagert ist. Der Lagerkörper 50A ist bezüglich der Lagerbasis 23 um die Schwenkachse S schwenkbar gelagert.

Der Befestigungskörper 56 weist eine der Widerlagerfläche 55 gegenüberliegende Stirnseiten-Lagerfläche 57 auf. Zwischen die Widerlagerfläche 55 und die Stirnseiten-Lagerfläche 57 greift ein Abschnitt 23A der Lagerbasis 23 ein, der die Lageraufnahme 24 umgibt. Zwischen der Widerlagerfläche 55 und der Stirnseiten-Lagerfläche 57 einerseits und der umfangsseitigen Lagerfläche 53 ist eine Ringnut gebildet, in die der vorgenannte Abschnitt der Lagerbasis 23 eingreift.

Bevorzugt ist eine Bremseinrichtung 54A zwischen der Lagerbasis 23 und dem Kupplungsarmträger 30 angeordnet, welche eine Schwenkbewegung des Kupplungsarmträgers 30 zwischen der Gebrauchsstellung G und der Nichtgebrauchstellung N zumindest abschnittsweise bremst. Beispielsweise umfasst die Bremseinrichtung 54A einen Bremskörper 54B, der zwischen der Lagerbasis 23 und dem Lagerkörper 50A angeordnet ist. Beispielsweise ist als Bremskörper 54B ein Ringkörper, insbesondere ein O-Ring, vorgesehen, welcher zwischen der Lagerbasis 23 und der Stirnseiten-Lagerfläche 57 angeordnet ist. Beispielsweise greift der Bremskörper 54B in eine Nut an der Lagerbasis 23 und/oder eine in der Zeichnung nicht dargestellte Nut an der Stirnseiten-Lagerfläche 57 ein oder ist darin aufgenommen.

Der Stützkörper 40 ist anhand einer Befestigungseinrichtung 58 mit der Widerlagereinrichtung 50 verbunden. Die Befestigungseinrichtung 58 umfasst ineinander eingreifende Gewinde 326, 327 der Widerlagereinrichtung 50 und des Stützkörpers 40, beispielsweise am Außenumfang der Umfangswand 53 und am Innenumfang einer Durchtrittsöffnung 59 des Widerlagerkörpers 51, welche der Stützkörper 40 durchdringt.

Anhand der Befestigungseinrichtung 58 ist es möglich, eine jeweilige Längsposition des Stützkörpers 40 bezüglich der Schwenkachse S einzustellen. Somit kann insbesondere eine Distanz D zwischen einerseits den Kanälen 44 und andererseits der Widerlagerfläche 55 bei der Montage der Anhängekupplung 10 eingestellt werden. Dadurch ist eine optimale Fixierung in der Fixierstellung, der Ausgleich von Fertigungstoleranzen und dergleichen mehr möglich.

Zur Sicherung der Längsposition, die mit der Befestigungseinrichtung 58 eingestellt ist, dient vorzugsweise ein Sicherungselement 329, beispielsweise eine Madenschraube, die in eine Bohrung 58E eingeschraubt ist. Die Bohrung 58E ist beispielsweise an dem Stützkörper 40 vorgesehen. Die Madenschraube oder das Sicherungselement 329 ist beispielsweise in eine Schraubaufnahme an der Widerlagereinrichtung 50 eingeschraubt und/oder dringt in das Gewinde 326 ein, sodass eine Schraubbetätigung der Gewinde 326, 327 blockiert ist.

Auch die Verbindung zwischen dem Widerlagerkörper 51 und der Befestigungskörper 56 anhand der Gewinde 326, 327 kann durch ein Sicherungselement 58B, zum Beispiel ebenfalls eine Madenschraube, gesichert sein.

Zwischen dem Stützkörper 40 und dem Kupplungsarmträger 30 ist eine Drehmitnahmeeinrichtung 46 und/oder 146 vorgesehen. Die Drehmitnahmeeinrichtung 46 und/oder 146 realisiert eine Drehmitnahmekopplung zwischen dem Stützkörper 40 und dem Kupplungsarmträger 30 und letztlich den Kupplungsarm 11, sodass der Stützkörper 40, wenn er um die Drehachse oder Schwenkachse S angetrieben ist, den Kupplungsarm 11 zwischen der Nichtgebrauchsstellung N und der Gebrauchsstellung G verschwenken kann.

Die Drehmitnahmeeinrichtung 46 umfasst einen beispielsweise bolzenförmigen Drehmitnahmevorsprung 47, der beispielsweise nach radial außen vor den Stützkörper 40 im Bereich des Stützabschnitts 41 vorsteht und in eine Drehmitnahme-Aufnahme 36 am Kupplungsarmträger 30 eingreift. Die Drehmitnahme-Aufnahme 36 weist eine Längsgestalt parallel zur Schwenkachse S auf, sodass der Drehmitnahmevorsprung 47 in der Drehmitnahme-Aufnahme 36 bezüglich der Schwenkachse S längsverschieblich aufgenommen ist.

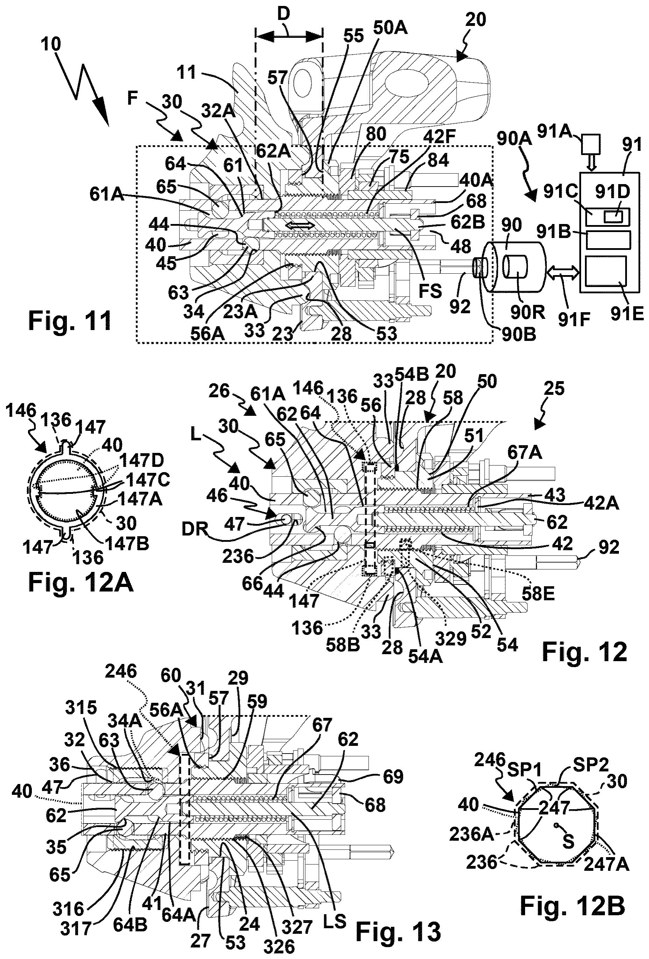

Alternativ kann der Drehmitnahmevorsprung 47 auch fest an dem Kupplungsarmträger 30 angeordnet sein und in eine Drehmitnahme-Aufnahme 236 am Stützkörper 40 eingreifen, was in Figur 12 angedeutet ist. Der Drehmitnahmevorsprung 47 steht also bezüglich der Schwenkachse S nach radial innen in Richtung des Stützkörpers 40 vor und greift in die langlochartige oder als Langloch ausgestaltete Drehmitnahme-Aufnahme 236 ein.

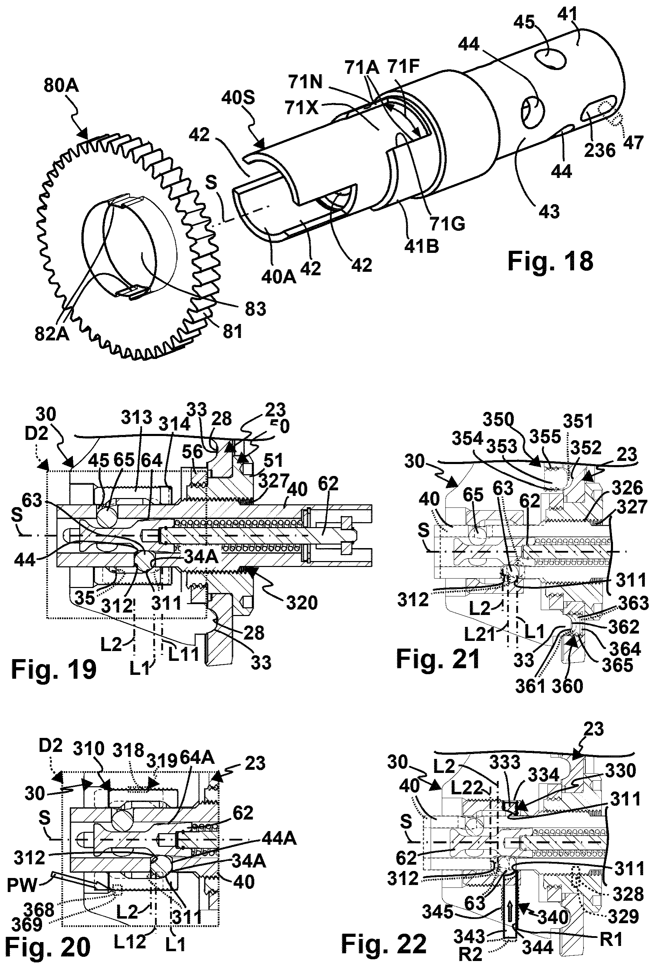

In Figur 18 sind die Drehmitnahme-Aufnahme 236 und der Drehmitnahmevorsprung 47 dargestellt, der in die Drehmitnahme-Aufnahme 236 eingreift. Beispielsweise könnte der Drehmitnahmevorsprung 47 auch ortsfest an der in Figur 18 dargestellten Position am Stützkörper 40 angeordnet sein, beispielsweise als eingeschraubter Bolzen, der dann in die bereits erläuterte Drehmitnahme-Aufnahme 36 am Kupplungsarmträger 30 eingreift.

Es versteht sich, dass weitere Paarungen von Drehmitnahmevorsprung 47 und Drehmitnahme-Aufnahme 36 oder 236 in Winkelabständen bezüglich der Schwenkachse S vorteilhaft sind, um die Drehmitnahme zu verbessern.

Mehrere Paarungen von Drehmitnahmevorsprung und Drehmitnahme-Aufnahme sind beispielsweise bei Drehmitnahmeeinrichtungen 146 und 246 realisiert. Die Drehmitnahmeeinrichtungen 146, 246 umfassen bezüglich der Schwenkachse S beabstandete, beispielsweise um 180° winkelbeabstandete, Paarungen von Drehmitnahmevorsprüngen 147, 247 und Drehmitnahme-Aufnahmen 136, 236, in die die Drehmitnahmevorsprünge 147, 247 eingreifen.

Beispielsweise stehen die Drehmitnahmevorsprünge 147 nach radial außen bezüglich der Schwenkachse S vor den Stützkörper 40 vor und greifen in die nach radial innen bezüglich der Schwenkachse S offenen Drehmitnahme-Aufnahmen 136 ein. Man erkennt aus der schematischen Zeichnung der Figur 12A, dass ein gewisses Drehspiel der Drehmitnahmevorsprünge 147 bezüglich der Drehmitnahme-Aufnahmen 136 vorteilhaft ist, damit die Formschlusselemente 28, 33 sozusagen ineinander finden können und/oder dass beim Ineinandergreifen der Formschlusselemente 28, 33, wenn diese bezüglich parallel zur Schwenkachse S aufeinander zu bewegt werden, eine relative Drehverstellung des Kupplungsarmträgers 30 relativ zum Lagerelement 23 möglich ist.

Die Drehmitnahmevorsprünge 147 könnten beispielsweise unmittelbar am Stützkörper 40 angeordnet sein, beispielsweise einstückig.

Bevorzugt ist jedoch ein Drehmitnahmekörper 147A, der am Stützkörper 40 befestigt ist. Der Drehmitnahmekörper 147A ist vorzugsweise ein Ringkörper oder Teilringkörper. Beispielsweise hat der Drehmitnahmekörper 147A eine Ausnehmung 147B, insbesondere eine Durchstecköffnung, in die der Stützkörper 40 eingreift.

Der Drehmitnahmekörper 147A ist verdrehfest bezüglich der Schwenkachse S an dem Stützkörper 40 gehalten. Der Drehmitnahmekörper 147A könnte auch einstückig mit dem Stützkörper 40 sein.

Vorteilhaft ist der Drehmitnahmekörper 147A im Presssitz und/oder formschlüssig an dem Stützkörper 40 gehalten.

Ein formschlüssiger, drehfester Halt des Drehmitnahmekörpers 147A an dem Stützkörper 40 ist bevorzugt, wozu beispielsweise Drehformschlusskonturen 147C des Drehmitnahmekörpers 147A in Eingriff mit Drehformschlusskonturen 147D des Stützkörpers 40 sind. Beispielsweise sind die Drehformschlusskonturen 147C als Vorsprünge, die Drehformschlusskonturen 147D als die Vorsprünge aufnehmende Aufnahmen ausgestaltet oder umgekehrt.

An dieser Stelle sei erwähnt, dass beispielsweise eine relative Längsverschieblichkeit des Kupplungsarmträgers 30 bezüglich des Stützkörpers 40 auch dadurch erreicht werden kann, dass der Drehmitnahmekörper 147A bezüglich der Schwenkachse S verschiebefest am Kupplungsarmträger 30 angeordnet ist, jedoch die Drehformschlusskonturen 147C und Drehformschlusskonturen 147D bezüglich der Schwenkachse S oder parallel zur Schwenkachse S relativ zueinander verschieblich sind. Beispielsweise könnten die Drehformschluss-Aufnahmen, zum Beispiel die Drehformschlusskonturen 147D, in Bezug auf die Schwenkachse S eine größere Längserstreckung aufweisen als die in die Drehformschluss-Aufnahmen eingreifenden Drehformschluss-Vorsprünge, zum Beispiel die Drehformschlusskonturen 147C.

Bei der Drehmitnahmeeinrichtung 246 ist vorgesehen, dass der Stützkörper 40 eine unrunde, beispielsweise polygonale, insbesondere oktogonale, Außenumfangskontur 247A aufweist, die in eine ebenfalls unrunde und vorzugsweise ebenfalls polygonale, insbesondere oktogonale, Innenumfangskontur 236A des Kupplungsarmträgers 30 eingreift. Die Außenumfangskontur 247A hat jedoch einen kleineren Durchmesser als die Innenumfangskontur 236A, sodass ein gewisses Drehspiel zwischen den Umfangskonturen 247A, 236A möglich ist. Beispielsweise stehen Kanten oder Außenecken der Außenumfangskontur 247A, die Drehmitnahmevorsprünge 236 bilden, zu der Innenumfangskontur 236A vor und schlagen an den Innenecken der Innenumfangskontur 236A, die Drehmitnahme-Aufnahmen 236 bilden, in einer Relativ-Drehposition SP2 der Innenumfangskontur 236A und der Außenumfangskontur 247A an. Zur Verdeutlichung eines Drehspiels zwischen der Innenumfangskontur 236A und der Außenumfangskontur 247A ist beispielhaft eine zweite Relativ-Drehposition SP1 in Figur 12B eingezeichnet, bei der die Innenumfangskontur 236A und die Außenumfangskontur 246A nicht in Dreh-Eingriff bezüglich der Schwenkachse S sind.

Nun wäre es prinzipiell möglich, dass der Drehmitnahmevorsprung 47 nur mit einem solchen Bewegungsspiel in der Drehmitnahme-Aufnahme 36 bezüglich der Schwenkachse S aufgenommen ist, dass zwar der Kupplungsarmträger 30 entlang der Schwenkachse S relativ zur Lagerbasis 23 verschieblich ist, jedoch verdrehfest gehalten ist. Dann könnte eine statische Überbestimmung zwischen den Formschlusselementen 28, 33 einerseits und der Drehmitnahmeeinrichtung 46 andererseits entstehen, beispielsweise eine Art Verklemmung. Um diesem Problem abzuhelfen, ist in Umfangsrichtung oder Drehrichtung bezüglich der Schwenkachse S zwischen dem Drehmitnahmevorsprung 47 und der Drehmitnahme-Aufnahme 36 ein Dreh-Bewegungsspiel DR vorhanden derart, dass die Formschlusselemente 28 und 33, wenn sie in Richtung der Fixierstellung F relativ zueinander bewegt werden und ineinander eingreifen, den Kupplungsarmträger 30 um die Schwenkachse S um ein vorbestimmtes, durch das vorgenannte Dreh-Bewegungsspiel DR begrenzte Maß dreh-betätigen, sodass die Formschlusselemente 28 und 33 sozusagen ineinander hinein finden oder eine optimale formschlüssige Relativposition einnehmen können.

Zum Antreiben des Kupplungsarms 11 zwischen der Nichtgebrauchstellung N und der Gebrauchsstellung G und zum Verstellen der Fixiereinrichtung 60 zwischen der Fixierstellung F und der Lösestellung L dient eine Antriebseinrichtung 90A.

Vorliegend ist die Anordnung so getroffen, dass die Antriebseinrichtung 90A die Fixiereinrichtung 60 von der Fixierstellung F in die Lösestellung L betätigt. In Richtung der Fixierstellung F ist die Fixiereinrichtung 60 durch eine Federanordnung 67 in Richtung ihrer Fixierstellung F belastet. Somit dient die Antriebseinrichtung 90A als Löseantrieb oder Entriegelungsantrieb für die Fixiereinrichtung 60, indem sie die Fixiereinrichtung 60 in Richtung der Lösestellung L betätigt. In die Gegenrichtung, also in die Fixierstellung F, wirkt die Federanordnung 67 auf den Fixierbetätigungskörper 62.

Die Federanordnung 67 umfasst beispielsweise eine Feder 67A, die am vom Stützkörper 40 bereitgestellten Führungskörper 40A und am Fixierbetätigungskörper 62 abgestützt ist, beispielsweise an in Richtung der Antriebseite 65 vorstehenden Längsende. Die Feder 67A stützt sich beispielsweise an einer Stufe 62A des Fixierbetätigungskörpers 62 und einem Stützelement 42A ab, welches bezüglich des Führungskanals 42 ortsfest am Führungskörper 40A festgelegt ist.

Das Stützelement 42A weist eine Durchtrittsöffnung auf, durch die ein Betätigungsende 62B des Fixierbetätigungskörpers 62 vorsteht, an dem ein Betätigungskörper 68 festgelegt ist. Der Betätigungskörper 68 steht nach radial außen bezüglich der Schiebeachse oder Schwenkachse S vor den Führungskanal 42 vor. Der Betätigungskörper 68 durchdringt Durchtrittsöffnungen 48 an der Umfangswand 43. Die Durchtrittsöffnungen 48 sind beispielsweise als Schlitze am Längsende des Führungskörpers 40A ausgestaltet, welches an der Armseite 26 angeordnet ist.

Der Betätigungskörper 68 weist seitlich vor den Stützkörper 40 vorstehende Arme 69 auf, die in den Durchtrittsöffnungen 48 bezüglich der Schiebeachse oder Schwenkachse S verschieblich sind, jedoch verdrehfest gehalten sind. Somit eignet sich der Betätigungskörper 68 einerseits zum Betätigen der Fixiereinrichtung 60, zum Beispiel in deren Lösestellung L durch ein Fixierantriebselement 75 eines Fixierantriebs 73, andererseits auch zum Schwenk-Betätigen des Stützkörpers 40 und somit des Kupplungsarmträgers 30 um die Schwenkachse S durch ein Schwenkantriebselement 80 eines Schwenkantriebs 74.

Das Fixierantriebselement 75 verstellt den Fixierbetätigungskörper 62 in Richtung der Lösestellung L. Das Schwenkantriebselement 80 treibt den Stützkörper 40 um die Schwenkachse S an, der somit anhand der Drehmitnahmeeinrichtung 46 den Kupplungsarm 11 zwischen der Gebrauchsstellung G und der Nichtgebrauchsstellung N verstellt.

Ein Antriebsmotor 90, der beispielsweise durch eine Steuerung 91 angesteuert oder ansteuerbar ist, treibt eine Abtriebswelle 92 an. Die Steuerung 91 umfasst beispielsweise ein sogenanntes Anhängersteuergerät und/oder ein Bedienelement, insbesondere einen Bedienschalter oder Bedienknopf. Die Steuerung 91 ist vorzugsweise so ausgestaltet, dass sie den Antriebsmotor 90 so lange bestromt, bis die jeweils angesteuerte Gebrauchsstellung G oder Nichtgebrauchstellung N erreicht ist. Die Steuerung 91 ist beispielsweise durch einen elektrischen Schalter 91A, einen Sensor oder dergleichen aktivierbar, um die nachfolgende Verstellung des Kupplungsarms 11 zwischen der Gebrauchsstellung G und der Nichtgebrauchstellung N anzusteuern.

Der Schalter 91A kann einen Bestandteil der Steuerung 91 bilden. Der Schalter 91A kann beispielsweise ortsfest am Kraftfahrzeug 200 angeordnet sein, beispielsweise in dessen Gepäckabteil, seinem Armaturenbrett oder dergleichen. Weiterhin kann der Schalter 91A einen Bestandteil einer drahtlosen Fernsteuerung bilden, beispielsweise eines Smartphones oder eines speziellen Bediengeräts, mit dem die Steuerung 91 ansteuerbar ist.

Die Steuerung 91 weist einen Prozessor 91B, beispielsweise einen Mikroprozessor sowie einen Speicher 91C auf, in welchem ein Steuerungsprogramm 91D gespeichert ist, anhand dessen Programmcode Steuerbefehle erzeugbar sind, mit denen der Prozessor 91B den Antriebsmotor 90 ansteuert.

Der Antriebsmotor 90 kann ein Getriebe 90B, insbesondere ein Planetengetriebe, umfassen und/oder ein elektrischer Antriebsmotor sein. Das Getriebe 90B kann einen integralen Bestandteil des Antriebsmotors 90 bilden, beispielsweise in dessen Gehäuse angeordnet sein. An der Abtriebswelle 92 ist sind ein Fixier-Abtriebselement 93 und ein Schwenk-Abtriebselement 94, beispielsweise Zahnräder, drehfest angeordnet. Die Abtriebselemente 93, 94 kämmen mit ihren an ihrem Außenumfang angeordneten Zahnkränzen mit dem Fixierantriebselement 75 und dem Schwenkantriebselement 80 und treiben diese an.

Die Abtriebswelle 92 und treibt das Fixier-Abtriebselement 93 und das Schwenk-Abtriebselement 94 um eine gemeinsame Drehachse AN an. Beide Abtriebselemente 93 und 94 drehen mit derselben Drehzahl der Abtriebswelle 92 und sind koaxial bezüglich der Drehachse AN.

Die Drehachse AN ist vorteilhaft parallel zur Schwenkachse S. Die Drehachse AN könnte aber auch beispielsweise schräg zur Schwenkachse S verlaufen. Dann könnten beispielsweise die Abtriebselemente 93 und 94 jeweils als Kegelräder ausgestaltet sein.

Auch das Fixierantriebselement 75 und das Schwenkantriebselement 80 sind koaxial angeordnet, nämlich koaxial bezüglich einer Drehachse AB, um die sie drehbar angeordnet und durch die Abtriebselemente 93 und 94 antreibbar sind.

Die Drehachse AB ist parallel zur Schwenkachse S, vorzugsweise koaxial zur Schwenkachse S.

Das Fixierantriebselement 75 und das Schwenkantriebselement 80 weisen an ihrem radialen Außenumfang bezüglich der Drehachse AB Zahnkränze 76, 81 auf, die mit Zahnkränzen 95, 96 des Fixier-Abtriebselements 93 und des Schwenk-Abtriebselements 94 kämmen. Das Fixierantriebselement 75 und das Schwenkantriebselement 80 werden simultan angetrieben.

Der Zahnkranz 81 hat einen größeren Radius bezüglich der Drehachse AB als der Zahnkranz 76. Der Zahnkranz 95 hat einen kleineren Radius als der Zahnkranz 96 bezüglich der Drehachse AN. Somit treibt also bei gleicher Drehzahl der Drehachse AN das Fixier-Abtriebselement 93 das Fixierantriebselement 75 mit höherer Geschwindigkeit an, als das Schwenk-Abtriebselement 94 das Schwenkantriebselement 80 antreibt, sodass ausgehend von einem Beginn des Drehantriebs das Fixierantriebselement 75 dem Schwenkantriebselement 80 vorauseilt. Diese Maßnahme trägt dazu bei, dass das Lösen der Fixierung, also das Verstellen der Fixiereinrichtung 60 aus der Fixierstellung F in Richtung der Lösestellung L vor der Schwenkbewegung des Kupplungsarms 11 einsetzen kann.

Das Fixierantriebselement 75 und das Schwenkantriebselement 80 weisen Durchtrittsöffnungen 78, 83 auf, die von dem Stützkörper 40 durchdrungen sind. Die Durchtrittsöffnungen 78, 83 sind von einem Antriebsabschnitt 41B des Stützkörpers 40 durchdrungen, der zur Armseite 26 der Lagerbasis 23 vorsteht.

Das Fixierantriebselement 75 und das Schwenkantriebselement 80 weisen Hülsenkörper oder hülsenartige Vorsprünge 79, 84 auf. Die Vorsprünge oder Hülsenkörper 79, 84 stehen von Abschnitten des Fixierantriebselements 75 und Schwenkantriebselements 80, die die Zahnkränze 76 und 81 aufweisen, zum freien Ende des Antriebsabschnitts 41 des Stützkörpers 80 vor.

Der Zahnkranz 81 ist bezüglich der Schwenkachse S näher bei dem Lagerbasiskörper oder der Lagerbasis 23 angeordnet als der Zahnkranz 75.

Die Vorsprünge oder Hülsenkörper 79, 84 sind sozusagen ineinander geschachtelt. Der Hülsenkörper oder Vorsprung 84 des Schwenkantriebselements 80 ist radial innen bezüglich der Schwenkachse S angeordnet, und ist zumindest teilweise in einem Innenraum des radial bezüglich der Schwenkachse S weiter außen liegenden Hülsenkörpers oder Vorsprungs 79 des Fixierantriebselements 75 angeordnet. Mithin nimmt also die Durchtrittsöffnung 78 des Fixierantriebselements 75 auch den Hülsenkörper oder Vorsprung 84 des Schwenkantriebselements 80 auf.

Das Fixierantriebselement 75 weist eine Fixierbetätigungskontur 77 zur Betätigung der Fixiereinrichtung 60 auf.

Das Schwenkantriebselement 80 weist eine Schwenkbetätigungskontur 82 zur Schwenk-Betätigung des Kupplungsarms 11 über den Stützkörper 40 sowie den Kupplungsarmträger 30 auf.

Die Fixierbetätigungskontur 77 ist am Hülsenkörper oder Vorsprung 79 angeordnet, die Schwenkbetätigungskontur 82 am Hülsenkörper oder Vorsprung 84.

Die Fixierbetätigungskontur 77 eine zahnartige Gestalt. Vorzugsweise ist die Fixierbetätigungskontur als eine Betätigungskulisse ausgestaltet. Die Fixierbetätigungskontur 77 ist beispielsweise an einem freien, stirnseitigen Endbereich des Hülsenkörpers oder Vorsprungs 79 angeordnet.

In Bezug auf die Schwenkachse S einander gegenüberliegend sind an der Fixierbetätigungskontur 77 Betätigungsvorsprünge 77A vorgesehen, von denen jeder einem der Arme 69 des Betätigungskörpers 68 zugeordnet ist. Die Betätigungsvorsprünge 77A sind in der Art von Zähnen ausgestaltet. Jeder Betätigungsvorsprung 77A hat eine in einer Wirkungsrichtung WI oder Betätigungsrichtung ansteigende Rampe 77B und eine bezüglich der Wirkungsrichtung WI oder Betätigungsrichtung absteigende Rampe 77C, zwischen denen ein Halteabschnitt 77D angeordnet ist. Die Rampen 77B, 77C erstrecken sich von einem Freigabeabschnitt 77E in Richtung des Halteabschnitts 77D.

Die Freigabeabschnitte 77E, die sozusagen zwischen den Betätigungsvorsprüngen 77A angeordnet sind, und die Halteabschnitte 77D liegen vorzugsweise in zu der Schwenkachse S, die zugleich die Schiebeachse des Verstellantriebs 61 darstellt, senkrechten Ebenen und/oder zueinander parallelen Ebenen.

Bei einem Verdrehen des Fixierantriebselements 75 um seine Drehachse, vorliegend um die Schwenkachse S, wirkt die Fixierbetätigungskontur 77 auf den Betätigungskörper 68, um den Fixierbetätigungskörper 62 zwischen der Löse-Stellposition LS und der Fixier-Stellposition FS zu verstellen.

Beispielsweise gleiten Betätigungskonturen 70 des Betätigungskörpers 68, an der Fixierbetätigungskontur 77 entlang. Die Betätigungskonturen 70 sind zweckmäßigerweise an den Armen 69 des Betätigungskörpers 68, insbesondere an deren freien Endbereichen, angeordnet. Die Betätigungskonturen 70 sind vorzugsweise ausgerundet und/oder schrägverlaufend und/oder in der Art von Kufen ausgestaltet, was ein Entlanggleiten der Betätigungskonturen 70 an der Fixierbetätigungskontur 77 erleichtert.

In der Lösestellung befinden sich die Betätigungskonturen 70 im Bereich der Freigabeabschnitte 77E, sodass das Fixierantriebselement 75 den Fixierbetätigungskörper 62 nicht oder nur in einem geringen Maße in Richtung der Löse-Stellposition LS betätigt. Jedenfalls ist die Federanordnung 67 dazu ausgestaltet, in dieser Position des Fixierbetätigungskörpers 20 den Fixierbetätigungskörper 62 derart weit in Richtung der Fixier-Stellposition FS zu verstellen, dass die Spannkontur 64A im Bereich der Formschlusskörper 63 ist, um die Formschlusskörper 63 in Richtung der Formschlussaufnahme 34 , insbesondere der Spannschräge 34A, im Sinne eines Verspannens des Kupplungsarmträgers 30 mit der Lagerbasis 40 betätigen.

Bei einem Verdrehen des Fixierantriebselements 75 um die Schwenkachse S gleiten die Betätigungskonturen 70 an den von den Freigabeabschnitten 77E in Richtung der Halteabschnitt 77D ansteigenden Rampen 77B entlang, sodass die Drehbewegung des Fixierantriebselements 75 um die Schwenkachse S in eine Linearbewegung umgelenkt wird. Dabei betätigt die Fixierbetätigungskontur 77 den Fixierbetätigungskörper 62 in Richtung seiner Löse-Stellposition LS. Im Bereich der Halteabschnitte 77D hält die Fixierbetätigungskontur 77 den Fixierbetätigungskörper 62 in der Löse-Stellposition LS. Bei einem Weiterdrehen des Fixierantriebselements 75 um die Schwenkachse S, wird der Fixierbetätigungskörper 62 wieder in Richtung der Freigabe-Stellposition FS freigegeben oder betätigt, indem nämlich die Betätigungskontur 70 an den von den Halteabschnitten 77D in Richtung der Freigabeabschnitte 77E abfallenden Rampen 77C entlanggleiten kann. Dadurch wird der Fixierbetätigungskörper 62 zur Betätigung in Richtung der Löse-Stellposition LS durch die Federanordnung 67 freigegeben.

Wenn in nicht dargestellter Weise der Fixierbetätigungskörper 62 mit dem Kupplungsarmträger 30 dreh-gekoppelt ist oder bezüglich des Kupplungsarmträgers 30 verdrehfest ist, jedoch bezüglich des Stützkörpers 40 verdrehbar wäre, beispielsweise wenn die Arme 69 relativ zum Stützkörper 40 um die Schwenkachse S drehen können, könnte der Fixierbetätigungskörper 62 als Drehantriebskörper oder Schwenkantriebskörper für den Kupplungsarmträger 30 dienen, ohne dass dabei der Stützkörper 40 um die Schwenkachse S schwenkt.

Die Schwenkbetätigungskontur 82 ist zur Schwenkbetätigung des Stützkörpers 40 ausgestaltet und vorgesehen. Der Stützkörper 40 seinerseits treibt den Kupplungsarmträger 30 um die Schwenkachse S an. Allerdings wirkt die Schwenkbetätigungskontur 82 nicht direkt auf den Stützkörper 80, sondern auf den Fixierbetätigungskörper 62, nämlich dessen Betätigungskörper 68, der bezüglich der Schwenkachse S zwar verschieblich, jedoch verdrehfest am Stützkörper 40 gehalten ist. Die Arme 69 oder der Betätigungskörper 68 bildet eine Schwenkmitnahmekontur 71 zur Betätigung durch das Schwenkantriebselement 80.

Die Arme 69 durchdringen nämlich die Durchtrittsöffnung 48 mit einem minimalen Drehspiel bezüglich der Schwenkachse S, welches als Bewegungsspiel für eine lineare Beweglichkeit des Betätigungskörpers 68 an dem Stützkörper 40 notwendig ist.

Die Schwenkbetätigungskontur 82 umfasst Drehanschläge 82G, 82N, die einer Schwenkbetätigung des Kupplungsarms 11 in Richtung der Gebrauchsstellung G und der Nichtgebrauchstellung N zugeordnet sind. Beispielsweise dreht das Schwenkantriebselement 80 mit einer Drehrichtung DG zur Betätigung des Kupplungsarms 11 in Richtung der Gebrauchsstellung G. Die Drehrichtung DG ist beim Ausführungsbeispiel und somit nicht einschränkend für die Erfindung im Gegenuhrzeigersinn mit Blickrichtung auf die Antriebseite 25 der Lagerbasis 23, während die Drehrichtung DN im Uhrzeigersinn verläuft. Jedenfalls sind die Drehrichtungen DG und DN einander entgegengesetzt.

Zwischen dem Schwenkantriebselement 80 und dem Kupplungsarm 11 wirken Drehmitnahmekonturen, die keine Drehzahlveränderung zwischen einerseits dem Schwenkantriebselement und andererseits dem Kupplungsarm 11 bewirken, beispielsweise die Drehanschläge 82G und 82N sowie die Drehmitnahmekopplung zwischen dem Stützkörper 40 und dem Fixierbetätigungskörper 62.

Simultan zur Drehbewegung des Fixierantriebselements 75 um die Schwenkachse S verläuft die Drehbewegung des Schwenkantriebselements 80, allerdings mit geringerer Geschwindigkeit.

Damit während einer Phase des Verstellens der Fixiereinrichtung 60 aus der Fixierstellung F in die Lösestellung L bzw. des Verstellens des Fixierbetätigungskörpers 62 aus der Fixier-Stellposition FS in Richtung der Löse-Stellposition LS noch keine Schwenk-Antriebskraft auf den Stützkörper 40 wirkt, der sozusagen einen Dreh-Antriebskörper für den Kupplungsarm 11 bzw. den Kupplungsarmträger 30 darstellt, ist ein Freigang 82F vorgesehen. Der Freigang 82F ist dadurch gebildet, dass die Drehanschläge 82G, 82N in Bezug auf die Schwenkachse S einen derart großen Winkelabstand aufweisen, dass die Arme 69 des Betätigungskörpers 68 mit einem Drehspiel bezüglich der Schwenkachse S zwischen den Drehanschlägen 82G und 82N beweglich sind. Somit bewegt sich zwar durch den simultanen Antrieb des Fixierantriebselements 75 und des Schwenkantriebselements 80 zwar bereits einer der Drehanschläge 82G und 82N auf den zur Drehbetätigung des Stützelements 40 vorgesehenen Betätigungskörper 68 zu, ist aber so lange noch nicht in dreh-antreibendem Kontakt mit dem Betätigungskörper 68, bis die Fixierbetätigungskontur 77 die Fixiereinrichtung 60 durch Betätigen des Fixierbetätigungskörpers 62 aus der Fixierstellung F in die Lösestellung L betätigt hat.

An dieser Stelle sei erwähnt, dass zusätzlich zu dem Freigang 82F oder alternativ zu dem Freigang 82F auch ein Freigang des Betätigungskörpers 68 bezüglich des Stützkörpers 40 um die Schwenkachse S möglich ist, beispielsweise durch einen größeren Abstand zwischen den parallel zur Schwenkachse S verlaufenden Längsseiten der Durchtrittsöffnung 48 und/oder eine geringere Querbreite der Arme 69 bezüglich dieser Längsseiten, sodass die Arme 69 und somit der Betätigungskörper 68 mit einem Drehspiel bezüglich der Schwenkachse S in der Durchtrittsöffnung 48 aufgenommen sind. Durch die Kombination dieses Drehspiels um die Schwenkachse S zwischen der Drehmitnahmekonturen bereitstellenden Durchtrittsöffnung 48 und dem Betätigungskörper 68 und dem Freigang 82F kann auch ein insgesamt größerer Freigang zwischen dem Schwenkantriebselement 80 und dem angetriebenen Stützkörper 40 bereitgestellt sein.

Wenn der Kupplungsarmträger 30 drehbar bezüglich der Lagerbasis 23 ist, d. h. entlang der Schwenkachse S von der Lagerbasis 23 weg verschoben ist und somit die Lösestellung L erreicht ist, gelangt der Drehanschlag 82G bei einer Verstellung des Kupplungsarms 11 in Richtung der Gebrauchsstellung G oder der Drehanschlag 82N bei einer Verstellung des Kupplungsarms 11 in Richtung der Nichtgebrauchsstellung N in drehantreibenden Eingriff mit dem Stützkörper 40, nämlich indirekt über den Fixierbetätigungskörper 62 oder dessen Betätigungskörper 68. Sobald die Formschlusselemente 28 und 33 ausgehend von der Nichtgebrauchsstellung N oder der Gebrauchsstellung G um ein gewisses Maß relativ zueinander verdreht sind und somit nicht mehr in Eingriff miteinander gelangen können, kann die Fixiereinrichtung 60 zu einer Verstellung aus der Lösestellung L in die Fixierstellung F freigegeben werden. Die Formschlusselemente 28 und 33 sind nämlich derart ausgestaltet, dass sie Nichtgebrauchsstellung N oder der Gebrauchsstellung G ineinander eingreifen können.

Während der jeweils antreibende Drehanschlag 82G oder 82N nach Verlassen der jeweiligen Ausgangsstellung, also der Nichtgebrauchstellung N oder der Gebrauchsstellung G, den Stützkörper 40 und somit den Kupplungsarm 11 weiter antreibt, können die Betätigungskonturen 70 an den Rampen 77C entlang gleiten, wodurch der Fixierbetätigungskörper 62 zur Verstellung in Richtung der Fixier-Stellposition FS durch die Federanordnung 67 freigegeben wird. Noch vor Erreichen der jeweiligen Nichtgebrauchstellung N oder Gebrauchsstellung G wirkt die Federanordnung 67 im Sinne einer Verstellung in die Fixierstellung F auf die Fixiereinrichtung 60 ein, sodass die Formschlusselemente 28, 33 im Sinne eines Ineinandereingreifens belastet sind und bei Erreichen der jeweiligen Nichtgebrauchstellung N oder Gebrauchsstellung G ineinander eingreifen und den Kupplungsarm 11 drehfest bezüglich der Schwenkachse S an der Lagerbasis 23 und somit der Fahrzeughalterung 20 fixieren.

Bei einem Stützkörper 40S, der alternativ zum Stützkörper 40 bei der Anhängekupplung 10 vorgesehen sein kann, erfolgt die Drehmitnahme des Schwenkantriebs unmittelbar mit dem Stützkörper 40S, indem nämlich ein Schwenkantriebselement 80A unmittelbar in Dreh-Eingriff mit dem Stützkörper 40S ist. Das Schwenkantriebselement 80A entspricht im Wesentlichen dem Schwenkantriebselement 80 und kann beispielsweise in einer dieser entsprechenden Position am Stützkörper 40S vorgesehen sein. Beispielsweise ist am Außenumfang des Schwenkantriebselements 80A der Zahnkranz 81 vorgesehen, mit dem das Schwenk-Abtriebselement 94 kämmt.

Am Innenumfang der Durchtrittsöffnung 83 des Schwenkantriebselements 80A ist eine Schwenkmitnahmekontur sind Schwenkbetätigungskonturen 82A angeordnet, nämlich beispielsweise in der Art von Zähnen oder Vorsprünge, die nach radial innen bezüglich der Schwenkachse S in die Durchtrittsöffnung 83 vorstehen. Die Schwenkbetätigungskonturen 82A sind in Eingriff mit Schwenkmitnahmekonturen 71A, die jedoch unmittelbar am Stützkörper 40S und nicht an einem an diesem beweglich gelagerten Bauteil angeordnet sind.

Die Schwenkmitnahmekonturen 71A umfassen Drehanschläge 71G und 71N, die der Schwenkverstellung des Kupplungsarms 11 in Richtung der Gebrauchsstellung G oder der Nichtgebrauchsstellung N zugeordnet sind. Zwischen den Drehanschlägen 71G und 71N ist ein Winkelabstand bezüglich der Schwenkachse S vorhanden, der größer ist als eine Bogenlänge oder Winkelerstreckung der Vorsprünge oder Schwenkbetätigungskonturen 82A bezüglich der Schwenkachse S, sodass dadurch ein Freigang 71F gebildet ist. Mithin sind also die Schwenkbetätigungskonturen oder Vorsprünge 82A bezüglich der Schwenkachse S zwischen den Drehanschlägen 71G und 71N mit einem derartigen Drehspiel 71G und 71N beweglich aufgenommen, dass die Fixierbetätigungskontur 77 bei einer Verstellung von der Gebrauchsstellung G in die Nichtgebrauchstellung N oder umgekehrt vor einem Schwenkantreiben des Stützkörpers 40S und somit des Kupplungsarms 11 zunächst die Fixiereinrichtung 60 aus der Fixierstellung F in die Lösestellung L betätigt. Die Drehanschläge 71G und 71N sind beispielsweise Seitenflanken einer Nut 71X, die am Außenumfang der Umfangswand 43 des Stützkörpers 40S angeordnet ist.

Als zusätzliche und/oder vorteilhafte Sicherungsmaßnahme ist eine Sicherungseinrichtung 100 vorgesehen, die zur Blockierung der Fixiereinrichtung 60 in der Fixierstellung F vorgesehen ist. Die Sicherungseinrichtung 100 umfasst ein Sicherungsglied 101, welches in einer Sicherungsstellung BS an einer Blockierkontur 72 der Fixiereinrichtung 60 anliegt und somit dessen Verstellung aus der Fixierstellung F in Richtung der Lösestellung L blockiert.

Das Sicherungsglied 101 umfasst beispielsweise einen Schwenkarm, der an einem Schwenklager 103 um eine Schwenkachse SI schwenkbar gelagert ist. Im Abstand zu dem Schwenklager 103, beispielsweise an oder nahe bei einem freien Endbereich 105 des Schwenkarms 102, ist an dem Schwenkarm 102 eine Sicherungskontur 104 vorgesehen, welche in der Sicherungsstellung oder Blockierstellung BS in Eingriff mit der Blockierkontur 72 ist. Beispielsweise weisen die Arme 69 jeweils eine Blockierkontur 72 auf, wobei in der Gebrauchsstellung G das Sicherungsglied 101 mit der einen Blockierkontur 72 und in der Nichtgebrauchstellung N mit der anderen Blockierkontur 72 in Eingriff ist und somit in beiden Stellungen ein Lösen der Fixiereinrichtung 60 blockiert.

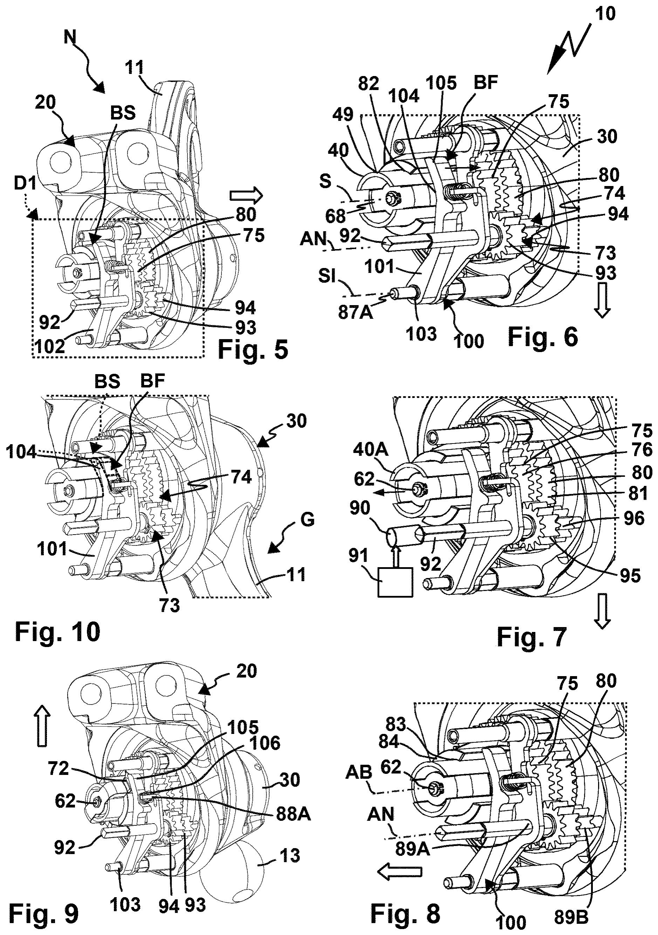

Zum Lösen der Sicherungseinrichtung 100, also zur Verstellung des Sicherungsglieds 101 von der jeweils aktuell blockierten Blockierkontur 72 weg, dient die Fixierbetätigungskontur 77, die insoweit auch eine Sicherung-Betätigungskontur bildet. Der Schwenkarm 102 oder das Sicherungsglied 101 liegt nämlich mit seinem freien Endbereich 105 an der Fixierbetätigungskontur 77 an und wird bei einer Drehbetätigung der Fixierbetätigungskontur 77 um die Schwenkachse S nach radial außen bezüglich der Schwenkachse S ausgelenkt. Dabei wird die Sicherungskontur 104 von der Blockierkontur 72 weg und außer Eingriff mit der Blockierkontur 72 in eine Freigabestellung BF der Sicherungseinrichtung 100 betätigt, sodass der Fixierbetätigungskörper 62 und mithin die Fixiereinrichtung 60 zu einer Verstellung aus der Fixierstellung F in die Lösestellung L freikommt oder beweglich ist. Beispielsweise wird das Sicherungsglied 101 durch eine der Rampen 77B oder 77C in die Freigabestellung BF ausgelenkt. Es ist möglich, dass das Sicherungsglied 101 am Außenumfang des Vorsprungs 79 abgestützt ist, während die Fixierbetätigungskontur 77 die Fixiereinrichtung 60 aus der Fixierstellung F in die Lösestellung L betätigt. In Figur 10 ist die Sicherungskontur 104 in durchgezogenen Linien in der Freigabestellung BF dargestellt, in gestrichelten Linien in der Sicherungsstellung BS.

Das Sicherungsglied 101 ist durch eine Federanordnung 106 in Richtung der Blockierstellung BS belastet. Die Federanordnung 106 umfasst beispielsweise eine Feder 107, die einerseits am Schwenkarm 102 oder Sicherungsglied 101, andererseits an einer Stütze 88A, die bezüglich der Lagerbasis 23 ortsfest ist, abgestützt ist. Wenn also die Fixierbetätigungskontur 77 nicht mehr im Sinne eines Verstellens aus der Blockierstellung BS in Richtung der Freigabestellung BF auf das Sicherungsglied 101 einwirkt, verstellt die Feder 107 oder Federanordnung 106 das Sicherungsglied 101 in die Blockierstellung BS.

Das Schwenklager 103 ist an einer Stütze 87A vorgesehen, die vor die Lagerbasis 23 zur Antriebseite 25 vorsteht. Die Stütze 18 A ist beispielsweise säulenartig ausgestaltet oder als Stützvorsprung ausgestaltet.

An der Stütze 87A sowie einer weiteren, bezüglich der Schwenkachse S in einem Winkelabstand an der Lagerbasis 23 vorgesehenen Stütze 87B ist ein Abstützglied 88 abgestützt, welches vorzugsweise das Sicherungsglied 101 bzw. den Schwenkarm 102 abstützt, insbesondere nahe beim freien Ende 105 oder der Sicherungskontur 104. Beispielsweise gleitet das Sicherungsglied 101 an einer von der Lagerbasis 23 abgewandten Seite des Abstützglieds 88 bei einer Verstellung zwischen der Sicherungsstellung BS und der Freigabestellung BF entlang. Ferner ist die Stütze 88A für die Feder 107 am Abstützglied 88 vorgesehen. Die Stütze 88A ist beispielsweise als Stützvorsprung ausgestaltet.

Vorteilhaft ist es, wenn die Abtriebswelle 92 an der Lagerbasis 23 drehbar gelagert ist. Beispielsweise sind Lager 89A und 89B am Abstützglied 88 sowie unmittelbar an der Lagerbasis 23 für die Abtriebswelle 92 vorgesehen.

Die Formschlusselemente 28 der Lagerbasis 23 umfassen Formschlussaufnahmen 28A, 28B und 28C, in die Formschlussvorsprünge 33A, 33B und 33C, welche die Formschlusselemente 30 bilden, in der Gebrauchsstellung G und der Nichtgebrauchstellung N formschlüssig hineinpassen, jedoch in einen anderen Winkelpositionen des Kupplungsarmträgers 30 relativ zur Lagerbasis 23 bezüglich der Schwenkachse S nicht hinein gelangen können.

Die Formschlussvorsprünge 33A sind bezüglich der Schwenkachse S einander diametral gegenüberliegend an der Stirnfläche 31 angeordnet. Dazu passend sind auch die Formschlussaufnahmen 28A einander diametral bezüglich der Schwenkachse S gegenüberliegend an der Stirnfläche 27 angeordnet.

Um einen Winkel von 90° bezüglich der Schwenkachse S versetzt zu den Formschlussvorsprüngen 33A und Formschlussaufnahmen 28A sind die Formschlussvorsprünge 33C und 28C an den Stirnflächen 31 und 27 angeordnet. Zwischen jedem Formschlussvorsprüngen 28A, 28C ist jeweils ein Formschlussvorsprüngen 28B und zwischen jeder Formschlussaufnahme 33A, 33C ist jeweils eine Formschlussaufnahme 33B angeordnet. Mithin sind also die Formschlussvorsprünge 33A-33C und die Formschlussaufnahmen 28A-28C ringförmig um die Schwenkachse S an den Stirnflächen 31, 27 angeordnet.

Die Formschlussvorsprünge 33A und die Formschlussaufnahmen 28A sind beispielsweise kugelförmig oder kugelig. Bei einer Ausgestaltung sämtlicher Formschlusselemente 28, 33 der Art der Formschlussvorsprünge 33A und Formschlussaufnahmen 28A wäre der Kupplungsarmträger 30 relativ zur Lagerbasis 23 in mehreren Winkelpositionen zwischen der Gebrauchsstellung G und der Nichtgebrauchstellung N entlang der Schwenkachse S verschieblich derart, dass die Formschlusselemente 28, 33 in die Fixierstellung F gelangen könnten. Dann wäre die Schwenkbewegung des Kupplungsarms 11 vor Erreichen der Nichtgebrauchsstellung N oder Gebrauchsstellung G beendet, wenn nämlich beispielsweise die Fixiereinrichtung 60 federbelastet in die Fixierstellung F ist. Dagegen ist jedoch Abhilfe getroffen:
Die Formschlussvorsprünge 33B, 33C und die Formschlussaufnahmen 28B, 28C haben eine Längsgestalt. Beispielsweise erstrecken sich die Formschlussvorsprünge 33B, 33C und die Formschlussaufnahmen 28B, 28C entlang von Längsachsen LB und LC. Die Längsachsen LB und LC sind vorzugsweise parallel zueinander oder in einem Winkel von weniger als 10°, insbesondere weniger als 5° zueinander geneigt.

Die Formschlussvorsprünge 33B, 33C und die Formschlussaufnahmen 28B, 28C weisen in Umfangsrichtung bezüglich der Schwenkachse S größere Längen A1 und A2 auf als ihre Länge Q1, Q2 quer zu den Längen A1 oder A2 und/oder in radialer Richtung bezüglich der Schwenkachse S. Die Längen Q1, Q2 könnte man auch als Querbreiten bezeichnen.

Jedenfalls reicht die Länge A2 der Formschlussvorsprünge 33C in jeder Drehposition des Kupplungsarmträgers 30 bezüglich der Lagerbasis 23 bei einer Verschwenkung um die Schwenkachse S aus, dass die freien Endbereiche der Formschlussvorsprünge 33C entweder vollflächig auf der Stützfläche 27 angeordnet sind oder die Formschlussaufnahmen 28A, 28B überbrückend auf der Stützfläche 27 abgestützt sind. Durch die diametrale Anordnung der Formschlussvorsprünge 33C bezüglich der Schwenkachse S wird zudem ein Verkippen des Kupplungsarmträgers 30 bezüglich der Lagerbasis 23 um zur Schwenkachse S quer verlaufende Schwenkachsen oder Kippachsen effektiv verhindert.

Weiterhin vorteilhaft ist es, dass die Längserstreckungen der Formschlussaufnahmen 28B, 28 C und die zugeordneten Formschlussvorsprünge 33B, 33C in der Gebrauchsstellung G, vorzugsweise auch der Nichtgebrauchstellung N, etwa vertikal verlaufen. Die Formschlussaufnahmen 28B, 28 C und die Formschlussvorsprünge 33B, 33C liegen mit Seitenkonturen 28Y, 33Y in Y-Richtung oder vertikaler Richtung aneinander an. Die Seitenkonturen 28Y, 33Y sind jedenfalls länger als Seitenkonturen 28X, 33X, die in Gebrauchslage in X-Richtung oder horizontaler Richtung verlaufen. Durch die vergleichsweise langen Seitenkonturen 33Y können beispielsweise in X-Richtung oder Fahrzeuglängsrichtung des Kraftfahrzeugs 200 auftretende Kräfte, zum Beispiel Zugkräfte beim Beschleunigen oder Schubkräfte beim Abbremsen des Gespanns bestehend aus Zugfahrzeug 200 und Anhänger 300 optimal abgestützt werden.

Für eine Verspannung der Formschlusselemente 28, 33 ineinander in der Fixierstellung F ist der Formschlusskörper 63 zwischen der Spannschräge 34A und dem Kanal 44, in dem der Formschlusskörper 63 geführt ist, durch die Spannkontur 64A des Fixierbetätigungskörpers 62 verspannt. Der Kanal 44 bildet eine Formschlusskörper-Führung 44A oder Formschlusskörper-Führungskontur. Zu einer derartigen Verspannung kommt es also auf die Position des Kanals 44 relativ zur Spannschräge 34A in der Fixierstellung F an, in der die Formschlusselemente 28, 33 miteinander in Eingriff sind. Die Spannschräge 34A stellt eine Fixierfläche 311 und der Kanal 44 stellt eine Fixierfläche 312 bereit, an dem der durch den Fixierbetätigungskörper 62 in die Fixierstellung oder Spannstellung beaufschlagte Formschlusskörper 63 abgestützt ist.

Nun kann durch eine zuverlässige und exakte Materialbearbeitung grundsätzlich gewährleistet sein, dass die vorgenannte sozusagen ideale Position der Fixierflächen 311 und 312 sowie anderer Fixierflächen, die nachfolgend noch erläutert werden, ohne zusätzliche Maßnahmen erzielbar ist. In der Praxis können jedoch Fertigungstoleranzen auftreten. Auch Verschleiß der Anhängekupplung kann eine zuverlässige Fixierung oder einen zuverlässigen Eingriff der Formschlusselemente 28, 33 ineinander in der Fixierstellung F beeinträchtigen. Dagegen sind folgende Maßnahmen vorteilhaft:
Ein fester Sitz der Formschlusselemente 28, 33, insbesondere eine Verspannung derselben, in der Fixierstellung F der Fixiereinrichtung 60 ist beispielsweise dann realisiert, wenn die Fixierfläche 311 eine Längsposition L1 und die Fixierfläche 312 eine Längsposition L2 bezüglich des Kupplungsarmträgers 23 einnehmen.

Eine Relativposition der Fixierflächen 311 und 312 ist durch eine Einstelleinrichtung 310 einstellbar.

Zur Bereitstellung der Einstelleinrichtung 310 ist beispielsweise die Formschlussaufnahme 34 an einem Fixierstützkörper 313 angeordnet, der in einer Aufnahme 314 des Kupplungsarmträgers 30 bezüglich der Schwenkachse S längsverstellbar aufgenommen ist. Der Fixierstützkörper 313 ist beispielsweise ein zylindrischer Körper, der in der zylindrischen Aufnahme 314 aufgenommen ist. Die Aufnahme 314 ist von der Schwenkachse S durchsetzt. Der Fixierstützkörper 313 ist in der Aufnahme 314 anhand eines Gewindes 315 bezüglich der Schwenkachse S längsverstellbar. Das Gewinde 315 umfasst beispielsweise einen Außengewinde 316 am Fixierstützkörper 313, welches in ein Innengewinde 317 am Innenumfang der Aufnahme 314 eingeschraubt oder einschraubbar ist. Anhand des Gewindes 315 ist eine Längsposition des Fixierstützkörpers 313 bezüglich der Schwenkachse S an dem Kupplungsarmträger 30 einstellbar.

Wenn also beispielsweise der Fixierstützkörper 313 an dem Kupplungsarmträger 30 ausgehend von einer Lage, bei der die Fixierstützfläche 311 die Längsposition L1 einnimmt, in einem Sinne zu der Lagerbasis 23 hin verstellt ist, nimmt die Fixierfläche 311 eine Längsposition L11 ein (Figur 19). Man erkennt, dass in diesem Fall beispielsweise der Formschlusskörper 63 nicht an der Spannschräge 34A, also der Fixierfläche 311, im Sinne einer Verspannung anliegen kann. Somit kann es sein, dass die Formschlusselemente 28, 33 nicht ausreichend weit in Eingriff miteinander gelangen, um eine zuverlässige Fixierung der Anhängekupplung 10 in der Gebrauchsstellung G und/oder der Nichtgebrauchstellung N zu gewährleisten. Dann greifen die Formschlusselemente 28, 33 beispielsweise in der Fixierstellung F nicht formschlüssig ineinander ein. Insbesondere sind die Formschlusselemente 28, 33 in der Fixierstellung F nicht relativ zueinander verspannt oder verspannbar.

Wenn der Fixierstützkörper 313 ausgehend von der Längsposition L1 der Fixierstützfläche 311 an dem Kupplungsarmträger 30 in einem Sinne von der Lagerbasis 23 weg verstellt ist (Figur 20), nimmt beispielsweise die Fixierstützfläche 311 eine Längsposition L12 ein. In diesem Fall kann der Formschlusskörper 63 nicht mehr in die Formschlussaufnahme 34 eindringen, die Fixierstellung F ist also nicht mehr einstellbar.

Bei der Montage der Anhängekupplung 10 wird also beispielsweise der Fixierstützkörper 313 derart am Kupplungsarmträger 30 montiert, dass die Fixierstützfläche 311 die Längsposition L1 einnimmt. Wenn der Fixierstützkörper 313 in die Aufnahme 314 eingeschraubt ist, wird er dort beispielsweise anhand eines Sicherungsmittels 318 stoffschlüssig fixiert, beispielsweise anhand von Klebstoff oder Schweißmaterial 319.

Alternativ oder ergänzend ist beispielsweise auch eine Prägung 369 zur ortsfesten Fixierung des Fixierstützkörpers 313 bezüglich der Aufnahme 314 möglich, zum Beispiel anhand eines Prägewerkzeugs PW (schematisch dargestellt). Die Prägung 369 kann beispielsweise zwischen die Gewinde 316, 317 oder zumindest in eines der Gewinde 316, 317 eingebracht werden, sodass die Gewinde 316, 317 nicht mehr relativ zueinander verdrehbar sind. Die Prägung 369 bildet ein Sicherungsmittel 368.

Die Widerlagereinrichtung 50 ist an der Lagerbasis 23 bezüglich der Schwenkachse S verschiebefest, jedoch um die Schwenkachse S drehbar oder verschwenkbar gelagert. Anhand des Befestigungskörpers 56 ist der Widerlagerkörper 51, an dem der Stützkörper 40 gehalten ist, unverschieblich bezüglich der Schwenkachse S an der Lagerbasis 23 gehalten.

Die Befestigungseinrichtung 58, mit der der Stützkörper 40 an dem Widerlagerkörper 51 befestigt ist, bildet eine weitere Einstelleinrichtung 320. Mit der Einstelleinrichtung 320 kann nämlich ein Abstand zwischen einerseits den Kanälen 44 und somit den Fixierflächen 312 und andererseits den bezüglich der Lagerbasis 23 ortsfesten Formschlusselementen 28 eingestellt werden.

Idealerweise ist die Fixierfläche 312 an einer Längsposition L2 an der Lagerbasis 23 bezüglich der Schwenkachse S angeordnet.

Anhand der Gewinde 326, 327 ist es möglich, den Stützkörper 40 parallel zu der Schwenkachse S zu verstellen.

Anhand der Einstelleinrichtung 320 können beispielsweise die Kanäle 44 und somit die Fixierflächen 312 näher zu der Lagerbasis 23 hin verstellt werden, sodass die Fixierflächen 312 beispielsweise eine Längsposition L21 einnehmen (Figur 21). Man erkennt, dass bei dieser Einstellung die Formschlusskörper 63 nicht mehr in die Formschlussaufnahme 34 eindringen können, sodass die Fixiereinrichtung 60 die Fixierstellung F nicht einnehmen kann.

Ebenso möglich ist es aber auch, anhand der Einstelleinrichtung 320 eine dazu entgegengesetzte Einstellung der mindestens einen Fixierfläche 312 bezüglich der Schwenkachse S zu realisieren. Beispielsweise könnte bei einer Montage des Stützkörpers 40 an der Lagerbasis 23 der Stützkörper 40 zunächst eine Längsposition bezüglich der Schwenkachse S einnehmen, bei der die Kanäle 44 und somit die Fixierflächen 312 eine Längsposition L22 einnehmen. Anhand der Einstelleinrichtung 320, nämlich durch eine Schraubbetätigung der Gewinde 326, 327, können die Kanäle 44 und somit die Fixierflächen 312 in die Längsposition L2 verstellt werden, um so eine zuverlässige Fixierung der Fixiereinrichtung 60 in der Fixierstellung F zu ermöglichen. Dann greifen beispielsweise die Formschlusselemente 28 und 33 ausreichend ineinander ein und sind vorzugsweise sogar miteinander verspannt.

Wie in Zusammenhang mit Figur 12 bereits erläutert, ist ein Sicherungselement 329, beispielsweise eine Madenschraube, in Eingriff mit den beiden Gewinden 326, 327 bringbar, um die jeweils anhand der Einstelleinrichtung 320 eingestellte Längsposition der Fixierflächen 312 an der Lagerbasis 23 dauerhaft zu sichern. Das Sicherungselement 329 bildet ein Sicherungsmittel 328.

Ohne weiteres ist es aber auch möglich, beispielsweise die Lage eines oder mehrerer der Formschlusselemente 28 und/oder 33 bezüglich der Schwenkachse S einzustellen, beispielsweise anhand der Einstelleinrichtungen 350 und 360.

Die Einstelleinrichtung 350 ist beispielsweise anhand eines Fixierstützkörpers 353 realisiert, der in einer Aufnahme 354 des Kupplungsarmträgers 30 aufgenommen ist. Der Fixierstützkörper 353 ist in der Aufnahme 354 parallel zur Schwenkachse S verstellbar aufgenommen, beispielsweise anhand eines Gewindes 355. Anstelle des Gewindes 355 könnten aber auch Keilflächen oder Klemmflächen vorgesehen sein, anhand derer der Fixierstützkörper 353 in der Aufnahme 354 geklemmt ist. An einer Frontseite des Fixierstützkörpers 353 ist eine Fixierfläche 351 vorgesehen, beispielsweise eine Kugelfläche oder kugelige Fläche, die in der Fixierstellung F an einer ihr gegenüberliegenden, durch das Formschlusselement 28 bereitgestellten Fixierfläche 352 abgestützt ist.

Alternativ oder ergänzend ist es aber auch möglich, eine Position eines Formschlusselements 28 bezüglich Schwenkachse S einzustellen, wofür die Einstelleinrichtung 360 vorgesehen ist. Beispielsweise ist ein Fixierstützkörper 363 in einer Aufnahme 364 der Lagerbasis 23 parallel zur Schwenkachse S verstellbar aufgenommen. Beispielsweise ist ein Gewinde 365 zwischen dem Fixierstützkörper 363 und der Aufnahme 364 vorgesehen, sodass eine Längsposition einer dem Kupplungsarmträger 30 zugewandten Stirnseite des Fixierstützkörpers 363, die eine Fixierfläche 362 bereitstellt, parallel zur Schwenkachse S durch eine Schraubbetätigung des Fixierstützkörpers 363 in der Aufnahme 364 einstellbar ist. An der Fixierfläche 362 ist eine Frontseite oder freie Seite eines gegenüberliegenden Formschlusselements 33 des Kupplungsarmträgers 30 in der Fixierstellung F abgestützt.

Weiterhin können auch radiale Positionen einer jeweiligen Fixierfläche einstellbar sein, beispielsweise anhand der nachfolgend erläuterten Einstelleinrichtungen 330, 340.

Die Einstelleinrichtung 340 umfasst beispielsweise einen Fixierstützkörper 333, der in einer Aufnahme 334 des bereits erläuterten Fixierstützkörpers 313 aufgenommen ist. Der Fixierstützkörper 333 weist beispielsweise an seiner Stirnseite die Fixierfläche 311 auf, bildet also einen Bestandteil der Formschlussaufnahme 34.

An dieser Stelle sei erwähnt, dass die Fixierfläche 311 beispielsweise auch eine Verriegelungsfläche aufweisen oder bilden kann, beispielsweise wenn sie als eine Kugelkalotte ausgestaltet ist. Wenn dann der Formschlusskörper 63 in Eingriff mit der Fixierfläche 311 gelangt, ist der Kupplungsarmträger 30 an der Lagerbasis 23 bezüglich der Schwenkachse S schwenkfest oder drehfest verriegelt oder fixiert.

Die Formschlusselemente 28, 33 bilden in diesem Fall nur eine zusätzliche Drehfixierung oder können auch entfallen.

Insbesondere ist eine Ausgestaltung einer anhand einer Einstelleinrichtung bezüglich des Kupplungsarmträgers oder der Lagerbasis einstellbaren, gleichwohl ortsfest festlegbaren Fixierfläche als Schwenkfixierfläche oder Schwenk-Verriegelungsfläche dann vorteilhaft, wenn der jeweilige Kupplungsarmträger bezüglich der Lagerbasis nur schwenkbar, jedoch nicht verschieblich ist. Beispielweise kann dies dann der Fall sein, wenn der Kupplungsarmträger 30 an der Lagerbasis 23 nur um die Schwenkachse S schwenkbar, jedoch nicht parallel zur Schwenkachse S verschieblich gelagert ist. Aber auch dann, wenn der Kupplungsarmträger 30 bezüglich der Schwenkachse S an der Lagerbasis 23 verschieblich gelagert ist, kann eine derartige Drehverriegelung oder Schwenkverriegelung vorteilhaft zum Einsatz kommen.

Formschlusskörper können bei einer Radialverriegelung wie beim zeichnerisch dargestellten Ausführungsbeispiel nach radial außen bezüglich der Schwenkachse in der Fixierstellung der Fixiereinrichtung verstellt sein oder auch von radial außen aus einer Lösestellung nach radial innen bezüglich der Schwenkachse (nicht dargestellt) in der Fixierstellung verstellt sein.

Anhand der Einstelleinrichtung 330 ist ein Abstand der Fixierfläche 311 relativ zur Schwenkachse S verstellbar. In der Aufnahme 334 ist der Fixierstützkörper 333 quer zur Schwenkachse S, insbesondere radial zur Schwenkachse S verstellbar aufgenommen. Hierfür ist beispielsweise ein nicht näher bezeichnetes Gewinde zwischen der Aufnahme 334 und dem Fixierstützkörper 333 vorgesehen.

Der Fixierstützkörper 313 ist parallel zur Schwenkachse S verschieblich, was bereits erläutert worden ist. Somit ist die Fixierfläche 311 des Fixierstützkörpers 333 sowohl parallel zur Schwenkachse S anhand der Einstelleinrichtung 310 als auch quer zur Schwenkachse S anhand der Einstelleinrichtung 330 verstellbar.

Als ein Ausführungsbeispiel für eine Einstelleinrichtung, die ausschließlich eine Verstellung einer Fixierfläche quer, insbesondere radial zur Schwenkachse S realisiert, dient die Einstelleinrichtung 340. Diese weist beispielsweise einen Fixierstützkörper 343 auf, der in einer Aufnahme 344 des Kupplungsarmträgers, die mit der Formschlussaufnahme 34 kommuniziert, radial zur Schwenkachse S verstellbar aufgenommen ist, beispielsweise anhand eines Gewindes 345 radial zur Schwenkachse S schraubbar ist. An seiner der Formschlussaufnahme 34 zugewandten Stirnseite weist der Fixierstützkörper 343 die Fixierfläche 311 auf, die beispielsweise einen Teil der Spannfläche 34A oder die Spannfläche 34A als Ganzes bilden kann. Beispielhaft sind Radialpositionen R1 und R2 dargestellt, in die die Fixierfläche 311 anhand der Einstelleinrichtung 340 verstellbar ist. Mithin bildet also die Fixierfläche 311 des Fixierstützkörpers 343 einen Bestandteil des Linearantriebs 61, nämlich eine Antriebsfläche, an der sich der Formschlusskörper 63 im Sinne eines Antreibens und/oder Verspannens abstützen kann.

Ohne weiteres könnten auch die Formschlussaufnahmen 28A, 28B und 28C und/oder die Formschlussvorsprünge 33A, 33B und 33C bezüglich der Schwenkachse S an der Lagerbasis 23 bzw. am Kupplungsarmträger 21 anhand einer oder mehrerer Einstelleinrichtungen einstellbar sein.

So kann beispielsweise ein Fixierstützkörper 373 vorgesehen sein, an dem die Formschlussaufnahmen 28A, 28B und 28C angeordnet sind. Der Fixierstützkörper 373 ist in einer Aufnahme 374 der Fahrzeughalterung 20 aufgenommen, beispielsweise in die Aufnahme 374 eingepresst oder in die Aufnahme 374 eingeschraubt, wodurch eine Einstelleinrichtung 370 gebildet ist. Eine Einpresstiefe oder Einschraubtiefe des Fixierstützkörpers 373 in die Aufnahme 374 bestimmt beispielsweise eine Längsposition der Formschlussaufnahmen 28A, 28B und 28C bezüglich der Schwenkachse S. Ohne weiteres kann der Fixierstützkörper 373 in der Aufnahme 374 auch quer zur Schwenkachse S verstellbar aufgenommen sein, beispielsweise verschwenkbar oder um ein vorbestimmtes Maß schräg quer zur Schwenkachse einpressbar sein, sodass auch eine Winkelposition des Fixierstützkörpers 373 und somit der Formschlussaufnahmen 28 bezüglich der Schwenkachse S durch die Einstelleinrichtung 370 einstellbar ist.

Selbstverständlich kann eine ähnliche Maßnahme auch am Kupplungsarmträger 30 realisiert sein, an dem beispielsweise in nicht dargestellter Weise ein Fixierstützkörper die Formschlussvorsprünge 33A, 33B und 33C trägt und in einer Aufnahme des Kupplungsarmträgers 30 parallel zur Schwenkachse S und/oder radial zur Schwenkachse S einstellbar aufgenommen ist.

## Patentansprüche

1. Anhängekupplung für ein Kraftfahrzeug (200), mit einem Kupplungsarm (11) zum Ankuppeln eines Anhängers (300) oder eines Hecklastenträgers, mit einer an dem Kraftfahrzeug (200) befestigbaren oder befestigten Fahrzeughalterung (20), die eine Lagerbasis (23) aufweist, an der ein Kupplungsarmträger (30), an dem der Kupplungsarm (11) angeordnet ist, um mindestens eine Schwenkachse (S) zwischen einer zum Anhängen des Anhängers (300) oder des Hecklastenträgers vorgesehenen Gebrauchsstellung (G) und einer für einen Nichtgebrauch der Anhängekupplung (10) vorgesehenen Nichtgebrauchsstellung (N) schwenkbar gelagert ist, in der der Kupplungsarm (11) vorteilhaft im am Kraftfahrzeug (200) montierten Zustand weniger weit als in der Gebrauchsstellung (G) vor das Kraftfahrzeug (200) vorsteht, wobei die Anhängekupplung (10) eine Fixiereinrichtung (60) zum ortsfesten Fixieren des Kupplungsarms (11) in der Gebrauchsstellung (G) und/oder der Nichtgebrauchsstellung (N) bezüglich der Lagerbasis (23) aufweist, wobei der Kupplungsarm (11) in einer Lösestellung (L) der Fixiereinrichtung (60) bezüglich der Lagerbasis (23) zwischen der Gebrauchsstellung (G) und der Nichtgebrauchsstellung (N) beweglich und einer Fixierstellung (F) der Fixiereinrichtung (60) bezüglich der Lagerbasis (23) ortsfest fixiert ist, wobei die Fixiereinrichtung (60) mindestens eine an der Lagerbasis (23) fest angeordnete Fixierfläche (311, 312) und mindestens eine fest an dem Kupplungsarmträger (30) (30) angeordnete Fixierfläche (311, 312) aufweist, wobei die Fixierflächen (311, 312) in der Fixierstellung (F) der Fixiereinrichtung (60) zur drehfesten Fixierung des Kupplungsarmträgers (30) bezüglich der Lagerbasis (23) mittelbar oder unmittelbar aneinander abgestützt sind, **dadurch gekennzeichnet, dass** sie mindestens eine Einstelleinrichtung (310, 320) zur Einstellung einer Längsposition (L1, L2) und/oder einer Radialposition (R1, R2) mindestens einer der Fixierflächen (311, 312) an dem Kupplungsarmträger (30) oder der Lagerbasis (23) bezüglich der Schwenkachse (S) aufweist.

2. Anhängekupplung nach Anspruch 1, **dadurch gekennzeichnet, dass** die einstellbare Fixierfläche (311, 312) an einem Fixierstützkörper (313) angeordnet ist, dessen Längsposition (L1, L2) parallel zur Schwenkachse (S) und/oder dessen Radialposition (R1, R2) radial bezüglich der Schwenkachse (S) an dem Kupplungsarmträger (30) oder der Lagerbasis (23) anhand der mindestens einen Einstelleinrichtung (310, 320) einstellbar ist.

3. Anhängekupplung nach Anspruch 1 oder 2, **dadurch gekennzeichnet, dass** die mindestens eine Einstelleinrichtung (310, 320) ein Schraubgewinde (315) umfasst.

4. Anhängekupplung nach einem der vorhergehenden Ansprüche, **dadurch gekennzeichnet, dass** die Einstelleinrichtung (310, 320) ein Sicherungsmittel (318, 328) zur Sicherung der eingestellten Relativposition der Fixierfläche (311, 312) bezüglich der Schwenkachse (S) an dem Kupplungsarmträger (30) oder der Lagerbasis (23) umfasst.

5. Anhängekupplung nach Anspruch 4, **dadurch gekennzeichnet, dass** das Sicherungsmittel (318, 328) eine stoffschlüssige Fixierung der Fixierfläche (311, 312), insbesondere eine Verschweißung und/oder eine Verklebung, umfasst und/oder dass das Sicherungsmittel (318, 328) eine kraftschlüssige Fixierung eines die Fixierfläche (311, 312) aufweisenden Fixierstützkörpers (313) an einer den Fixierstützkörper (313) aufnehmenden Aufnahme (314) umfasst.

6. Anhängekupplung nach Anspruch 4 oder 5, **dadurch gekennzeichnet, dass** das Sicherungsmittel (318, 328) eine Umformung, insbesondere eine Prägung (369), einer Partie der Einstelleinrichtung (310, 320), insbesondere eines die Fixierfläche (311, 312) tragenden Körpers, und einer Partie des Kupplungsarmträgers (30) oder der Lagerbasis (23) umfasst, an der die Fixierfläche (311, 312) angeordnet ist, und/oder dass das Sicherungsmittel (318, 328) ein formschlüssiges Sicherungselement, insbesondere eine Schraube oder einen Bolzen, umfasst, wobei das Sicherungselement eine Verstellung der Einstelleinrichtung (310, 320) formschlüssig blockiert.

7. Anhängekupplung nach einem der vorhergehenden Ansprüche, **dadurch gekennzeichnet, dass** mindestens eine Fixierfläche (311, 312) eine Schrägfläche und/oder eine Muldenfläche und/oder eine Kugelkalotte ist oder umfasst und/oder dass die Fixierflächen (311, 312) winkelig oder schräg zueinander und/oder zu der Schwenkachse (S) orientiert sind und/oder dass mindestens eine Fixierfläche (311, 312) eine Spannfläche bildet und/oder die Fixiereinrichtung zu einem Verspannen des Kupplungsarm Lagerkörpers bezüglich der Lagerbasis (23) ausgestaltet und/vorgesehen ist.

8. Anhängekupplung nach einem der vorhergehenden Ansprüche, **dadurch gekennzeichnet, dass** die Fixiereinrichtung (60) mindestens einen Formschlusskörper (63) umfasst, wobei der mindestens eine Formschlusskörper (63) in der Fixierstellung (F) der Fixiereinrichtung (60) in Eingriff mit den Fixierflächen (311, 312) ist und an dem die Fixierflächen (311, 312) abgestützt sind.

9. Anhängekupplung nach Anspruch 8, **dadurch gekennzeichnet, dass** mindestens eine Fixierfläche (311, 312) an einer Formschlusskörper-Führung (44A), insbesondere einem Kanal, für den mindestens einen Formschlusskörper (63) angeordnet ist, an welcher der mindestens eine Formschlusskörper (63) zwischen einer der Fixierstellung (F) der Fixiereinrichtung (60) zugeordneten Stellung und einer der Lösestellung zugeordneten Stellung geführt ist, und/oder dass der mindestens eine Formschlusskörper (63) eine Kugel und/oder eine Rolle und/oder einen Gleitkörper umfasst oder dadurch gebildet ist und/oder dass der mindestens eine Formschlusskörper (63) durch einen Fixierbetätigungskörper (62) betätigbar ist, der längsverschieblich und/oder drehbar, in einer Führungsaufnahme (42F) eines Führungskörpers (42A) aufgenommen ist, wobei vorteilhaft vorgesehen ist, dass der Führungskörper (42A) in mindestens zwei Relativpositionen bezüglich der Schwenkachse (S), insbesondere mindestens zwei Längspositionen parallel zur Schwenkachse (S), an der Lagerbasis (23) anhand der mindestens einen Einstelleinrichtung (320) fixierbar ist.

10. Anhängekupplung nach einem der vorhergehenden Ansprüche, **dadurch gekennzeichnet, dass** mindestens eine Fixierfläche (311, 312) eine Verriegelungsfläche zum Verriegeln des Kupplungsarmträgers (30) bezüglich der Lagerbasis (23) um die Schwenkachse (S) bildet oder aufweist und/oder dass mindestens eine Fixierfläche (311, 312) an einem an der Lagerbasis (23) angeordneten, insbesondere als Wellenkörper oder Hohlwelle ausgestalteten, Stützkörper (40) angeordnet ist, der den Kupplungsarmträger (30) bezüglich der Lagerbasis (23) um die Schwenkachse (S) drehbar lagert, wobei der Stützkörper (40) an der Lagerbasis (23) um die Schwenkachse (S) drehbar gelagert ist und/oder an dem der Kupplungsarmträger (30) um die Schwenkachse (S) drehbar gelagert ist.

11. Anhängekupplung nach einem der vorhergehenden Ansprüche, **dadurch gekennzeichnet, dass** der Kupplungsarmträger (30) bezüglich der Lagerbasis (23) entlang der mindestens einen Schwenkachse (S) zwischen der Fixierstellung (F) und der Lösestellung (L) verschieblich gelagert ist und an dem Kupplungsarmträger (30) und an der Lagerbasis (23) angeordnete Formschlusselemente (28, 33) in der Fixierstellung (F) in bezüglich der mindestens einen Schwenkachse (S) drehfestem Eingriff und in der Lösestellung (L) außer Eingriff sind, wobei vorteilhaft vorgesehen ist, dass mindestens eines der Formschlusselemente (28, 33) eine der Fixierflächen (311, 312) aufweist, deren Relativposition bezüglich der Schwenkachse (S) anhand der mindestens einen Einstelleinrichtung (310, 320) einstellbar ist.

12. Anhängekupplung nach einem der vorhergehenden Ansprüche, **dadurch gekennzeichnet, dass** der Kupplungsarmträger (30) an einem zu einer Armseite (26) vor die Lagerbasis (23) vorstehenden Stützkörper (40) entlang der Schwenkachse (S) verschieblich und/oder um die Schwenkachse (S) schwenkbar gelagert ist.

13. Anhängekupplung nach Anspruch 12, **dadurch gekennzeichnet, dass** an dem Stützkörper (40) mindestens eine Fixierfläche (311, 312) ortsfest angeordnet ist, wobei die Fixierfläche (311, 312) insbesondere einen Bestandteil einer Formschlusskörper-Führung (44A), insbesondere eines Kanals, zur Führung eines an der Fixierfläche (311, 312) abgestützten Formschlusskörpers (63) bildet, und/oder dass der Stützkörper (40) an der Lagerbasis (23) anhand der mindestens einen Einstelleinrichtung (310, 320) in mindestens zwei Längspositionen (L1, L2) bezüglich der Schwenkachse (S) zur Einstellung der Längsposition (L1, L2) mindestens einer Fixierfläche (311, 312) bezüglich der Schwenkachse (S) unverschieblich oder verschiebefest fixierbar ist und/oder dass der Stützkörper (40) an einer Widerlagereinrichtung (50) anhand einer eine Einstelleinrichtung (310, 320) bildenden Befestigungseinrichtung (58) befestigt ist, wobei der Stützkörper (40) an der Widerlagereinrichtung (50) anhand der Befestigungseinrichtung (58) in mindestens zwei Längspositionen (L1, L2) bezüglich der Schwenkachse (S) befestigbar ist, wobei die Widerlagereinrichtung (50) eine dem Kupplungsarmträger (30) bezüglich der mindestens einen Schwenkachse (S) gegenüberliegende Widerlagerfläche (55) aufweist und die Lagerbasis (23) in der Fixierstellung (F) zwischen die Widerlagerfläche (55) und den Kupplungsarmträger (30) geklemmt ist, wobei die Widerlagereinrichtung (50) mindestens eine von der Widerlagerfläche (55) verschiedene Lagerfläche (53, 57) aufweist, mit der die Widerlagereinrichtung (50) an der Lagerbasis (23) beweglich gelagert ist.

14. Anhängekupplung nach einem der vorhergehenden Ansprüche, **dadurch gekennzeichnet, dass** sie ein Verstellgetriebe, insbesondere ein Lineargetriebe, und/oder einen Verstellantrieb (61) zur Verstellung des Kupplungsarmträgers (30) bezüglich der Lagerbasis (23), insbesondere parallel zu der Schwenkachse (S), aufweist, wobei vorteilhaft vorgesehen ist, dass mindestens eine der anhand der mindestens einen Einstelleinrichtungen (310, 320) einstellbaren Fixierfläche (311, 312) eine Antriebsfläche des Verstellgetriebes oder des Verstellantriebs (61) bildet.

15. Anhängekupplung nach einem der vorhergehenden Ansprüche, **dadurch gekennzeichnet, dass** die Fixiereinrichtung (60), insbesondere der oder ein Fixierbetätigungskörper (62) der Fixiereinrichtung (60), durch eine Federanordnung (67) in Richtung der Fixierstellung (F) belastet ist.
